Europäisches Patentamt

European Patent Office

Office européen des brevets

(19)

(11) EP 1 548 998 A1

(12) EUROPEAN PATENT APPLICATION
published in accordance with Art. 158(3) EPC

(43) Date of publication:
29.06.2005 Bulletin 2005/26

(51) Int Cl.⁷: H04L 12/56, G06F 17/30

(21) Application number: 03748699.0

(86) International application number:
PCT/JP2003/012700

(22) Date of filing: 03.10.2003

(87) International publication number:
WO 2004/032435 (15.04.2004 Gazette 2004/16)

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 03.10.2002 JP 2002291708

(71) Applicant: IN4S INC.
Chuo-ku, Tokyo 103-0007 (JP)

(72) Inventors:
• SATO, Tetsuro
  Tama-shi, Tokyo 206-0034 (JP)
• KAWAGUCHI, Fuminori
  Nerima-ku, Tokyo 177-0044 (JP)

(74) Representative: Stebbing, Timothy Charles
Haseltine Lake & Co.,
Imperial House,
15-19 Kingsway
London WC2B 6UD (GB)

(54) **BIT STRING CHECK METHOD AND DEVICE**

(57) In a bit string check method, a bit string to be searched is divided into a plurality of partial-object bit strings, which are compared to the plurality of registration bit patterns at multiple stages. At a current stage which is one of the multiple check stages, comparison is made with all the possible values of a partial-object bit string in accordance with the comparison result and the pattern table where a plural registration bit pattern is registered, it is possible to obtain a judgment result indicating a presence or absence of a partial registration bit pattern which matches at least the partial-object bit string. According to the judgment result, check-continuation information including the address of the pattern table of the stage subsequent to the current stage is outputted.

FIG.18

EP 1 548 998 A1

**Description**

**Technical Field**

The present invention relates to a device and method suitable for searching or checking a bit string such as an IP address.

**Background Art**

Various protocols are used when transmitting and receiving data through a computer network such as the Internet or the like. One of them is a protocol in a network layer of the Internet, which is referred to as, Internet protocol (IP). The IP enables information to be divided into packets and transmitted to a predetermined destination, wherein each packet is composed of an IP header, which is used for transmitting and receiving information, attached to a payload having information stored therein. Each of the packets is delivered along a proper route on the bases of the information of the IP header, and is set up in the destination so that the information of the payload becomes in a state at transmission source on the bases of the information of the IP header.

The information of the IP header is referred to by a device for managing a network such as a router and a firewall, and by software (a program or a program product), and is checked for various purposes such as routing, packet filtering, SPD (security policy database), policy routing, QoS, etc. As such, the information of the IP header is always referred to and used for sending and receiving or transmitting packets.

In the future, when a mobile IP is realized, a routing table will be changed dynamically. While a destination address (DIP) and a source address (SIP) are 32 bits in the current IPv4 (version 4), they are extended to 128 bits in the IPv6 (version 6). Therefore, when data exchange is carried out using a computer network such as the Internet, further improvement in the speed with which IP addresses are searched will become increasingly important in the future.

For example, Japanese Patent Publication No. 11-88427 A discloses a technique of searching a corresponding IP address by comparing it with IP addresses on a routing table having a plurality of sorted entries. Searching a bit string including a plurality of IP addresses of 128 bits for routing or other purposes using such a technique is extremely time consuming, and at the very least, the technique will not be suitable in future for use in information transmission path.

The quantity of information in a form of bit string (bit stream or bit pattern), not limited to an IP address, to be searched tends to increase. When optical communication systems swing into full gear, a function capable of searching bit strings of a gigabit class will be required. Several methods have been proposed of searching bit strings of high-volume data.

Firstly, software-based methods are sufficient in terms of the search function, but are insufficient from the viewpoint of speed. In hardware-based methods, there is a CAM (Content-Addressable Memory) method. It is realistic to carry out a longest match lookup by repetitive searching utilizing one CAM or carry out a longest match lookup utilizing a plurality of CAMs in parallel. However, it is very difficult to realize a match lookup within a multidimensional scope required in packet filtering or stateful packet inspection, e.g., within a scope including a source IP, destination IP, source port, destination port, and protocol.

Further, in the case where IP routing is executed using longest match lookup, to cope with a variable prefix length in CIDR (Classless Inter-Domain Routing), the number of iterations may be increased, or a longest match lookup may be executed by a plurality of CAMs in parallel. In the former method, the performance is lacking from the viewpoint of throughput or latency. In the latter method, CAM entry utilization is poor due to variation in the distribution of path entries.

To cope with an increase in the number of registered entries, there is no choice but to perform a cascade connection of a plurality of CAM chips. To cope with an increase in bit length of a retrieved key, there is no choice but to change the specification of a chip, and it is necessary to increase in bits of the CAM memory for all the entries. To cope with using a multi-chip configuration, since a plurality of entries are checked in parallel in the CAM, a check state of each entry has to be inherited among chips in order to perform associated checking among a plurality of chips. Thus this is not realistic in consideration of the large number of entries required for the CAM.

There is also a method of partially utilizing a CAM. For example, there is a method in which the number of entries to be retrieved is decreased by the CAM, and then a Patricia tree or the like is retrieved by software. Since this method utilizes software for tree retrieval, it suffers from some of the same problems as a fully software-based implementation. Further, even in the case where the tree retrieval part is converted to hardware, if the tree structure is a Patricia type, the registration and/or deletion of entries is accompanied by a complicated reconfiguration of the tree, and higher order application software have to be burdened with an excessive table management cost.

There is a ternary CAM (TCAM) method which enables masking and hierarchical retrieval. In this case, the search function provided by hardware includes a complete match (CAM) and a longest match. The TCAM theoretically does a complete match which regards a DC (Don't Care) bit as a coincident bit, and outputs a plurality of match entries from a checking section. Thus, if there is no priority encoder, which relates to something such as a prefix length or an entry number, in a succeeding stage from the checking section, it is impossible to narrow down by finding a longest match from a plurality of hits.

Accordingly, in the TCAM, the management of the register and/or deletion of entry become complicated. Particularly, in the case of a TCAM in which priority is based on entry number, when an entry is added, the rearrangement of existing entries has to be executed voluntarily by a higher order application software side. This rearrangement of existing entries is conducted by sorting using a prefix length as a key, and requires a plurality of entry position swaps. Since only prefix length is at issue, costs are lower than those of sorting in common use, but the sorting itself cannot be excluded. That is, although the TCAM realizes a scope match, this is enabled by higher order application software implementing an entry management. Hence, in order to realize, a scope representation have to be resolved into a plurality of longest match representations. Therefore, the rule management (deletion and registration) of scope match becomes complex. Eventually, even if a scope match in a TCAM is practicable in terms of searching executed with static entries, it has a substantially high load on the higher order application software in terms of searching executed with dynamically changing entries. Alternatively, a dedicated co-processor performing the complicated management of these tables has to be prepared in addition to the TCAM.

From the above-described points of view, for searching having properties of dynamically adding entries to be registered and deleting registered entries in a longest match as well as a scope match, the TCAM is not appropriate. Like the CAM, in order to cope with an increase in the number of entries to be registered, there is no choice but to perform cascade connection of a plurality of TCAM chips. To cope with an increase in bit length of a retrieved key, there is no choice but to change the specification of a chip, and it is necessary to increase in TCAM memory bits of all the entries. To cope with by the multichip configuration, since a plurality of entries are checked in parallel in the TCAM, a check state of each entry has to be inherited among chips in order to perform associated checking among a plurality of chips. Thus, this is not realistic in consideration of the large number of entries required for the TCAM.

Accordingly, one object of the present invention is to provide a bit string check method and device which can serve a search function such as a scope match, complete match and longest match and in which load on a higher order application software is light even in packet filtering or stateful packet inspection. Another object of the present invention is to provide a bit string check method and device capable of reducing or eliminating overhead, which is generated by an entry shift accompanying an addition or deletion of an entry, in table management by a higher order application.

Still another object of the present invention is to provide a bit string check method and device which can employ an ordinary DRAM (or SRAM) such as an SDRAM as a memory, realize a large capacity and a far lower cost than a dedicated memory of a CAM-family, with a sufficient searching speed. Such a check device exhibits high scalability since the number of acceptable entries is defined only by an SDRAM capacity. Further, the check device can flexibly perform memory management, thus it can flexibly perform a plurality of search types using a single hardware set.

Still another object of the present invention is to provide a bit string check method and device wherein an increase in the length of a bit string (key) to be searched can be coped with by adding a unit or repeating a series of processes without the need for an algorithmic change of hardware.

**DISCLOSURE OF THE INVENTION**

In a bit string check method of the present invention, there is employed a method including the process of dividing a bit string to be searched into a plurality of partial-object bit strings (partial bit string to be searched), and comparing at respective stages with a plurality of bit patterns registered in advance. A current stage which is one of the check stages included in the multiple stages comprises: an all-check step of selecting a partial-object bit string of the current stage from the bit string to be searched and comparing it with all possible values of a partial-object bit string of the current stage; and a pattern loading step of loading a pattern table of the current stage from a memory before, after or in parallel with the all-check step, the pattern table being for indicating a partial registration bit pattern of each of the plurality of registration bit patterns, the pattern table being determined by check-continuation information received from a stage preceding the current stage. The pattern table of the current stage represents partial registration bit patterns to be compared with the partial-object bit string of the current stage.

The current stage further comprises a judgment step of obtaining a check result indicating at least a presence or absence of the partial registration bit pattern of the current stage which matches the partial-object bit string of the current stage in accordance with the result of the all-check step and the pattern table of the current stage; and an outputting step of outputting check-continuation information including the address of a pattern table of the stage subsequent to the current stage from an address table corresponding to the pattern table of the current stage in accordance with the check result.

The address table represents the address of the pattern tables of the next stage subsequent to respective partial registration bit patterns on the pattern table of the current stage. Thus, from the address table, it is possible to output check-continuation information including the address of the pattern table of the next stage indicating a partial registration bit pattern to be checked in the next stage, subsequent to the matched partial registration bit pattern in the current stage.

As a check device for realizing the above check method, in the present invention, there is provided a check device for executing at lease one stage included in multiple stages so as to check against a plurality of bit patterns registered in advance at the multiple stages with dividing a bit string to be searched into a plurality of partial-object bit strings. The check device comprises all-check means for selecting a partial-object bit string of the current stage from the bit string to be searched and for comparing the partial-object bit string of the current stage with all possible values of a partial-object bit string of the current stage; pattern loading means for loading a pattern table of the current stage from a memory, the pattern table being for indicating a partial registration bit pattern of each of the plurality of registration bit patterns, the pattern table being determined by check-continuation information received from a stage preceding the current stage; judgment means for obtaining a check result indicating at least a presence or absence of the partial registration bit pattern of the current stage which matches the partial-object bit string of the current stage in accordance with the result of the all-check means and the pattern table of the current stage; and outputting means for outputting check-continuation information including the address of a pattern table of the stage subsequent to the current stage from an address table corresponding to the pattern table of the current stage in accordance with the check result.

These check method and check device provide a search function of complete match and longest match by outputting check-continuation information including the address of the pattern table of the next stage subsequent to the matched partial registration bit pattern in the current stage. In addition, in the judgment step and judgment means, when a check result including a presence or absence of the maximum or minimum partial registration bit pattern closest to the value of the partial-object bit string is obtained, the outputting step and output means can output check-continuation information including the address of the pattern table of the next stage subsequent to the maximum or minimum partial registration bit pattern of the current stage from the address table when no matched partial registration bit pattern is present. Thus, it is possible to provide a check method and a check device including a scope match as the search function.

Here, the maximum partial registration bit pattern closest to the value of the partial-object bit string means a partial registration bit pattern that has the largest value of partial registration bit patterns smaller than the partial-object bit string. On the other hand, the minimum partial registration bit pattern closest to the value of the partial-object bit string means a partial registration bit pattern that has the smallest value of partial registration bit patterns larger than the partial-object bit string. In accordance with the selection of the address of the pattern table subsequent to the maximum partial registration bit pattern, a right-inclined scope search to be described later is enabled. Further, in accordance with the selection of the address of the pattern table subsequent to the minimum partial registration bit pattern, a left-inclined scope search to be described later is enabled. Hence, in the searching of the right-inclined type, the maximum side to be described later is selected, and in the searching of the left-inclined type, the minimum side to be described later is selected.

Further, in the check method and check device of the present invention, at one stage (current stage) of the multiple check stages, comparison is made with all the possible values of a partial-object bit string by the all-check step and all-check means. A complete match or a scope match is lead from the check result and the pattern table of the current stage indicating the partial registration bit pattern (hereinafter, also referred to as an 'entry') of the current stage, to be object compared with the partial registration bit pattern of the current stage.

The pattern table does not need to be a bit string of a partial entry, but, from the viewpoint of data amount, is preferably data representing the value of the partial entry directly or using a bit pattern or a flag in a form corresponding to the partial entry. The present invention comprises the all-check step or all-check means for comparing all the possible values of a partial-object bit string. Hence, when executing the all-check, within the values to be compared, the pattern table can be given as mask data consisting of a bit flag indicating a validness or invalidness of the partial registration bit pattern. That is, in the all-check, since the range of the possible values of a partial-object bit string is fixed in advance, it is possible to store the pattern table in the memory as such mask data and to load it from the memory. Hence, in the pattern loading step and means, the mask data is loaded from a memory.

Further, in this check method and device, as a comparison is made between all the possible values of a partial-object bit string, an amount or area capable of covering all the possible values of a partial-object bit string is secured in advance as the amount or area of the pattern table. Hence, when an entry is added, this is enabled simply by updating a mask pattern, and an entry shift caused by the addition and deletion of an entry does not occur. For this reason, the overhead of table management using a higher order application can be reduced or eliminated. Therefore, it is possible to provide a bit string check method and device which reduces a load on higher order application software even in packet filtering or stateful packet inspection.

Especially, in the case of the mask data, since it is possible to represent one entry by one bit, the storage capacity of the pattern table is reduced to a large extent, and the pattern table loading time is reduced. Further, even in updating, the number of bits to be rewritten in the process of addition and deletion of an entry is reduced to a large extent, the processing is simplified, and the processing time is also reduced. Therefore, it is effective to make the pattern table into mask data.

The process (all-check step and means) of performing comparison with all the possible values of a partial-object bit string is executable rapidly by hardware utilizing a comparator or lookup table, and the scale of hardware does not also increase by dividing the process into multiple stages. Although the bit length of the partial-object bit string is not limited, the hardware becomes larger if the bit length is increased, and the number of stages of checking is increased if the bit length is decreased. The appropriate scale of hardware changes in dependence on the purpose which the hardware will serve, the hardware's economic value, realizable wiring rules, etc. Currently, it is considered to be preferable that the bit length of the partial-object bit string is about 4 or 5 bits. In addition, it is unnecessary to change hardware algorithmically with an increase in bit length of a retrieved bit string (hereinafter, also referring to as a key) to be searched, and the above increase can be coped with by adding a unit or repeating a series of processes.

The check method and check device of the present invention have a remarkable effect in that they can be sped up by simple configuration. Firstly, the all-check step and the pattern loading step can be executed in parallel, and the overhead time, generated from the division into multiple stages, of loading the pattern table from a memory can be reduced to a large extent. Thus, it is possible to provide a check method and device which, without employing a memory of a high speed of a specific structure, exhibit a sufficiently high searching speed, are cheap and implement large capacity searching at a high speed. Such a check device exhibits high scalability and can perform memory management flexibly since the number of acceptable entries is limited only by the SDRAM capacity. Hence, a plurality of search types can be performed flexibly using a single hardware set.

By installing a cache device for inputting and outputting data to and from memory, the overhead time for loading a pattern table can be further reduced. To improve the efficiency of a cache memory and reduce the mishit ratio, it is preferable that the cash memory includes a pattern table, especially, mask data and an address table, and the size of a checking table which is a storage unit on a memory is the same as the size of a cache line.

By the way, in a scope match searching, at a current stage, when there exist a matched partial registration bit pattern and the maximum or minimum partial registration bit pattern, it is preferable to memorize or output the address of a pattern table (the pattern table of a scope search) of the next stage subsequent to the maximum or minimum partial registration bit pattern as a candidate address. At the current stage with a check continuation (at the next check stage for a check stage memorizing a candidate address), when a matched partial registration bit pattern in not present and further the maximum and minimum partial registration bit pattern is not present, a backtrack, there occurs tracking back up to the stage where the maximum or minimum partial registration bit pattern is generated. At this time, if the candidate address has been memorized, at the outputting step of the current stage of a check-continuation, it is possible to reach the stage to be continued of checking with outputting check-continuation information including the candidate address in a preceding stage to backtrack in the shortest processing time.

In the scope match searching, when check-continuation information is given which includes the address of the pattern table (pattern table of scope search) of the current stage subsequent to the maximum or minimum partial registration bit pattern, it is possible to reach a registration bit pattern (the maximum registration bit pattern) that has a value smaller than the searching object bit string and has the largest value, or a registration bit pattern (the minimum registration bit pattern) that has a value larger than the searching object bit string and has the smallest value, by tracking the address of the pattern table of the next stage subsequent to the maximum or minimum partial registration bit pattern shown on the pattern table of the current stage. Hence, in that state, that is, at the current stage at which the pattern table of scope match search is obtained, all-check step and judgment step can be bypassed. Then, in the outputting step and output means, the pattern table of scope match search is used as the pattern table of the current stage, and it is only required to repeat the process of outputting check-continuation information including the address of the pattern table of the next stage subsequent to the maximum or minimum (maximum or minimum in the pattern table) partial registration bit pattern.

In such a way, in the process of reaching the maximum or minimum registration bit pattern through tracking the maximum or minimum of the pattern table of every stage, the reached registration bit pattern is the same if the pattern table is determined not so far as registration or deletion of an entry occurs. Hence, it is preferable to memorize bypass data indicating the maximum or minimum registration bit pattern in a memory along with the pattern table, the maximum or minimum registration bit pattern being determined in correspondence with the maximum or minimum partial registration bit pattern shown on the pattern table. When check-continuation information is given which includes the address of the scope search pattern table subsequent to the maximum or minimum partial registration bit pattern, the all-check step, pattern loading step and judgment step are bypassed, and in the outputting step and output means, final check information including the bypass data corresponding to the pattern table of scope search can be outputted and the checking of the bit string to be searched can be finished. Hence, the step of tracking pattern tables of the middle stages can be omitted.

Especially, when the above-stated backtrack has occurred, the subsequent step is finished by the step of outputting bypass data corresponding to the pattern table indicated at a candidate address, and thus almost no penalty caused by backtracking occurs.

The check method and check device of the present invention, In addition, do not require an algorithmic change of hardware for an increase in bit length of a bit string to be searched, and this increase can be coped with by adding a check unit, that is, a check device capable of executing one of multiple stages or a plurality of stages, or repeating a series of processes of the current stage described above. Therefore, in the present invention, a classification method having a classification step executing a plurality of checking stages in series and/or in parallel can be designed very flexibly in accordance with conditions such as a purpose of searching, a bit string type to be searched, a registration bit pattern type. Likewise, a classification device combining a plurality of check devices in series and/or in parallel can be designed very flexibly in accordance with a purpose.

In these classification steps or classification devices, a substantial reduction in search time can be realized by coupling a plurality of checking stages or checking devices in a pipeline, and also in this respect, it is easy to accelerate the search process. That is, among a plurality of check stages or check devices, it is possible to execute a search process by a data flow type processing with packetizing and transferring data including check-continuation information.

In addition, in the check method and check device of the present invention, when adding or deleting a registration bit pattern, it is possible to add or delete a registration bit pattern only by updating a pattern table and an address table without moving entries. Hence, by providing updating means for executing such an updating step, it is possible to execute the addition and deletion of an entry with flowing update data from upstream side to downstream side as a packet. Hence, the process (updating process) of updating a check table of each of the check stages executed in a pipeline can be executed in parallel with the check stage in the pipeline. In other words, the present invention includes the updating process of adding or deleting a registration bit pattern by updating the check table (including a pattern table and an address table) of each of the check stages, and this updating process can be executed in a pipeline in parallel with the check stage.

In the case where the check table includes bypass data indicating the maximum or minimum registration bit pattern determined in correspondence with the maximum or minimum partial registration bit pattern shown on the pattern table, there is a case where the bypass data can not be determined if the check table of a lower order check stage is not updated, Therefore, in the updating process, when updating the check table of a lower order check stage from the check table of an upper check stage, the updating of the check table of a check stage in which there is a possibility to update bypass data may adopt a quenching method updating after waiting for the updating of the check table of a lower order check stage. Further, in the updating process, it is possible to adopt a bidirectional link method comprising: a step of updating a check table of a lower order check stage from a check table of an upper order check stage; and a step of performing the updating of the higher order check table with using a bidirectional link when the updating of bypass data of the higher order check table by the updating of the lower order check table has occurred.

Searching can be executed by utilizing a check method of multiple stages by a classification device with a plurality of check devices. Although a check device is for executing one or a plurality of check stages, the classification method utilizing a classification process coupling a plurality of check devices (check stages) each performing one check stage in a pipeline and a classification device provided with a classification process enable easy management and control of each check stage, and are one of the preferable embodiments of the present invention. In the case where there is a need to search plural types of bit strings, one classification device having a plurality of check devices can execute a plural types of searching in order. It is more useful to provide a classification method having a plurality of classification processes and a searching device provided with a plurality of classification devices. It is also possible to execute classification processing in parallel by a plurality of classification processes and classification devices. It is also possible to execute checking with a single bit string to be searched configured by connecting a plurality of types of bit strings to be searched. However, as the data length of a bit string to be searched increases, the number of pattern tables in the downstream is likely to be considerably larger.

In the case where a registration bit pattern represents one or a plurality of classification results (rules), if a scope to which a bit string to be searched belongs is determined by the scope search, the classification result of the bit string to be searched is determined. In the classification method with a plurality of classification processes, a plurality of classification results are obtained. Hence, there is a need to perform a logical AND of the plurality of classification results and to provide a logical operation process which acquires the final classification result. In this logical operation process and logical operation means, the logical AND of the plurality of classification results is performed by matrix operation, thereby the final classification result is obtained. By such a logical operation process and means, processing speed can be improved, thereby simplifying configuration. The searching device provided with a plurality of classification devices has also the same advantage.

One of the classification devices considered to be most effective to improve the processing speed is a cache device for inputting and outputting data from and to a memory. It is preferable that the size of a pattern table, especially, a check table including mask data and an address table is same as the size of a cache line. Further, in a classification device for executing different types of searching, it is preferable to provide means for receiving search type information designating the first check table. Preferably, the cache device is provided with a management means for allocating the cache line in a unit of each of types to be searched and the check device, and managing the cache line in a unit of each of types to be searched and the check device. It is also possible that the check table is stored in an individual address range allocated in a unit of each search type and each check stage, in the memory and a cache line of the cache device is allocated in a unit of the individual address range.

In the searching of bit strings, it is often the case where bit strings are provided that are entirely the same or whose higher order bits are the same. For this reason, to offer a high cache hit ratio and to improve the searching or checking processing speed, it is more effective to employ a cache device which preserves the past reference table in a unit obtained by dividing in accordance with search type and stage, rather than a cache system, which expects the locality of data on a memory, in the conventional cash system for a CPU.

Further, as the cache device, a request/reply type data cache is also effective wherein when the check table is not an on-cache, the cache device informs this to the check device, stops the process of the check device and returns to a queue. It is possible to prevent the delay of the processing wherein when the check table is not on-cache, the check device, data cache and memory being occupied by the access. In the case where the check devices are coupled in a pipeline, if one stage is delayed, that delay affects the subsequent stage. Further, since there is no need to ensure the order of input and output by adding identification information to a bit string to be searched, queuing does not affect check processing. The method of adding identification information to the bit string to be searched and checking the same is also effective when backtracking occurs in a scope match searching.

It frequently occurs that the same bit strings to be searched are provided. Therefore, it is effective to provide a history cache device storing the classification results of the classification device. The searching or checking processing speed can be improved by providing a history cache comparing the classification result of the corresponding classification device with the bit string to be searched before providing the bit string to be searched to the check device.

The present invention, which can process the searching or checking of a bit string at a high speed, is useful for any processing, application, device and system dealing with digital data. Though the application scope of the present invention is not limited, a variety of applications can be considered, including searching a specific bit string from a bit stream indicating image data such as MPEG data or searching for a specific condition in high volume character data. It is also effective in the fields of data managing devices to be used for high-speed computer networks being required. For example, it is possible to provide a data managing device or management method capable of a high speed routing provided with the function of sending out packets to a specific route by checking or searching of the classification device or searching device. Further, it is possible to provide a data managing device capable of executing a scope search such as a packet filtering SPD and a QoS required for a router or a server or the like, at a high-speed. In addition, the present invention is also effective in a application that reconfigure the fragmented data blocks whose header addresses and tail addresses match one other as well as have an anteroposterior relation and inclusion relation, as a reassembly of TCP packets.

Further, the check method and check device of the present invention are also effective to the field of data mining for finding a useful rule or pattern at a high speed from a large scale database. Moreover, there is no need to restrict the searching utilizing the check method and device of the present invention to one-way transition of a tree. This is a microscopic point of view, and from the microscopic viewpoint, methods and devices of searching a transition destination of bidirectional network are also included in the present invention. One of them is a state transition machine, which is a finite state automaton. Hence, it is possible to provide a control method of a data processing device comprising a step of checking by the checking method of he present invention with regarding data forming an evaluation source of a state transition as the bit string to be searched, and with regarding data indicating a plurality of state transition conditions as the plurality of registration bit patterns; and a step of transiting states of a data processing circuit in accordance with a check result of the check step.

According to the present invention, it is possible to provide a data processing device, comprising: a check device for checking a bit string to be searched of a current state forming an evaluation source of a state transition against a registration bit pattern indicating a plurality of state transition conditions registered in advance; search object provision means for providing the bit string to be searched to the check device; and a data processing circuit whose state is transited in accordance with an output of the check device. This data processing device is a transition state machine or an automaton processor, which can be also called a classification processor. In this case, the check device comprises: all-check means for comparing all possible values of a bit string to be searched in a current stage; pattern loading means for loading a pattern table of the current state from a memory, the pattern table being for indicating the plurality of registration bit pattern, the pattern table being determined by check-continuation information obtained from a preceding stage; judgment means for outputting a check result indicating at least a presence or absence of the registration bit pattern of the current state which matches the bit string to be searched of the current state in accordance with the result of the all-check means and the pattern table of the current state of the all-check means; and outputting means for outputting check-continuation information including the address of the pattern table of the next state subsequent to the current state in accordance with the check result.

In determining one state transition, a design using a plurality of check devices is possible, and in this case, the classification device of the present invention is used for searching a transition destination. It is possible to change an internal state to be checked, i.e., a state transition condition in accordance with an external condition or internal condition, and the check table provided to the check devices may be designated by a searching object provision means. The check table of the memory may be rewritten by the data processing circuit. If the state transition (automaton) processor of the present invention is used for searching of QoS and the like, it is possible to realize an architecture in which the searching of QoS and the addressing as a processor are integrated.

**BRIEF DESCRIPTION OF THE DRAWINGS**

FIG. 1 is a schematic view of a router as an example of a management device;
FIGS. 2(a) to 2(f) are illustrations of respective check states of a match search;
FIG. 3 is an illustration of check states on a binary bit tree;
FIGS. 4(a) to 4(f) are illustrations of respective approximations of a right-inclined match type;
FIGS. 5(a) to 5(f) are illustrations of respective approximations of a left-inclined match type;
FIG. 6 is an illustration of a binary bit tree when divided into tables;
FIGS. 7(a) to 7(c) are illustrations of check tables (partial tables);
FIGS. 8(a) and 8(b) are illustrations of a MIN/MAX search;
FIGS. 9(a) and 9(b) are illustrations of the MIN/MAX search executed by partial tables;
FIG. 10 is an illustration of the MIN/MAX search executed by a compression table;
FIGS. 11(a) and 11(b) are illustrations of bypass processing;
FIG. 12 is an illustration of a backtrack occurring in a checking process;
FIG. 13 is an illustration of a bypass processing executed after the occurrence of the backtrack;
FIG. 14 is a schematic diagram showing a search device;
FIG. 15 is a diagram showing a shared memory type classification device;
FIG. 16 is a diagram showing a memory separation type classification device;
FIG. 17 is a diagram showing a repetitive type classification device;
FIG. 18 is a schematic diagram of a check device;
FIG. 19 is a flow chart showing a process of the check device;
FIG. 20 is an illustration of the progress of a processing in the check device;
FIG. 21 is a diagram showing a comparison unit;
FIG. 22 is a table showing logic of a comparator;
FIG. 23 is a diagram showing another example of the comparison unit;
FIG. 24 is a diagram showing a masking device;
FIG. 25 is a table showing logic of the masking device;
FIG. 26 is a table showing a matching logic of a selection circuit;
FIGS. 27(a) to 27(c) are tables showing the logic of a (right-inclined) scope search of the selection circuit;
FIGS. 28(a) to 28(c) are tables showing the logic of a (left-inclined) scope search of the selection circuit;
FIGS. 29(a) to 29(g) are illustrations of the (right-inclined) output of the comparison unit, masking device and selection circuit;
FIGS. 30(a) to 30(g) are illustrations of the (left-inclined) output of the comparison unit, masking device and selection circuit;
FIG. 31 is a table showing an example of a command;
FIG. 32 is an illustration of the backtrack being processed by a bypass processing bus;
FIG. 33 is an illustration of the backtrack being processed by the classification device of a memory share type;
FIG. 34 is an illustration of a through being processed in the classification device;
FIG. 35 is an illustration of a through being processed in another manner;
FIG. 36 is an illustration of a through being processed in yet another manner;
FIG. 37 is an illustration of a through being processed in still another manner;
FIG. 38 is an illustration of a processing of adding an entry in a standby mode;
FIG. 39 is an illustration of a processing being proceeded along a pipeline in a standby mode;
FIG. 40 is a diagram showing the function of an updating unit for adding an entry in a standby mode;
FIG. 41 is a diagram showing the function of a queue management unit;
FIG. 42 is an illustration of a processing of adding an entry in bidirectional linking manner;
FIG. 43 is an illustration of a processing being proceeded along a pipeline in bidirectional linking manner;
FIG. 44 is a diagram showing the function of the updating unit for adding an entry in bidirectional linking manner;

FIG. 45 is an illustration of a processing of deleting an entry in a standby mode;

FIG. 46 is a diagram showing the function of the updating unit for deleting an entry in a standby mode (when a command is DEL);

FIG. 47 is a diagram showing the function of an updating unit for deleting a command in a standby mode (when the command is DELUPDT);

FIG. 48 is an illustration of a processing in a standby mode when the command is DELRDBP and DELWRBP;

FIG. 49 is a diagram showing the function of the updating unit for deleting an entry in bidirectional linking manner (when the command is DEL);

FIG. 50 is a diagram showing the function of the updating unit for deleting an entry in bidirectional linking manner (when the command is DELUPDT);

FIG. 51 is an illustration of a processing in bidirectional linking manner when the command is DELRDBP and DELWRBP;

FIG. 52 is a diagram showing a classification device with a data cache;

FIG. 53 is a diagram showing a line size of the data cache;

FIG. 54 is a diagram showing the management of the data cache;

FIG. 55 is a diagram showing the management of a memory;

FIG. 56 is a diagram showing the reply of an empty table management queue;

FIG. 57 is a diagram showing a classification device with a history cache system of an SDRAM share type;

FIG. 58 is a schematic diagram of a history cache system of an SDRAM share type;

FIG. 59 is a diagram showing a classification device with a history SRAM cache;

FIG. 60 is a schematic diagram of the history SRAM cache;

FIG. 61 is an illustration of one example of a matrix operation;

FIG. 62 is an illustration of a left matrix of a matrix operation;

FIG. 63 is an illustration of a matrix operation suitable for LSI;

FIG. 64 is a diagram showing hardware of an AND device;

FIG. 65 is an illustration of a state where a lower order table is omitted;

FIG. 66 is a schematic view of a check device employing a request/reply type memory access;

FIG. 67 is a schematic view of another example of a check device employing a request/reply type memory access;

FIGS. 68(a) to (c) are diagrams showing an improved check table;

FIG. 69 is an illustration of nonlinear memory addressing;

FIG. 70 is a diagram showing a simple state transition;

FIG. 71 is a diagram showing an event-driven simple state transition;

FIGS. 72(a) to 72(c) are schematic diagrams of state transition;

FIGS. 73(a) and 73(b) are schematic diagrams of state transition on a network;

FIG. 74 is a schematic diagram of a processor employing a classification device;

FIGS. 75(a) and 75(b) are schematic illustrations adaptable to QoS;

FIG. 76 is an illustration of the reply of a search tree and a class tree;

FIG. 77 is a schematic diagram showing a conventional search process utilizing a CPU; and

FIG. 78 is a schematic diagram showing a search process utilizing the processor employing the classification device.

## PREFERRED EMBODIMENTS FOR IMPLEMENTING THE INVENTION

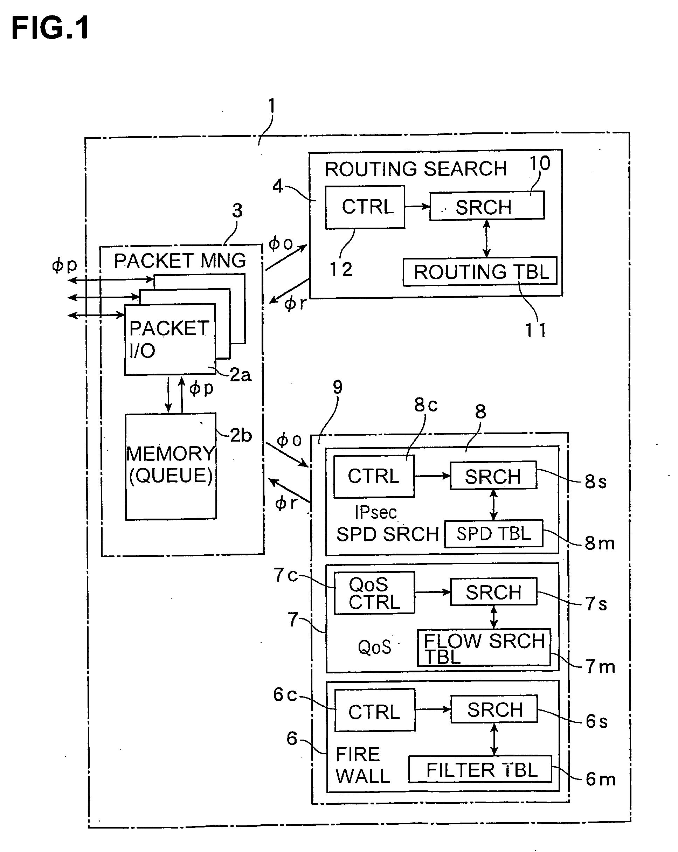

Hereinafter, a router (routing device) for use in searching a routing table, to which a bit string search device of the present invention is applied, will be described. A router 1 shown in FIG. 1 is a device that manages packet data on a network, which comprises: a packet management function 3 for controlling and managing input and output of packet $\phi$p; a routing search function 4 for judging a transmission destination of packet $\phi$p; and a condition judgment function 9 for judging the condition of transferring packet $\phi$p. The routing search function 4 is provided with a memory (SDRAM) 11 storing a routing table with a plurality of entries (registration bit pattern) each indicating the path of an input packet; a search device 10; and a control unit 12 with functions such as setting a search type for the search device 10. In the routing search function 4, a match search is performed in which whether a bit string $\phi$o, to be searched, included in packet $\phi$p, for example, the destination address (DIP) of an IP header matches with either of entries on the routing table recorded in the memory 11. According to the result $\phi$r, the packet management function 3 send packet data to the path (interface) set in the entry matched with.

The condition judgment function 9 is further divided into several functions. The condition judgment function 9 of this embodiment is provided with an IP security (IPsec) function 8 for providing a security service on a network; a QoS function 7 for providing a quality service on the network; and a firewall function 6. Most of the functions for judging these conditions are required to search a scope to which a bit string $\phi$o to be searched belongs, wherein bit string of the IP header managing packet φp is treated as the bit string φo to be searched. In the IPsec (SPD) function 8, a bit string φo to be searched and an SPD table stored in a memory 8m are collated by a search device 8s under the control of a control unit 8c. In the QoS function 7, a bit string φo to be searched and a flow search table recorded in a memory 7m are collated by a search device 7s under the control of a QoS control unit 7c. Further, in the firewall function 6, a bit string φo to be searched and a packet filtering table recorded in a memory 6m are collated by a search device 6s under the control of a control unit 6c.

The packet management function 3 is provided with one or a plurality of packet input/output units 2a capable of receiving and/or transmitting a packet φp through a network; and a memory 2b for queuing the received packet φp. A routing destination of the queued packet φp is determined by the routing search function 4. Further, after the processing in the SPD function 8, QoS function 7, firewall function 6, and so on is determined, in an appropriate timing determined with these functions, the packet φp is sent to an appropriate route or next hop from one of packet input/output units 2a of the packet management 3. Further, the queued packet φp may be discarded in accordance with the check result of the SPD function 8 and so on.

The search device employing the check method of the present invention is applicable as the search devices 10, 6s, 7s and 8s of the respective functions 4, 6, 7, and 8, can search at a high speed and return the result φr to the packet management unit 3 even under the condition that the bit length of a bit string φo to be searched is increased on the bases of IPv6. In the search devices 6s, 7s and 8s of the functions 6, 7 and 8 included in the condition judgment function 9, in order to find a rule to which the bit string φo to be searched belongs, a scope match search or check is executed. On the other hand, in the routing search function 4, a complete match search or longest match search is executed to specify a route. In the routing search function 4, the longest match search which acquires the result of the longest match of the lower bits from a prefix is translated into the scope match search in which all the bits from a prefix is expanded into the minimum and maximum sides. Note that, in this specification, the direction of "0" of a binary bit tree is denoted as the minimum side (MIN), and the direction of "1" thereof is denoted as the maximum side (MAX).

Basic principle of search device

Hereinafter, the outline of a search device of the present invention will be described. The search device of the present invention enables plural types of searches by a single hardware unit, is applicable as a search device of any function almost without changing the configuration. Hence, although the search device 10 is explained hereinafter as a device capable of a complete match search and a scope match search, a scope search can be executed by like hardware.

The search device 10 is hardware that judges, with using a larger/equal/smaller judgment algorithm between an entry group consisting of a binary bit tree and a searched key (a key to be searched, a bit string to be searched, hereinafter, a object key or key may be used), to which part of scopes (rules) expressed by the entry (registration bit pattern) group the object key belongs. When realizing the algorithm of executing a check based on the binary bit tree by hardware, the binary bit tree is divided into tables of a small bit length, and then checking is performed in multiple stages. In each of the check stages, the larger/equal/smaller judgment in the table of each of the stages is performed by a parallel bit check. By the check of the multiple stages, the limit on the bit length of a bit string to be searched is eliminated, and thus general purpose use thereof is expected. Further, by the check of the multiple stages, the bit length compared in each of the stages can be limited, and even if every entry is registered in advance, checking in parallel does not affect the processing time, and there is no increase in hardware. Data (hereinafter, mask data) indicating a pattern table including entries registered in each of the stages is compressible, the cost of making (registering/deleting) a binary bit tree is reduced, and the amount of memory required is reduced conjointly with the compression effect by the multiple stage tables.

A parallel bit check in each of the stages of the check process is not executable by software on a sequentially executing processor, but is executed by parallel processing hardware or a parallel executable processor. The hardware required in the parallel bit check is simple, thus the parallel bit check can be realized economically and compactly without using a parallel executable processor.

Judgment of equal, greater-than or less-than value by binary bit tree

A scope search to be described hereinafter is designed after selecting a right-inclined type approximation logic or a left-inclined type approximation logic when designing hardware. Either of these two enables an equivalent scope search. It is also possible to design the scope search in such a way that the approximation logic is selectable from one to the other type. It is also possible to search by the both approximation logics at one time. Unless specifically described, this specification explains a device designed on the bases of the right-inclined type approximation logic.

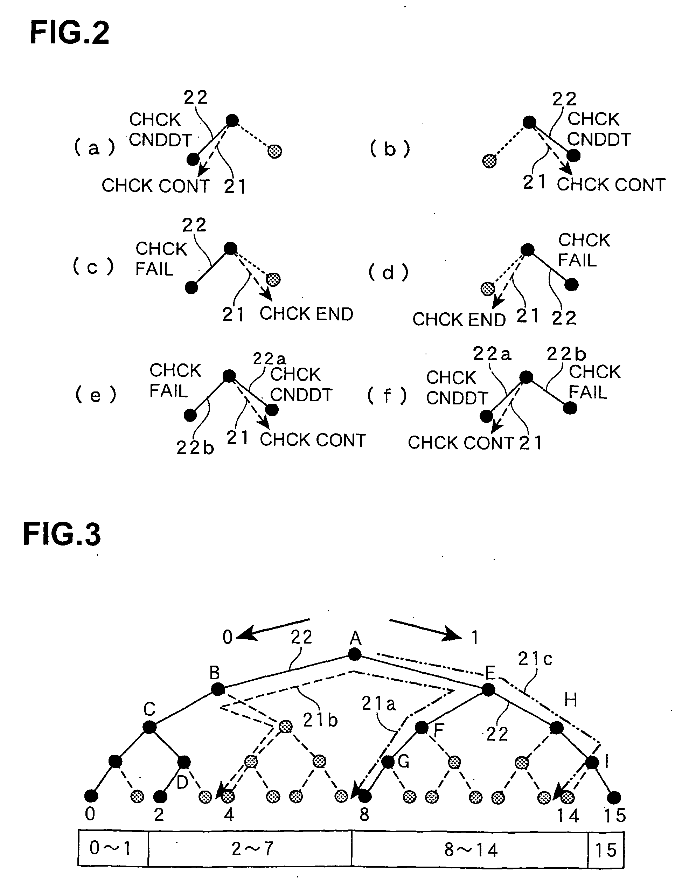

FIGS. 2(a) to 2(f) show the logics of complete match search on a binary bit tree. In the binary bit tree where one stage of the tree corresponds to one bit, a check is executed between a key to be searched and an entry bit by bit from a higher order bit. This higher order bit is a bit initiating a check, it is not necessary to be the most significant bit (MSB), and the bit may be the least significant bit (LSB). A connection from one node to the next node of the binary bit tree can take one of three possible types consisted of "to both directions", "only to a 0-direction", and "only to a 1-direction". Unlike a binary tree in which one node means one entry, in the binary bit tree, a node simply means a single bit of an entry. Since every entry has the same bit length, the number of node stages on each tree is equal, and the connection to the lower node does not become "no directional" on the way from an upper to a lower node which is not the lowest stage.

In this specification, as shown in FIGS. 2(a) and 2(b), the entry where "a bit of a search object key 21 matches a bit of an entry 22" is defined as a "check candidate". As shown in FIGS. 2(c) and 2(d), the entry where "a bit of a search object key 21 does not match a bit of an entry 22" is defined as a "check-failure". Further, as shown in FIGS. 2(e) and 2(f), in the case where node connection is both directional, an entry 22a where "a bit of a search object key 21 matches a bit of an entry 22" is defined as a check candidate, and an entry 22b where "a bit of a search object key 21 does not match a bit of an entry 22" is a check-failure.

In the complete match logic, each bit (each node) implements a check, and if a check candidate exists, proceeding to the next node to implements a check, and such an operation is repeated while a check candidate exists. If a check candidate is not present, then the check is over, and the final check result called a search-mishit is obtained. If there is a check candidate after the completion of the check of the final bit (final node) (if the state is a check-continuation), the corresponding entry is a search-hit.

FIG. 3 shows a checking logic of a complete match search in the binary bit tree. As for an entry group 22 (values 0, 2, 8, 15) of four bits each, registered in the binary bit tree, there are shown an example where a value 8 ("1000") is inputted as a search object key 21a and the entry corresponding to the value 8 is judged to be a complete match search-hit, and an example where a value 4("0100") is inputted as a search object key 21b and the entry corresponding to the value 4 is judged to be a search-mishit. The search object key 21a proceeds in 1-direction in node A of the first bit. Since the entries 22 of values 0 and 2 are 0-direction and the entries 22 of values 8 and 15 are 1-direction, the entries 22 are extended to both directions. Since the former entries 22 are different from the bit of the search object key 21, it is a check-failure, and since the latter entries 22 match the bit of the search object key 21, the state is a check-continuation. Thus, the check candidate entry exists after the check in node A, and the state is a check-continuation.

In the next node E, the search object key 21a proceeds in 0-direction, and the entry 22 of value 8 and the entry 22 of value 15 are extended to 0-direction and 1-direction, respectively. Hence, the check candidate exists in the node E, and the state is a check-continuation. In the node F, although the search object key 21a proceeds in 0-direction and the entry 22 is one-way, since the direction of entry 22 of value 8 is the same 0-direction of the search object key 21a, a check candidate exists and the state is a check-continuation. The same is true of node G and it is the final node. Thus, there is a check candidate after the check of the final node G, and a complete match search hits the entry 22 of value 8 and is finished.

In the search object key 21b, since there is a check candidate in the node A, checking is continued. In the node B, the search object key 21b is 1-direction, and the entries 22 of values 0 and 2 are one-directional and extended to 0-direction. Therefore, the entries 22 of values 0 and 2 with the check-continuation being true become a check-failure, and there is no check candidate left after the check in this node. Accordingly, a search-mishit is concluded.

In a scope search, as in the case of the complete match search, a binary bit tree is checked between a search object key and an entry bit by bit from a higher order bit. However, in the case of the scope search, there are the concepts of "approximation candidate" and "approximation failure" in addition to "check candidate". A "check-failure" in the complete match search is separated into "approximation candidate" and "approximation failure". Further, from the necessities in terms of logic, "approximation assumption" is also defined.

Right-inclined approximation (MAX Search)

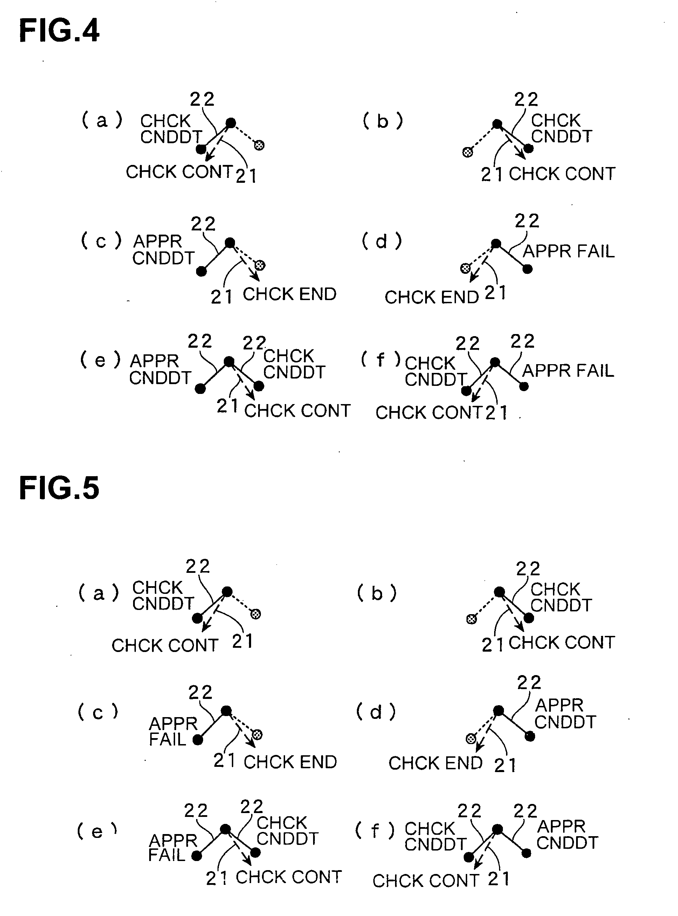

FIGS. 4(a) to 4(f) show the type of a right-inclined approximation. As shown in FIGS. 4(a) to 4(b), the entry where "a bit of a search object key 21 matches a bit of an entry 22" is defined as a "check candidate" (this is the same as the complete match search). While a check candidate exists, the check utilizing a right-inclined approximation logic continues. As shown in FIGS. 4(e) to 4(f), also in the case where "the entry 22 is both directional", an entry 22 where "the bit of search object key 21 matches the bit of entry 22" is a check candidate, and the state is a check-continuation.

On the other hand, as shown in FIGS. 4(c) and 4(d), the entry where "a bit of a search object key 21 does not match a bit of an entry 22" is excluded from the check candidate. While this entry is a "check-failure" in any case in the complete match search, in the case of the right-inclined approximation, as shown in FIG. 4(c), the entry 22 where "a bit of a search object key 21 is 1 and a bit of an entry 22 is 0" is defined as an "approximation candidate". On the contrary, as shown in FIG. 4(d), the entry 22 where "a bit of a search object key 21 is 0 and a bit of an entry 22 is 1" is defined as an "approximation failure". In the approximation logic, the latest approximation candidate is maintained as an "approximation assumption". The value actually required to be maintained as an "approximation assumption" is the node position of the approximation candidate. In both cases of an approximation candidate and an approximation failure, if the entry 22 is one directional and there is no check candidate as shown in FIGS. 4(c) and 4(d), the check process is finished.

As shown in FIGS. 4(e) and 4(f), if the entry 22 is "two directional", the entry 22 where "a bit of a search object key 21 does not matches a bit of an entry 22" becomes "an approximation failure" or "an approximation candidate" in accordance with the definition. Because of "two directional", the entry 22 where "a bit of a search object key 21 matches a bit of an entry 22" exists, and this entry becomes a "check candidate", the check continues. Together with this, the entry 22 which becomes "approximation candidate", i.e., the entry 22 of "approximation candidate" of FIG. 4(e) becomes "approximation assumption", and the value of "approximation assumption" obtained so far is updated.

In the case of the check-continuation being true (the case where a check candidate exists) after the final bit, this means a complete match with the entry. If the check is finished on the way (or at the final bit), the maintained approximation assumption (the latest approximation candidate) is recognized to determine whether an approximation hit is present or not. If no approximation assumption is present, this means a search-mishit. This means in the scope search that the result is out of the whole range. If there is an approximation assumption, this means an approximation hit. However, in the case where the approximation assumption indicates a node on the way, there is a possibility that a plurality of entries 22 may exist under the node, thus approximation determination has to be performed from the entry group 22 of approximation assumption. This process can be performed with different logic than the approximation check. In the right-inclined approximation, the processing explained below as a maximum search (MAX search) is performed, and the entry of the maximum value (the maximum entry closest to a search object key) is selected from the entries of values less than the value of the search object key 21, and is determined to be an approximation entry.

Assuming tat FIG. 3 shows a scope search utilizing the right-inclined type approximation logic in a binary bit tree, the explanation thereof is as follows: As for the search object key 21b of value 4, an entry 22 of value 0 or 2 of 0-direction in the node A becomes a check candidate, and an entry 22 of value 8 or 15 of 1-direction becomes an approximation fail. In the node A, since a check candidate exists, and the state is a check-continuation. Next, an entry of value 0 or 2 of 0-direction in the node B becomes an approximation candidate, and therefore updating of the approximation assumption (maintenance of the latest approximation candidate) is performed, and the node C, i.e., the next node indicated as the approximation candidate is maintained as the approximation assumption.

After the check at the node B, since a check candidate does not exist, the check process is finished. Since an approximation assumption exists, this leads to an approximation hit. Hence, approximation determination is executed by a MAX search from the entry group whose entries are determined as the approximation assumption. In this case, the entry of value 2 is selected from the entries 22 of values 0 and 2. As shown in FIG. 3, if the search object key 21b has a value within the scope of 2 ≤ a key value ≤ 7, the entry 22 of the value 2, which is the same result, can be obtained. That is, the entry 22 of a value 2 is one having the scope of (2 to 7). In this meaning, the right-inclined approximation is a scope search.

Next, in the case of the search object key 21a being a value 8, in the node A, the entries 22 of 0-direction (having values 0 and 2) become approximation candidates, and the approximation assumption (indicating node B) is updated. The entries 22 of 1-direction (having values 8 and 15) become check candidates, and the existence of any check candidate means a check-continuation. In the node E, the entry 22 having a direction of a bit value 0 make the check-continuation true, and the entry having a direction of a bit value 1 becomes an approximation failure. Since there is no approximation candidate, approximation assumption is not updated. From the node F downwards, since the direction is one directional, check continues, and there is no approximation candidate, approximation assumption is not updated. Further, since the state is a check-continuation (a check candidate exists) at the final bit, the final check result is obtained that the entry 22 of value 8 matches completely.

Further, there is described the case where the search object key 21c of value 14 is inputted. In the node A, since the entries 22 having a bit value of 0-direction (e.g., values 0 and 2) become approximation candidates, the approximation assumption (indicating the node B) is updated. Further, the entries having a bit value of 1-direction (e. g., values 8 and 15) become check candidates, and the state is a check-continuation. In the node E, the entry 22 having a bit value of 0-direction becomes an approximation candidate and the approximation assumption is updated (indicating node F). Further, the entry 22 having a value 15 of 1-direction becomes a check candidate, and the state is a check-continuation. In the node H, the entry 22 having a value 15 of 1-direction becomes a check candidate and an approximation candidate does not occur, thus approximation assumption is not updated and a check-continuation is true. In the node I, a check-failure occurs in one-way. Hence, the check process is finished.

At this time, the approximation assumption indicates the node F by updating at the node E. Because of approximation determination, a MAX search of nodes below node F is made and the entry 22 corresponding to a value 8 is determined as an approximation hit. Hence, the search object key 21 is judged to be included in the scope (8 to 14) covered by the entry 22 of value 8, and this means that a scope match search has been executed.

Left-inclined approximation (MIN search)

FIGS. 5(a) to 5(f) show the definitions of "check candidate", "approximation candidate" and "approximation failure" in a left-inclined approximation. The approximation can be obtained by simply exchanging of bits between "approximation candidate" and "approximation failure" in the right-inclined approximation. The check logic is similar to the right-inclined approximation except for the above replacement. The only difference is that, a MAX search for approximation assumption is performed for approximation determination in the right-inclined approximation, while a MIN search for approximation assumption is performed for approximation determination in the left-inclined approximation. In the MIN search, the entry of the minimum value (the minimum entry closest to the search object key) is selected from the entries larger than the value of the search object key 21, and is determined as an approximation entry.

In the case where "a bit of entry matches a bit of a search object key" until the final bit, that is, in the case where a check-continuation is true after checking the final bit, this is also considered as a hit in a scope search. That is to say, a scope search by the right-inclined approximation is defined that the searching of the maximum entry satisfying the relation "key $\geq$ entry" without discriminating a complete match hit and an approximate match hit. However, depending on a use for a search, the right-inclined approximation may not include "=", which leads a relation is "key > entry". Further, the search may be performed with selecting whether a "=" match or a ">" match is.

Format of entry data in scope search

In a scope search using a right-inclined approximation, a scope is normalized so as to be appropriate for an right-inclined approximation logic and registered in entries. The normalization is referred to as the setting of a new scope that is not mutually overlap and permits the overlap of rules belonging to the new scope. By judging the scope to which a search object bit string belongs, a rule applied to the search object bit string is found. If a plurality of rules in a new scope to which a search object bit string belongs, a method of managing a packet to which a search object bit string belong on the basis of a rule with a high priority is utilized.

In detail, the normalization of a rule means that the numeral expression of a scope is converted from a FORM/TO expression to a FORM/NEXT expression for a check processing. That is, the relation between the rule and the scope is converted into a segmented scope expression by permitting the overlap of rules but not permitting the overlap of scopes. For example, assuming that Pi is a value in a scope, and a scope [Pa, Pa'] and a scope [Px, Px'] are given, if there is a relation of Pa < Px < Pa', three new scopes of [Pa, Px - 1], [Px, Pa'] and [Pa' + 1, Px'] are defined. If it is determined to which of the new scopes a rule belongs under such normalization, the corresponding rule (prior rule) is uniquely determined. That is, the scope [Pa, Pa'] is divided into two new scopes of [Pa, Px - 1] and [Px, Pa']. Hence, when m rules are given, non-overlapping new scopes can be set by dividing a number of scopes (the number of new scopes) into 2m + 1 at the maximum. The condition of being the maximum is established if FROM/TO of the scope of all the rules is unique. In actual, there are many overlaps and thus the number of new scopes is considerably small.

Further, in these new scopes, a scope assigned no rule has its own meaning as a scope assigned no rule. Hence, the scope given by FROM/TO needs to be converted into the scope of [From, *] and [Next, *]. That is, the expression of one scope by a pair of FROM/TO is converted into the expression of independent scopes by respective From value/Next value. The From value is equal to the From value of the original rule scope, and indicates the initial position (left end point) of the rule scope. The Next value is equal to To (scope end position) + 1 of the rule scope, and is the initial position (left end point) of an outer scope which is right side of the rule scope. Because of this, the From value/Next value become independent as the end points of the new scopes, and a new scope is always expressed as one point of the left end point (lower order bit string), and becomes a normalized definition. That is, the right end point of a new scope is impliedly expressed as a left end point - 1 of a Next scope. Note that, considering the right end point of a rule scope as the center, the new scope can be expressed by one point of a higher order bit string. In this case, in the following description, it has only to be considered to reverse between higher order and lower order.

Format of entry data in scope search

In a scope search using a right-inclined approximation, a scope is normalized so as to be appropriate for an right-inclined approximation logic and registered in entries. The normalization is referred to as the setting of a new scope that is not mutually overlap and permits the overlap of rules belonging to the new scope. By judging the scope to which a search object bit string belongs, a rule applied to the search object bit string is found. If a plurality of rules in a new scope to which a search object bit string belongs, a method of managing a packet to which a search object bit string belong on the basis of a rule with a high priority is utilized.

In detail, the normalization of a rule means that the numeral expression of a scope is converted from a FORM/TO expression to a FORM/NEXT expression for a check processing. That is, the relation between the rule and the scope is converted into a segmented scope expression by permitting the overlap of rules but not permitting the overlap of scopes. For example, assuming that Pi is a value in a scope, and a scope [Pa, Pa'] and a scope [Px, Px'] are given, if there is a relation of Pa < Px < Pa', three new scopes of [Pa, Px - 1], [Px, Pa'] and [Pa' + 1, Px'] are defined. If it is determined to which of the new scopes a rule belongs under such normalization, the corresponding rule (prior rule) is uniquely determined. That is, the scope [Pa, Pa'] is divided into two new scopes of [Pa, Px - 1] and [Px, Pa']. Hence, when m rules are given, non-overlapping new scopes can be set by dividing a number of scopes (the number of new scopes) into 2m + 1 at the maximum. The condition of being the maximum is established if FROM/TO of the scope of all the rules is unique. In actual, there are many overlaps and thus the number of new scopes is considerably small.

Further, in these new scopes, a scope assigned no rule has its own meaning as a scope assigned no rule. Hence, the scope given by FROM/TO needs to be converted into the scope of [From, *] and [Next, *]. That is, the expression of one scope by a pair of FROM/TO is converted into the expression of independent scopes by respective From value/Next value. The From value is equal to the From value of the original rule scope, and indicates the initial position (left end point) of the rule scope. The Next value is equal to To (scope end position) + 1 of the rule scope, and is the initial position (left end point) of an outer scope which is right side of the rule scope. Because of this, the From value/Next value become independent as the end points of the new scopes, and a new scope is always expressed as one point of the left end point (lower order bit string), and becomes a normalized definition. That is, the right end point of a new scope is impliedly expressed as a left end point - 1 of a Next scope. Note that, considering the right end point of a rule scope as the center, the new scope can be expressed by one point of a higher order bit string. In this case, in the following description, it has only to be considered to reverse between higher order and lower order.

By normalization, the rule entry of FROM/TO is converted into the entry of FROM/NEXT. At this time, [0, NA] is added as a default entry. Hence, if the number of rules is n, the entry number becomes an n + 1 entry including the default. In a normalization process, a checked thing wit a scope is not limited to the rules, and the normalization process is applicable to every case if a search is one in which an output value corresponding to the scope is specified.

This normalization can be said to be a correction of TO (larger value) side of binary values ([FROM, TO]). For instance, a scope R expressed by [a, b] is registered as a entry A of value "a" and a entry B of value "b + 1". The entry A expresses the scope R and the entry B expresses a scope S [b + 1, ∞]. A right-inclined approximation hit at entry A means a scope search hit in the scope R. An approximation hit in entry B means a hit in the scope S, that is, a scope search mishit (out of the scope R). An approximate mishit means a hit in a scope Q [0, a - 1], that is, a scope search mishit (out of the scope R).

A scope U [c, c] expressing one point is definable, and is registered as an entry C of value "c" and an entry D of value "c + 1". The entry C expresses the scope U and the entry D expresses a scope V [c + 1, ∞]. Since the adjacent entries of value "c" and value "c + 1" are registered, a hit at the entry C having value "c" is only a complete match hit, and means a scope search hit in the point scope U. An approximation hit to the entry D is a hit in the scope V, that is, a scope search mishit (out of the scope U). An approximation mishit means a scope T [0, c - 1], that is, a scope search mishit (out of the scope U).

Also in a left-inclined approximation, normalization is performed in which FROM (smaller value) side is corrected in reverse to the right-inclined approximation.

The relation between entries and a set is defined such that entries I means SET(I)[i, ∞]. With this, a scope R [a, b] is represented by a difference set (SET(A) - SET(B)) between entry A of value "a", i.e., SET(A)[a, ∞], and entry B of value "b + 1", i.e., SET(B)[b + 1, ∞]. A right-inclined approximation hit at entry A means that a hit occurs in entry A and a mishit occurs in entry B.

Check method

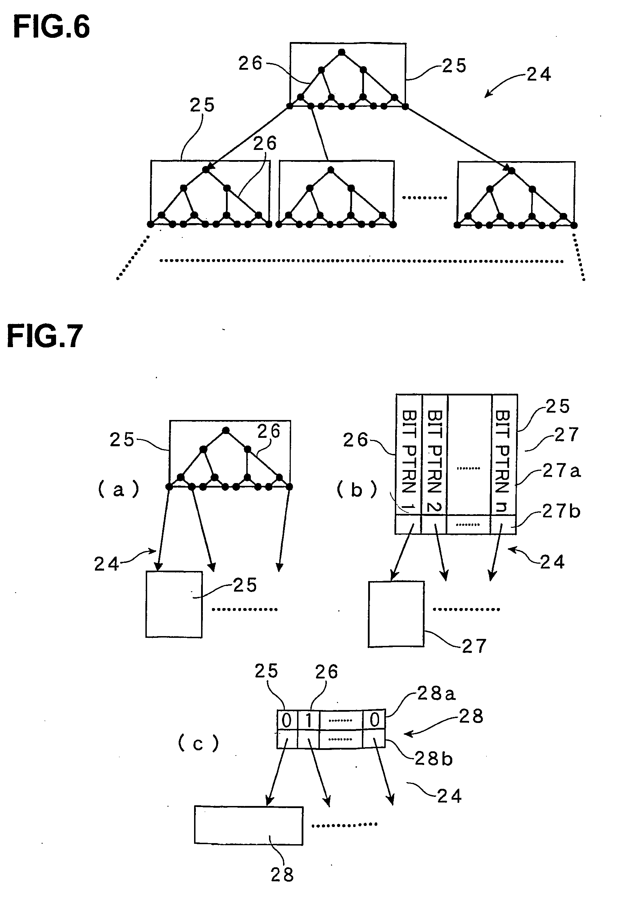

FIG. 6 shows division tables. A multi-bit binary bit tree 24 can be made into pattern tables by being divided into multiple stages or multiple layers and further partitioning each of the multiple stages at a bit width having a proper number of entries. By defining a division table or partial table (pattern table) 25 in units of a predetermined short bit length, the multi-bit binary tree can be expressed by partial tables 25, each of which is indicated by a partial tables 25 of the upper stage, of every stages. By using a partial table of a fixed number of bits, entries of a parallel processing object are finitely fixed, and the entries included in a partial table 25 can be checked in parallel by a hardware. Further, since the maximum number of entries included in a partial table 25 is finite, it is possible to automatically hardware-check which of the entries to be included in the partial table 25 the search object key matches with, regardless of the existence of an entry actually included in the partial table 25, if a certain partial table 25 is selected.

FIG. 6 shows a binary bit tree 24 expresses by a partial table 25 of three bits. The maximum number of partial entries 26 to be possibly installed in each partial table 25 is 8 wherein the entry has values 0 to 7. In implementation on hardware, a proper table bit length is determined by taking into consideration of a bit length of a memory word, a bit length of a search key, and so on. If the table bit length is n-bits, the number of entries in a table to be parallel processed is $2^n$. Thus, a table of 4-bits or so is generally appropriate.

By forming partial tables, a search in a partial table of each stage becomes a search in a finite fixed number of entries. In addition, if a search object key has a fixed bit length, the binary bit tree 24 indicating entries becomes a fixed length, and the number of stages of the partial tables 25 indicating them becomes a finite fixed number of stages. Therefore, the search becomes a binary bit tree search which does not cause backtracking in a match search. Hence, the worst time consumed for searching becomes a predetermined time regardless of the number of entries.

FIG. 7(a) shows a logic image where a binary bit tree 24 is made into partial tables. FIG. 7(b) shows the profile of partial tables (pattern tables) 25 configured as general tables 27. In a general table 27, one entry consists of a value 27a of a bit pattern and a pointer 27b to a lower order table 27 corresponding thereto, and the general table consists of n number of these at the maximum. Further, FIG. 7(c) shows the profile of partial tables 25 embodied in tables 28 which are made by compressing the general tables 27. In a compressed table 28, one entry consists of a bit flag (mask data) 28a indicating the effectiveness or ineffectiveness of an entry and a pointer 28b to a lower order. A pointer 28b coupling to a lower-order compressed table 28 is formed of an address in a RAM storing the compressed table 28 therein, and constitutes an address table.

The difference between the general table 27 and the compressed table 28 is that a bit pattern is set for an entry at each registration in the general table 27, while a table has a fixed width and bit patterns are omitted in the compressed table 28. In the case where the partial table 25 has a fixed bit width, the upper limit of the number of entries is determined in correspondence to the bit width. Hence, in the case of a four-bit table, the relation between an entry number and a bit pattern can be fixed on a one-to-one correspondence like the relation that entry number 0 is a bit pattern 0000 and entry number 1 is a bit pattern 0001. Hence, by simply indicating an active entry number, a partial entry 26 included in the partial table 25 can be designated. Although several data indicating entry number may be taken into account, as shown in FIG. 7(c), a bit pattern (mask pattern) 28a is information which is readily available by hardware in which bits serving as on-off flags are arranged at respective bit positions corresponding respective entry numbers. Further, by indicating the existence and absence of partial entries with using a mask pattern 28a, it is possible to omit hardware and software for registration and to omit a process for registering a bit pattern of actual partial entries.

Optimizing the partial table 25 by using a compressed table 28 of a mask pattern make the hardware of comparing the partial table 25 with a part (partial-object key) of the corresponding search object key simplify. In the case of a four-bit partial table 25, the check process and hardware are simplified by employing the hardware performing a comparison in parallel between values of four-bit partial entries, that is partial entries of values 0 to 15, and a partial-object key. That is, parallel checking of the overall entries by hardware is enabled to simplify the checking process. Further, since sorting is finished due to the fixed relation between the entry numbers and bit patterns, addition and deletion of an entry (partial entry) can be realized simply by updating mask data 28a. In addition, MIN/MAX search in the table is performed simply by using entry numbers without comparison of bit patterns. Hence, in a search of scope match, even if backtracking has occurred up to the partial table 25 which includes an approximation candidate, afterward, the MIN/MAX search in the table can be finished simply by referring to the flag (mask data) 28a to determine whether the entry is effective or ineffective. Hence, the method can tell as one in which backtracking does not occur in actual implementation.

MIN/MAX search and bypass thereof

Principle of MIN/MAX search

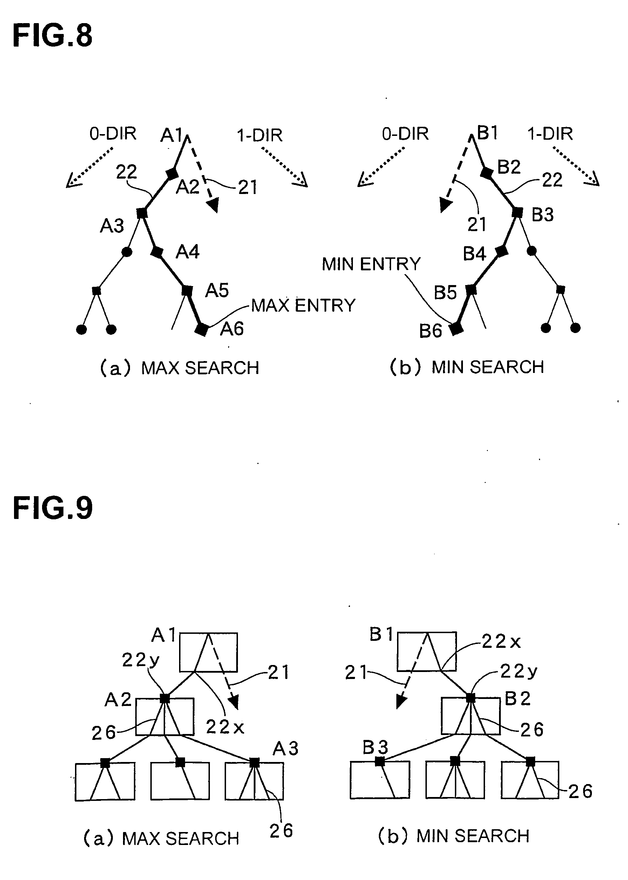

In a binary bit tree, the principle of MIN/MAX search is as follows. FIG. 8(a) shows an outline of a MAX search in right-inclined approximation. At a bit position (node) A1, a search object key 21 loses an entry 22 to mach with, and thus a check candidate of a right-inclined type scope search becomes lost. Due to this, the check is finished on the way, and a MAX search based on the approximation assumption entry is initiated. In the case where the entry 22 is unidirectional, it goes down along that direction. At the node A2, since the entry 22 exists only in 0-direction, it tracks down in that direction. At the next node A3, since the entry 22 exists in both 0 and 1-directions, it tracks down in the direction of a larger value (1-direction because 1 > 0) as a priority direction. The same processing is performed on each node. The entry 22 obtained by tracking down to the lowest bit position A6 is a MAX entry (which is an entry taking the maximum value and is smaller than the value of a search object key, and is the maximum entry close to the search object key).

FIG. 8(b) shows an outline of a MIN search in left-inclined approximation. In the case of the left-inclined type scope search, the process tracks in the smaller direction (0-direction) as a priority direction in the same kind of logic, and performs a MIN search to obtain a MIN entry (which is an entry taking the minimum value in the range larger than the value of a search object key, and is the minimal entry closest to the search object key).

MIN/MAX search in table

If a binary bit tree is tabled, the logic of the MIN/MAX search has to correspond to the table. FIG. 9(a) shows a MAX search in right-inclined approximation in general tables, which is one of MIN/MAX search. In table A1, it arises a check-failure (a state where an entry 22 having the same value as a key value 21 does not exist). Among the entries each having a relation of "key value > entry value" in the table, the entry of the maximum value (the entry whose value is the closest to the key value among the entries satisfying "key value > entry value") is selected and set to an approximation candidate entry 22x. The next table pointed by the approximation candidate entry 22x is an approximation assumption entry 22y. Then, a MAX search is initiated for entries downstream from the approximation assumption entry 22y.

Firstly, the position is shifted to the table A2 which has the approximation assumption entry 22y. By investigating the entries in the table A2, the entry having the maximum value is selected. The position is shifted down to a table of the next stage of the entry, and the selection of the entry having the maximum value and process of shifting to a lower stage are repeated, to reach the lowest stage. At the lowest stage as well, the maximum value entry is selected, and the position is tracked down to registration data of the maximum value entry and the MAX entry is outputted. FIG. 9(b) performs a MIN search by the same kind of logic in an left-inclined approximation type scope search.

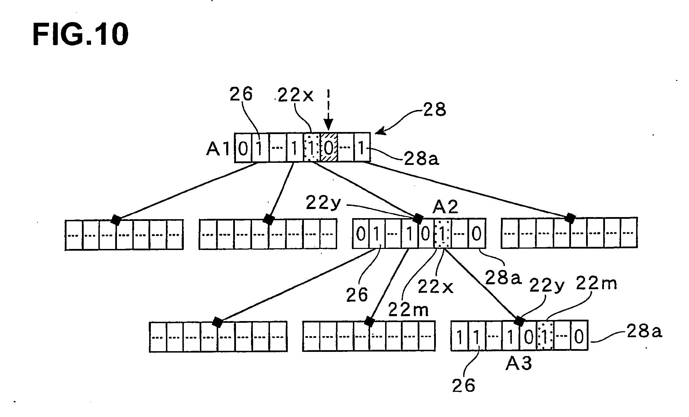

FIG. 10 shows a process of a MAX search corresponding to right-inclined approximation included in the logic of the MIN/MAX search for a compressed table 28. Firstly, the compressed table 28 is equivalent to a sorted state since the relation between entry numbers and bit pattern is fixed in the mask data 28a, the selecting either of the minimum and maximum value entries in the table can be performed only by setting a flag at the corresponding entry number in the mask data 28a without comparison of bit patterns. In other words, the selection of the minimum or maximum value entry in the table can be performed only by reference to effective and ineffective flags. Since it is possible to link compressed tables 28 by recording an address of the subsequent compressed table 28 into a record of the address table 28b corresponding to an additional entry number, it is possible to search the multiple stages of a binary bit tree even if it is not for a table on a linear address.

The MIN search in the rightward scope will now be explained in detail. In the preceding check stage, a check candidate in the mask data 28a of the table A1 was lost and the check has been finished, a MAX search for an approximation assumption entry is initiated in the next stage. The selection of an approximation assumption is performed by selecting an entry (the maximum entry) having the maximum value among the entries of "key value > entry value" in the mask data 28a of the table A1. In the compressed table of a bitmap, "entry number = entry value" holds, and an entry where 1 is firstly positioned when viewed from the left from the key value entry is an approximation candidate entry 22x. In this example, the candidate entry 22x exists in the same table A1 as a table that the check has finished. The next table pointed by the approximation entry 22x is an approximation assumption entry 22y.

Thus, in the next check stage, the position is shifted to the table A2 which is the approximation assumption entry 22y. The entry having the maximum value in the table A2 is selected. Because "entry number = entry value", the entry where 1 is first when viewed from the right end is the maximum value entry 22m. The position is shifted to the next stage table A3 indicated by the maximum value entry 22m, the selection of an entry and the process of shifting to a lower succeeding stage are repeated, to reach the lowest entry. At the lowest stage as well, the maximum value entry 22m is selected, and the position reaches the data indicated by the maximum value entry 22m. In this way, the maximum entry can be obtained. In the left-inclined type scope search, the MIN search is performed using the same kind of logic.

Bypass of MIN/MAX search

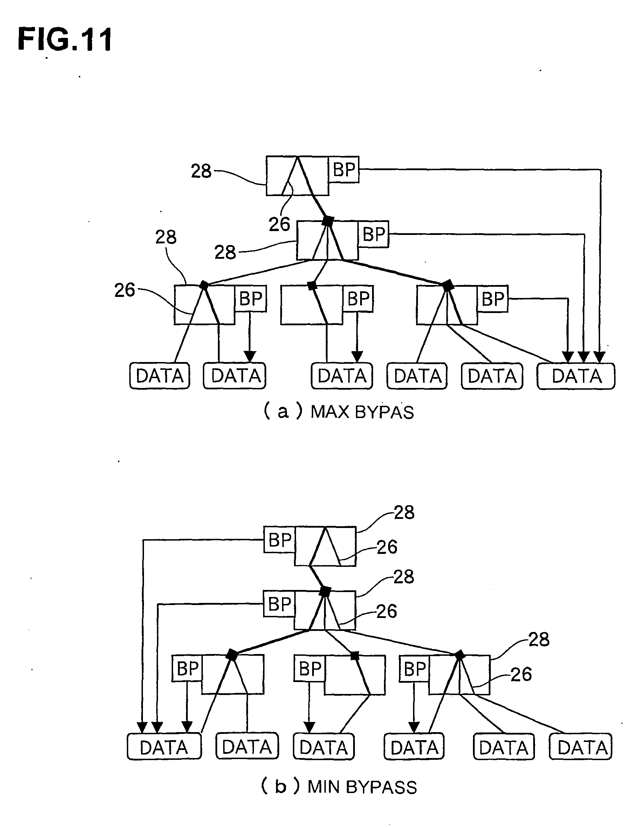

In the compressed table 28, sorting is complete with the fixed relation between an entry number and a bit pattern, the MIN/MAX search is performed only by entry number without comparison between bit patterns. The MIN/MAX search in the table is finished only by reference to effective and ineffective flags. However, unless registration or deletion of an entry does not arise, the final maximum entry or minimum entry reached by going along lower partial tables 28 does not change. Therefore, it is pointless to perform a MIN/MAX search every time. Because of this, as shown in FIGS. 11(a) and 11(b), by making a bypass tag (BP) placed on each table and recording therein the result of MIN/MAX search in the tables below the table 28, that is, the maximum entry or minimum entry, it is possible to omit the MIN/MAX search. With this, the search time in the process of searching the maximum entry or minimum entry is reduced to a large extent as compared to the process of merely accessing the approximation assumption compressed table 28.

Accordingly, when an entry of approximation assumption is made to approximation determination, there is used the address (hereinafter, referred to as TAG (TAG pointing the next stage table)) of an address table 28b pointed by the approximation assumption entry 22y, and the maximum or minimum entry to be made to an approximation determination can be obtained by the bypass tag (BP) of the next stage table. In the case of performing the right-inclined type scope search as a scope search logic, the maximum entry is recorded in a bypass BP, and in the case of performing the left-inclined type search, the minimum entry is recorded in the bypass BP. In the case of a plurality of scope searching systems are provided with, the configuration of check logic is unified into either right-inclined type or left-inclined type. The both of left and right types can be employed by recording both values in the bypass BP, although the amount of information recorded in the table increases, another logic for check have to be added, and another logic for registration and deletion of an entry have to be added.

Further, by recording the bypass BP, the problem of a delay of back tracking in the MIN/MAX search can be solved. The MIN/MAX search is a search for determining an approximation result from the group of approximation candidate entries. By the way, in the case of a table type bit tree, an approximation candidate is not updated at each stage during the check-continuation in either of right-inclined type and left-inclined type. There is a case wherein an approximation candidate is updated at a certain stage, and thereafter check-continuation continues during several stages without accompanying updating of the approximation candidate, and when a check-failure occurs at a lower stage, the MIN/MAX search is performed in order to confirm the result with using the approximation candidate updated at an upper stage.

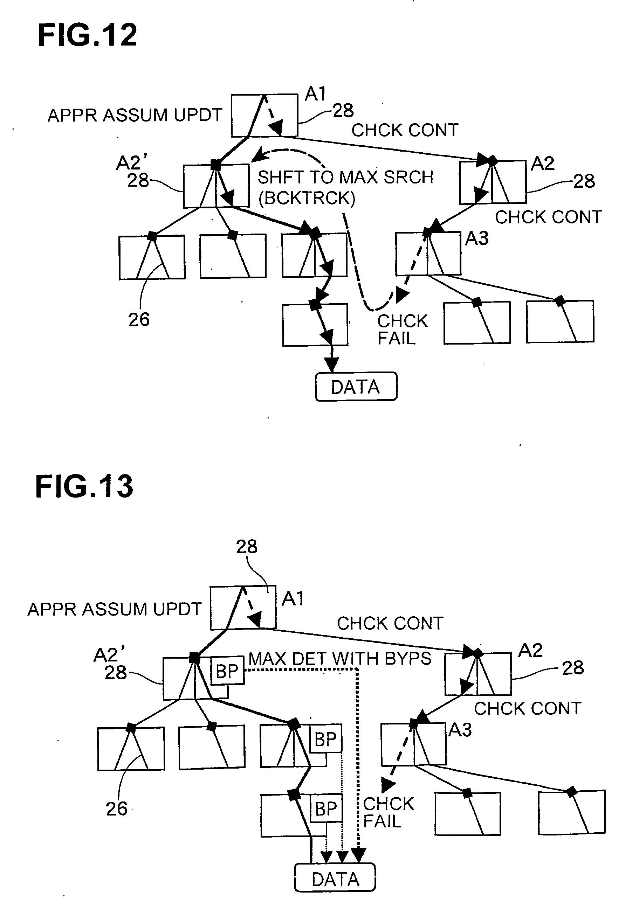

FIG. 12 shows an example of this. A check is continued from a higher order table 28 to a lower order table 28. When a check-failure arise, the routine is returned to a higher order table 28 on the basis of the approximation assumption, and goes down tables 28 again along a tree in accordance with another logic (MIN/MAX search). This can be said to be a back-track. Due to a check-failure, the logic changes to the MIN/MAX search going down along a tree. Although the back track does not occur again in the MIN/MAX search, in the case where a check-failure position is apart from an approximation assumption position, the cost of MIN/MAX search accompanied with a back-track is high.

Regarding this, as shown in FIG. 13, if a bypass BP is recorded, the maximum or minimum entry is determined by reading the value of the bypass BP once. Thus, the processing of search which takes time is not required substantially, and the occurrence of back tracking can be substantially suppressed. FIG. 13 shows an example of a right-inclined type search. At a table A1, approximation assumption is updated and a check-continuation is determined. At a table A2, approximation assumption is not updated and a check-continuation is determined. At a table A3, approximation assumption is not updated and a check-failure arises. At this time, since the approximation determination arises due to the check-failure at the table A3, the process proceeds to a MAX search. However, since the latest approximation assumption is at the table A2', the table A2' is accessed. If the bypass BP is recorded in the table A2, it is possible to directly shift to the maximum entry of the lowest stage, thus the check process is finished.

Search device, classification device, and binary bit tree check device

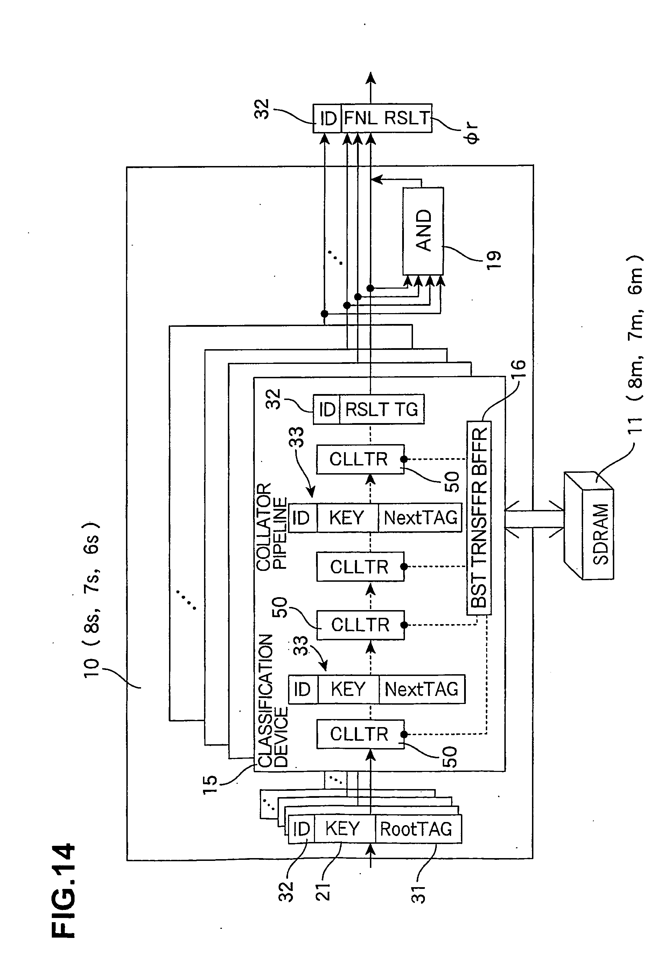

FIG. 14 schematically shows a search device 10. This search device 10 is provided with a plurality of classification devices 15 performing various types of searches, and is configured to execute various types of searches in parallel. Hence, in the search device 10, a classification method is installed which includes a plurality of classification processes realized by a plurality of classification devices 15. It is also possible to perform various types of searches sequentially by a single classification device 15, and a search device of the present invention is not limited thereto.

The search device 10 receives a key 21 as a search object bit string, a route tag 31 indicating a search type thereof, and search job identification information (ID) 32 from an upstream application, for example, a control unit 12, 8c, 7c or 6c shown in FIG. 1. For instance, in the case of an SPD search function 8, it is required in order to manage one data packet φp to at least check a bit string designating a source IP, a destination IP, a source port, a destination port and a protocol, and to search a rule satisfying all of them. In this case, bit strings designating a source IP, a destination IP, a source port, a destination port and a protocol are provided to respective classification devices 15 as a search object bit string (search object key) 21. Further, each address in the memory 11 or 8m pointing the highest partial table 25 (28) of a binary tree having a registration bit pattern (entries) 22 to be compared with a bit string thereof is provided as a route tag 31 to a corresponding classification device 15. With this, in each of the classification devices 15, a provided search object key 21 can be checked with a bit pattern (entry) 22 registered in advance so as to be used for a scope search.

Furthermore, the search device 10 is provided with a logic operation device (AND device) 19 for obtaining a final result by logical AND of rules obtained by the result of checking the search object keys 21 provided to the plurality of classification devices 15. Hence, this search device 10 has a classification method including: a plurality of classification processes realized by the plurality of classification devices 15; and a logic operation process realized by the AND device 19. A search processing time in each of the classification devices 15 is dependent on the bit length of a search object key 21 provided to a corresponding classification device 15. In addition, the time is dependent on whether a back tracking for returning to an upper partial table 28 occurs or not. Accordingly, there is a possibility that the search results are not outputted in synchronism with each other from the classification devices 15. Due to this, by adding an ID 32 to the search object key 21 to be provided to the classification devices 15, the logic operation in the logic operation device 19 is enabled, and it is also possible to associate with packet data φp managed in the packet management device 3.

The classification device 15 of this example is provided with a plurality of check devices 50 coupled in a pipeline, and is configured such that check-continuation information (I/O parameter) standardized in a form of data packet is transferred between these check devices 50, and that packet-driven is performed. Hence, the classification device 15 is provided with a data flow formed by the plurality of check devices 50, and a classification method having a classification process with a plurality of check stages installed therein. Further, since each of the check devices 50 performs the processing of each of the check stages, it can be said that the check method of performing a check of multiple stages by the plurality of check stages is installed in the classification device 15. This classification device 15 may be realized by hardware with clock synchronization, and may be realized by data flow type hardware. The classification device 15 is also provided with a burst transfer buffer 16 for improving the input/output speed between the memory 11 storing compressed partial tables 28 and the check devices 50.

The configuration of the search device 10, classification device 15 and check devices 50 to be explained hereinafter may be realized by software or software-based partial hardware. However, in consideration of the running speed, it is preferable to realize the configuration in hardware form to the maximum extent possible. In the search method using the present partial tables 25 or 28, coupling the check device 50 of a single or almost single configuration in a pipeline enables to correspond to a change in bit length, and providing a route tag 31 having information of a search type enables a variety of searches executed by the check device 50 having a single configuration. Hence, this check method can be easily implemented via hardware, and can provide a search device which is economical and has a high processing speed. Further, since a desired search can be executed simply by providing a search object key 21 and search type information 31 from a higher level software or application, the load of which is considerably low.

Configuration of classification device

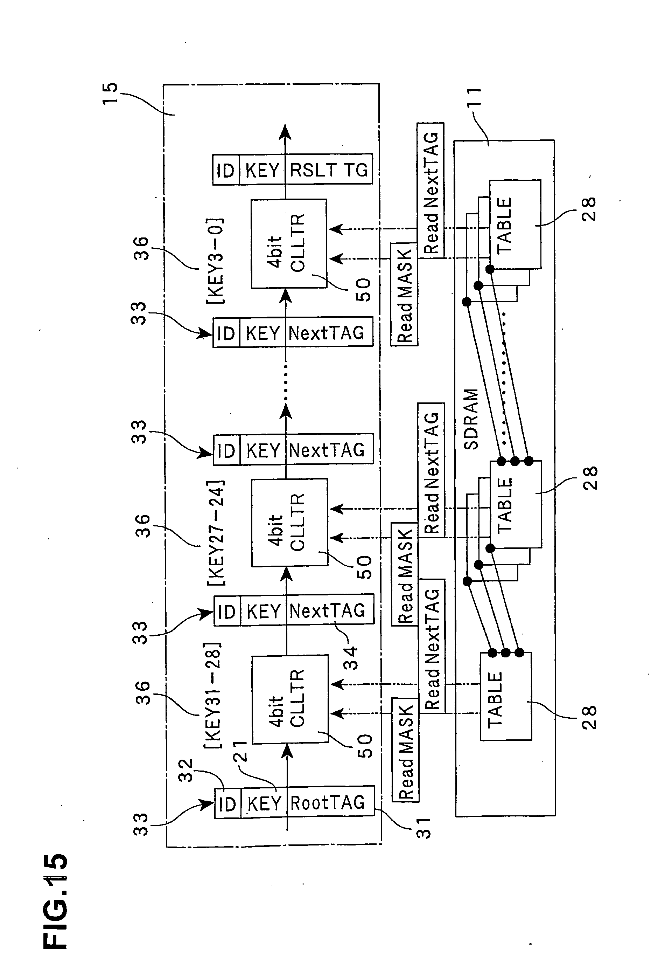

FIG. 15 shows a schematic configuration of a classification device 15 performing a search for a 32-bit search object key 21, configured by coupling eight 4-bit collators 50 in a pipeline. This classification device 15 is provided with a plurality of hardware-based collators 50, and these collators 50 are coupled by software or hardware. A root tag (RootTAG) 31 and a check tag (NextTAG) 34 included in check-continuation information 33 are pointers (addresses) each pointing a compressed table 28 in an SDRAM memory 11. Each of the check devices 50 performing a check at a corresponding stage receives a partial-object key 36 composed of 4 bits in order from a search object key 21 included in the check-continuation information 33, reads mask data 28a from a table 28 designated by the root tag 31 or check tag 34, and performs comparison by approximation matching. The pointer (NextTAG) 34 to a compressed table 28 of the next stage corresponding to an entry (partial entry) 26 hit by comparison, is read from the address table 28b of the compressed table 28, is included in the check-continuation information 33, and then is provided to the next check device 50.

The check-continuation information 33 such as a search object key 21 or check tag 34 may be individually provided. However, it is easy to make data flow by collecting and inputting the check-continuation information in data packet form. Further, the partial-object key 36 to be searched may be provided to the check devices 50 in a form divided by a higher level program in advance. However, it is preferable that the value of a search object key 21 of overall bits is included in check-continuation information 33, and a required number of bits are shifted and used as a partial-object key 36. This is because there is a possibility of back flow (back-track through a bypath) in the pipeline stages on the way of configuration of the pipeline of the check devices, and the search object keys 21 divided at the outside of the check devices 50 cannot be input into respective proper stages in synchronism with clock. Further, there is a high possibility that the processing speed in each of the check devices 50 will change in accordance with an access state (competition, exclusion) for the SDRAM or whether it is an on-cache or not in a case where a data cache is attached thereto. Hence, in proceeding of the pipeline of the checking devices, the processing efficiency can be enhanced by a request reply type (data flow type) rather than clock synchronization type. In this respect, there is a merit of including a search object key 21 in the check-continuation information 33, packetizing the check-continuation information 33, and providing it to a check device 50 in the next stage.

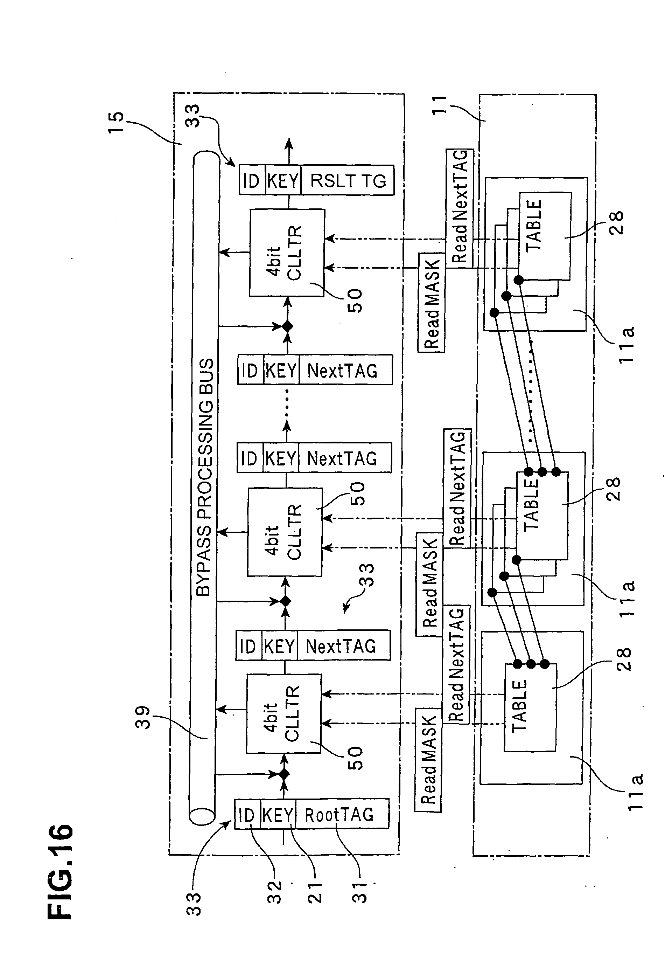

FIG. 16 shows another example of the classification device 15. This classification device 15 is provided with a bus (BP bus) 39 for bypass when executing a MAX/MIN search, and the check devices 50 are provided with respective interfaces output to the BP bus 39. Hence, in this classification device 15, the frequency of accessing tables 28 by the respective check devices 50 in asynchronism increases. As shown in FIG. 15, if the table 28 of each stage is placed in the same SDRAM 11, memory access competition between the check devices 50 constituting the pipeline occurs, and the pipeline does not function effectively. Hence, if the table 28 of each stage is placed in an individual memory 11a and the memory access of each of the check devices 50 is independent, the effectiveness of the pipeline can be improved. In the classification device 15 with this check device pipeline, letting the time (including memory access) required for the processing of one check device 50 be "T", if the 32 bit search object key 21 is inputted without disconnection, the search throughput becomes "T" (practically, "1/T"), and the latency becomes "8T".

It is easy to set up a pipeline of the check devices 50 since the processing time is constant except for the SDRAM 11. It is much easier to configure the pipeline since the actual access time for the SDRAM 11 can be made constant with using a history cache method excluding an SDRAM access by a data cache control or a history cache method of a dedicated SRAM type. As compared to that, in the case of a shared type cache, there is a need to make the throughput of the cache and the throughput of the entire pipeline stages, or to increase the throughput of the shared type data cache side.

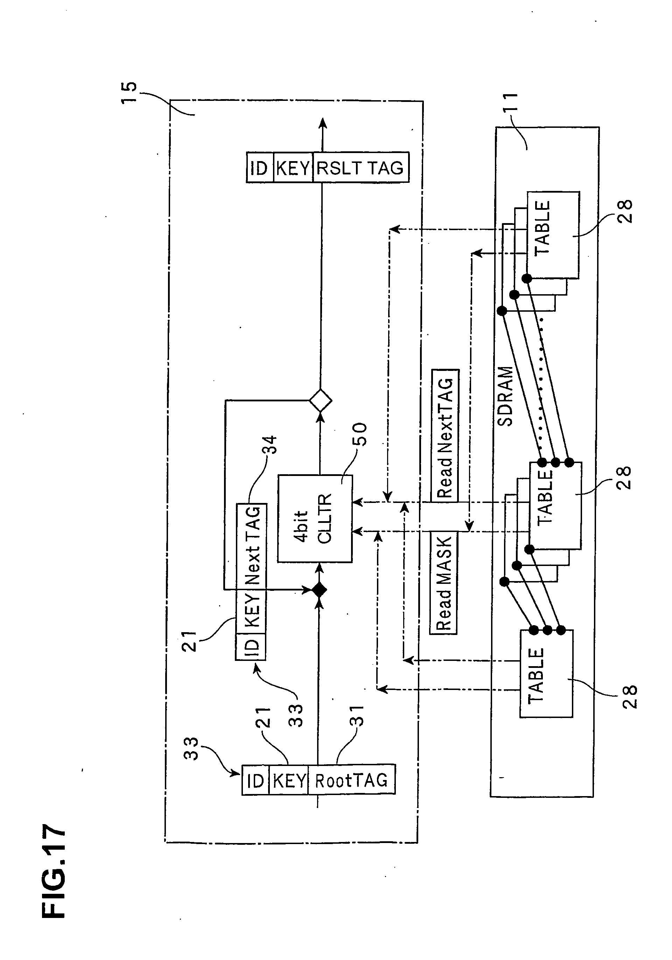

FIG. 17 shows still another example of the classification device 15. In the above example, the plurality of check devices 50 have a configuration arranged in a processing pipeline, while in the case of giving priority to resource saving, as shown in FIG. 17, a configuration repetitively using a single check device 50 is also possible. In this case, the memory access from the check device 50 is always one, therefore with placing all the tables 28 in the same SDRAM 11, there is no disadvantage in processing speed.

Configuration of check device

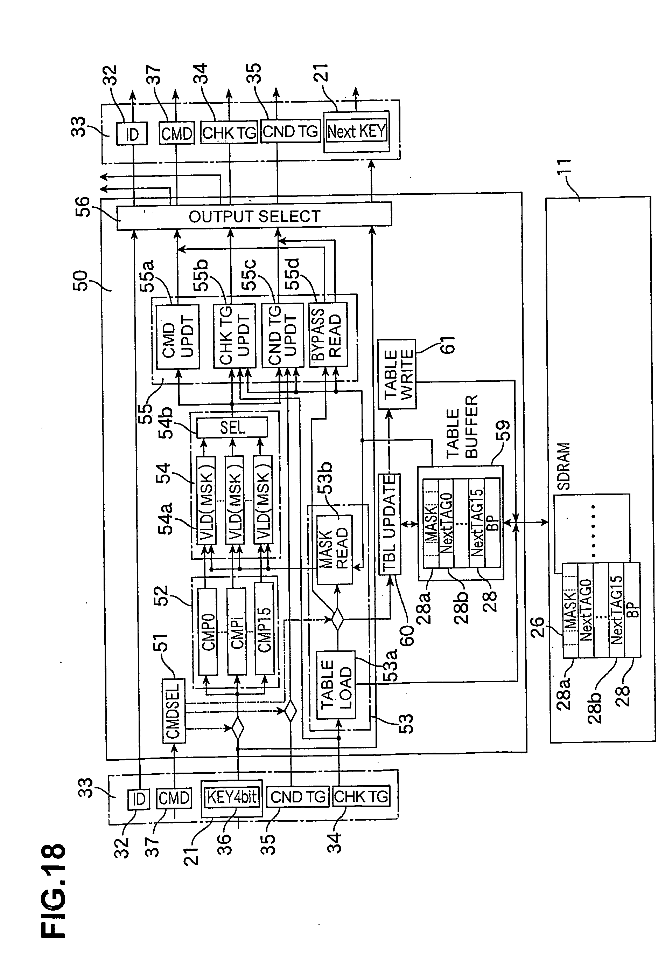

FIG. 18 shows the configuration of a check device 50. A search object bit string (search object key) 21 is divided into a plurality of bits of a partial-object bit string (partial search key) 36, and they are checked with a plurality of registration bit patterns (entries) 22 registered in advance in multiple stages. This check device 50 is one for executing the check at one stage. The check device 50 includes a command decoding unit 51 for decoding a command 37 contained in check-continuation information 33 and controlling the processing in the check device 50, a comparison unit (all-check unit) 52 for selecting a partial-object key 36 of the current stage from the search object key 21 and comparing it with all the possible values of the partial-object key 36, and a loading unit (pattern loading unit) 53 for loading a mask data 28a of the compressed table 28 of the current check stage from a memory 11. The loading unit 53 includes a table load unit 53a for loading a compressed table 28a into a buffer 50 from the memory 11, and a mask reading unit 53b for reading the mask data 28a from the compressed table 28 stored in the buffer 59. An address table 28b and a bypass data BP stored in the compressed table 28 together with the mask data 28a are required in many processes. Thus, in this example, the compressed table 28 is loaded into the buffer 59. As described above, the mask data 28a is a partial bit pattern 26 of the entry 22, and designated by the check-continuation information 33 obtained from the preceding stage, and the registered partial bit pattern (partial entry) 26 of the stage (current stage) corresponding to the partial-object key 36 is expressed in flags (a bit pattern).

The check device 50 further includes a judgment unit 54 which can represent whether there is a partial entry 26 matching with the partial-object key 36, namely, check result including a match in response to all the check results at the comparison unit 52 and the mask data 28a. In addition, the check device 50 includes an output unit 55 outputting, as a check tag (check candidate) 34, the address (tag (in this example, the address of the compressed table 28)) of a mask data 28a of the next stage subsequent to the partial entry 26 specified by checking. In this check device 50, so as to be able to perform a scope search as well as a match search, the judgment unit 54 can indicate the presence of the maximum partial entry 26 (describing in regard to right-inclined approximation and it can be nearly coped with the left-inclined approximation by changing the maximum value to the minimum value) closest to the value of the partial-object key 36. The judgment unit 54 of this example includes mask devices (VLD, VaLiDation) 54a mask-processing the respective outputs of the comparison units 52 by mask data 28a and a selector 54b selecting a state from the outputs of the mask devices 54a.

The output unit 55 outputs the address (address of the compressed table) of mask data 28a of the next stage, which is subsequent to the partial entry 26 judged to be matched by the judgment unit 54, as a check tag 34. Further, the output unit 55 outputs, if the maximum partial entry 26 is determined in the judgment unit 54, the address (address of the compressed table) of the mask data 28a of the next stage subsequent to the maximum partial entry 26 as a candidate address (candidate tag, approximation candidate) 35 for a scope search, and preserves the same in the packet data of the check-continuation information 33. Thus even in the case where a matching partial entry 26 is present and the check continues, if the maximum partial entry 26 is determined, the candidate tag 35 for scope search is preserved in the packet data. Accordingly, in the next check stage, when there is no matching partial entry 26 and check is finished, if there is no additional maximum partial entry 26 in that check stage, it becomes possible to output the candidate tag 35 to check-continuation information 33 as a check tag 34. With this check tag 34, it is possible to proceed to a MAX search.

In addition, the output unit 54 of the check device 50 is provided with the function of reading bypass data BP from the compressed table 28 and outputting it as a final check result when transition to a MAX search has performed. Hence, the output section 55 includes a command update section 55a generating a command 37 reflecting such as a check state, a check tag update section 55b updating a check tag 34, a candidate tag update section 55c updating a candidate tag 35 and a bypass readout section 55d. Further, a data packet, containing parameters 34, 35 and 37 updated by the output section 55, an ID 32 included in inputted check-continuation information 33 and a search object key 21, is provided from the output interface 56 as the check-continuation information 33 to a check device 50 disposed on the downstream side of the pipeline and performing a check of the next stage.

When bypass data BP is not set at the compressed table 28, if a command 37 indicating a check finish is received, the check tag update section 55b of the output section 55 outputs the address of the mask data of the next stage subsequent to the maximum partial entry 26 of the mask data 28 as check data 34, and controls the pipeline of the check device 50 continuing a MAX search.

Moreover, the check device 50 of this example includes an update unit 60 for adding or deleting an entry by updating the mask data 28a and the address table 28b, and a table write unit 61 for writing an updated table 28 into the memory 11. The operation of the update unit 60 will be explained below in more detail.

Processing in check device

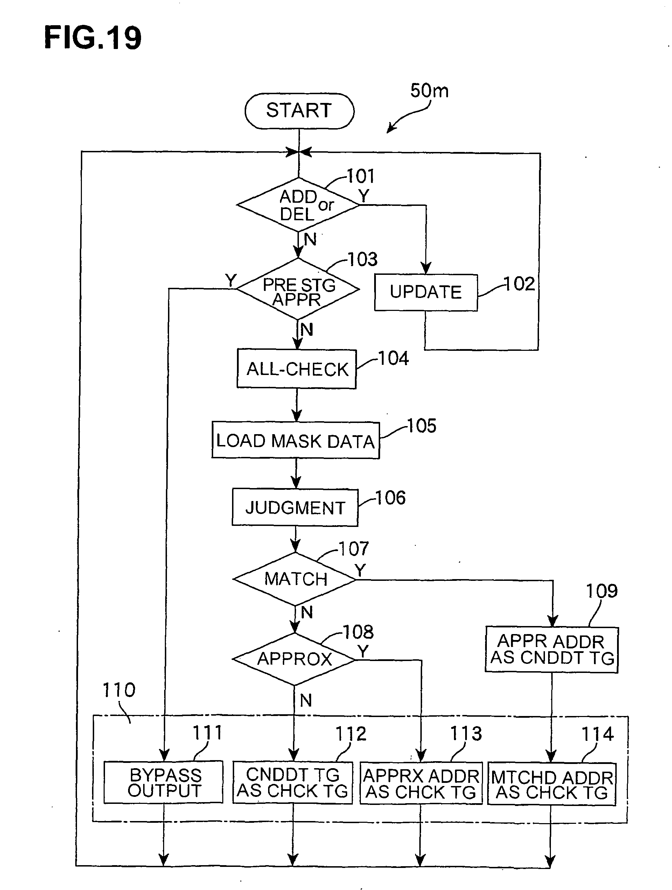

FIG. 19 shows a flow chart of a check process (check method) 50m in a check device 50. In these check devices 50, each of the check devices 50 is in charge of a single check stage. The check process 50m of FIG. 19 shows a processing at a single check stage (current stage). In step 101, if the command 37 represents an addition or deletion of an entry, the table 28 is updated by the update unit 60 in step 102 (update step and update process). In step 103, if it is judged from the command 37 that the check at the preceding stage of the current stage is finished with approximation, the check steps 104, 105 and 106 of the current stage to be described hereinafter are bypassed, and at step 111 included in outputting step 110, a bypass data BP is outputted to the bypass bus 39 shown in FIG. 16 by the bypass readout unit 55d to finish the check (bypass step).

In the case where it is judged from the command 37 that the check of the current stage is to be continued, at step 104, the partial-object key 36 of the current stage is compared by the comparison unit 52 (entire check step). In step 105, the mask data 28a of the current stage is loaded by the loading unit 53 (pattern loading step), and at step 106, the check result of the current stage is obtained by the judgment unit (VLD unit) 54 (judgment step or VLD step). Next at step 107, if there is a matching partial entry 26, since it means a check-continuation, at step 109, a candidate tag 35 is updated by the candidate tag update unit 55c (candidate address memorizing step), and at step 114 included in 110, the check tag 34 is updated by the check tag update unit 55b, and the command 37 is set in the check-continuation by the command update unit 55a to output (outputting step).

If there is no matching partial entry 26, the check is finished as a general rule. However, at step 108, if an approximate partial entry 26 (maximum partial entry) exists, the process proceeds to step 113 included in 110, and the check tag update unit 55b sets the tag address subsequent to the approximate partial entry 26 into the check tag 34 to outputs the same. At step 108, if there is no approximate partial entry 26, at step 112 included in step 110, the check tag update unit 55b sets a candidate tag 35, which is obtained in an upstream check stage and transmitted with including in the check-continuation information 33, into the check tag 34 to output the same to the bypass bus 39. Thus, a MAX search is initiated.

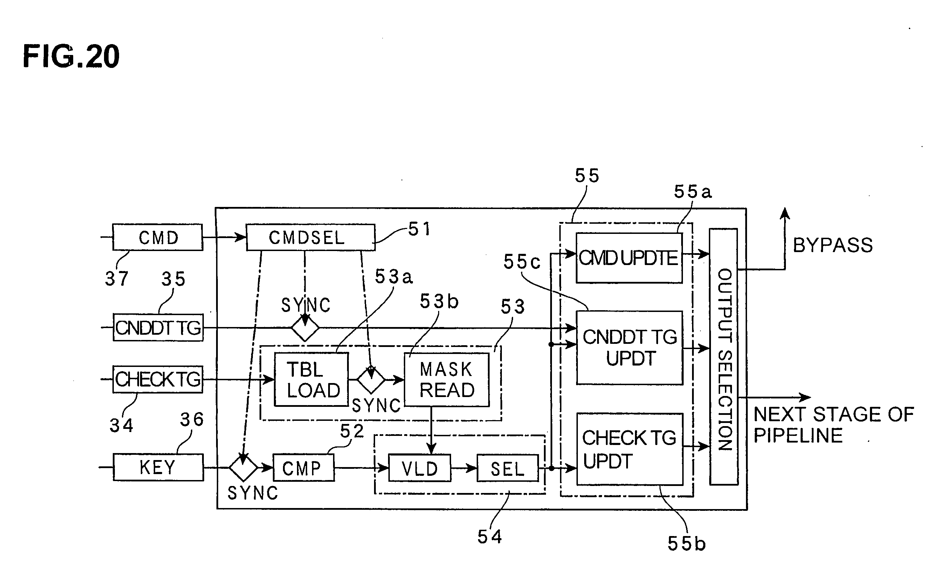

In the check method 50m provided with these steps, the steps that can be processed independently are actually executed in parallel. For instance, the steps 101 and 102 of analyzing a command, and the step 104 of comparing a partial-object key 36 are independent processes from the step 105 of loading mask data, thus they can be executed in parallel. The phase of loading a table is an SDRAM access, thus time consuming, and the overhead of the memory access can be alleviated by executing that phase in parallel with a comparison phase. Hence, even if a special memory having an extremely high reading speed is not used, the check device 50 of this example can acquire a sufficient search speed. Further, since the phases of updating parameters different from each other are mutually independent, and at the outputting step 110, the command update unit 55a, check tag update unit 55b and candidate tag update unit 55c are mutually independent, the process can be executed in parallel. Therefore, as shown in FIG. 20, in the case of a usual check mode, such as the table load 53 and the comparison 52 are executed in parallel in the check device 50.

The loading unit 53 of this example loads a compressed table 28 on the SDRAM memory 11 into the table buffer 59 inside the check device 50 in response to an instruction of the check tag 34. Not all data of the compressed table 28 are used, but at least mask data 28a and the value of one or two addresses of an address table 28b are referred to. Thus it is more effective to read from the SDRAM 11, which is a shared resource between the check devices 50, only once in a burst read and reads out required values from the inside of the check devices, rather than the occurrence of two or three times of reading from the SDRAM 11. As described above, it takes time to burst-read from the SDRAM, therefore the phases from the phase of the table load to the phase of the mask data readout are executed in parallel with the comparison phase. Though details will be described below, in the case of providing a data cache for the SDRAM 11, the table buffer stored in the check device 50 is unnecessary. Even in this case, it is more efficient to copy data locally and access the same, rather than to execute access to the data cache, which is a shared resource, a plurality of times.

Configuration of comparison unit

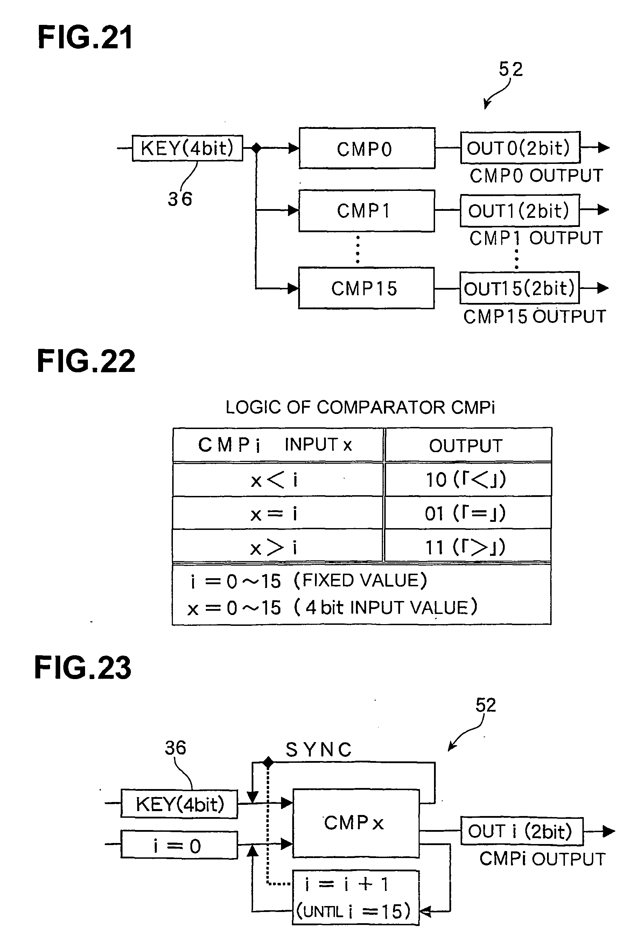

FIG. 21 shows a comparison unit 52 in more detail. In this comparison unit 50, the number of bits of a partial-object key 36 is fixed, and thus the number of entries of one table is also fixed. Moreover, since the table is a compressed table, the correspondence of an entry with a bit pattern is fixed. Thus, the comparison of the value of the partial-object key 36 and each entry can be configured by a fixed logic circuit.

This check device 50 performs comparison of 4 bits. Due to this, the check device 50 has 16 comparators CMP0 to CMP 15. The comparator CMP0 (entry number 0) performs comparison between an input search object key 36 and a value 0, the comparator CMP1 (entry number 1) performs comparison between the input search object key 36 and a value 1, and the comparator CMP15 (entry number15) performs comparison between the input search object key 36 and a value 15. In this way, each comparator CMPi performs comparison between an input value x and a fixed value i. That is, the comparator CMPi (i is anyone of 0 to 15) is a characteristic logic circuit regarding a corresponding entry.

The comparison unit 52 can be configured by other hardware such as one utilizing a lookup table LUT instead of the comparators, therefore the configuration is not limited thereto.

As shown in FIG. 22, each comparator CMPi receives four bits of an object key as an input value x, and each CMPi compares the bits with characteristic value i. Each CMPi outputs one of the three values (2 bits) of "<", "=", or ">" as a CMPi output in accordance with the comparison result of an input value x and a characteristic value i. Each comparator CMPi is configured as an optimized circuit which is logically compressed so as to output a comparison result on the bases of this comparison logic.

FIG. 23 shows another example of the comparison unit 52. Considering that it takes time for the processes from a table load phase to a mask readout phase executed in parallel, there is a case in which 16 comparators CMPi as described above are not necessarily arranged in parallel. FIG. 23 shows a configuration wherein a comparison operation is repeated 16 times by one comparator CMPx. If there is a balance of processing time with other processing, hardware can be reduced. It is natural that in view of the balance with the time taken for the phases from the table load phase to the mask readout phase, a required number of comparators CMPi used in the comparison unit is not limited to one and may be two or more.

Configuration of judgment unit

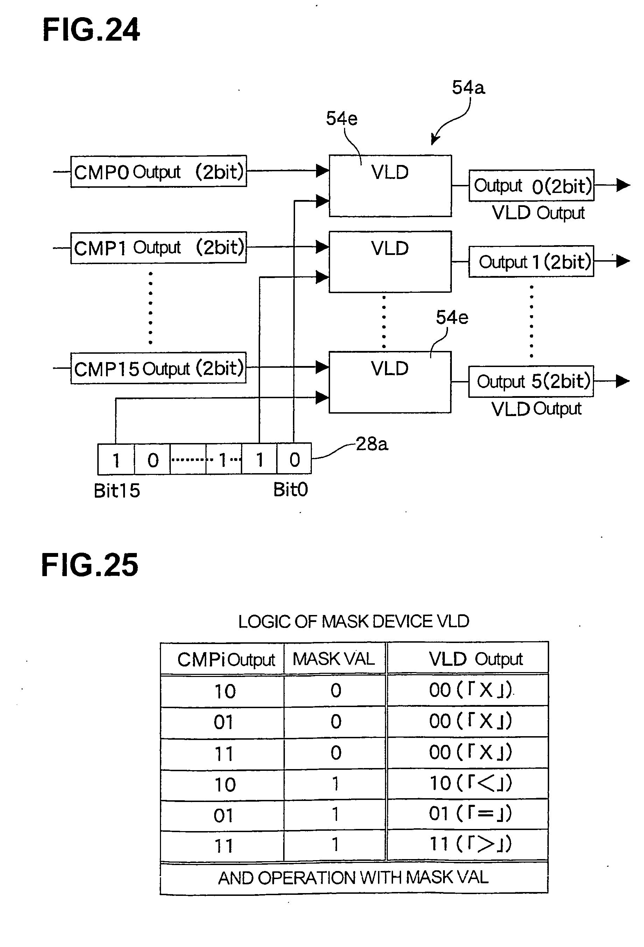

FIG. 24 shows a configuration of the mask device 54a of the judgment unit 54. In the mask phase, a mask processing of ineffective entries is executed by the mask device VLD 54a. Each mask element 54e serving to mask an entry has the same logic circuit for each entry. Mask data 28a expresses effectiveness or ineffectiveness of each actual entry (partial entry) 26 in a mask value of one bit. By the mask data 28a, the comparison result of ineffective units are extracted from the comparison result of respective entries (virtual entries), and is converted into the result of comparison with registered entries 26.

As shown in FIG. 25, each mask element 54e receives an input of total 3 bits of a CMPi output (2 bits) of the comparison phase and a mask value (1 bit), and provides an output of four values (2 bits) of "X", "<", "=", and ">". Here, "X" means an ineffective entry, and "<", "=" and ">" means respective effective entries.

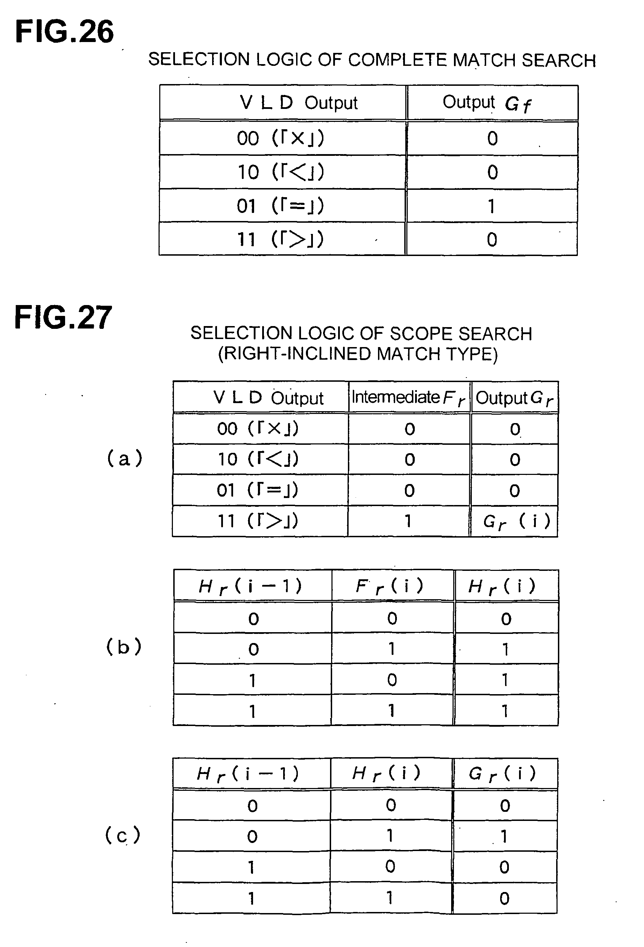

FIGS. 26 to 28 show a selection logic of the selection circuit 54b of the judgment unit 54. The VLD output of each entry after a mask phase has one of four states of "X" (ineffective), "<" (key 36 < entry 26), "=" (key 36 = entry 26), and ">" (key 36 > entry 26). In the selection phase, the check result of the complete match search or scope match search is obtained from theses VLD outputs, and an entry coupled to the next stage is selected. The selection logic shown in FIG. 26 is a selection logic of complete match search, and an entry where the output of a mask device VLD is equal to "01" is selected. An output function $G_f(i)$ indicating a complete match, an output function $S_f$ indicating whether or not there is an entry whose output $G_f(i)$ equal to 1, and a function $N_f$ indicating an entry of complete match are as follows:

$$G_f(i) = \overline{Bit1} * Bit0$$

$$S_f = \Sigma G_f(i)$$

$$N_f = G_f^{-1}(1)$$

(inverse function obtaining i where $G_f(i) = 1$)     (1)

As shown in FIG. 26, an output of $G_f(i)$ (an output indicating a complete match) becomes "1" only for an entry whose VLD output is "01". Hence, by obtaining an entry number whose $G_f(i)$ is 1, an entry $N_f$ of complete match can be obtained. In the binary bit tree method, a redundant registration of an entry never occur. Hence, of 16 outputs of $G_f$

(i), if there is a complete match entry, it is assured to be unique. The selection of "=" with the output $G_r(i)$ is also used in a check-continuation processing of a scope search.

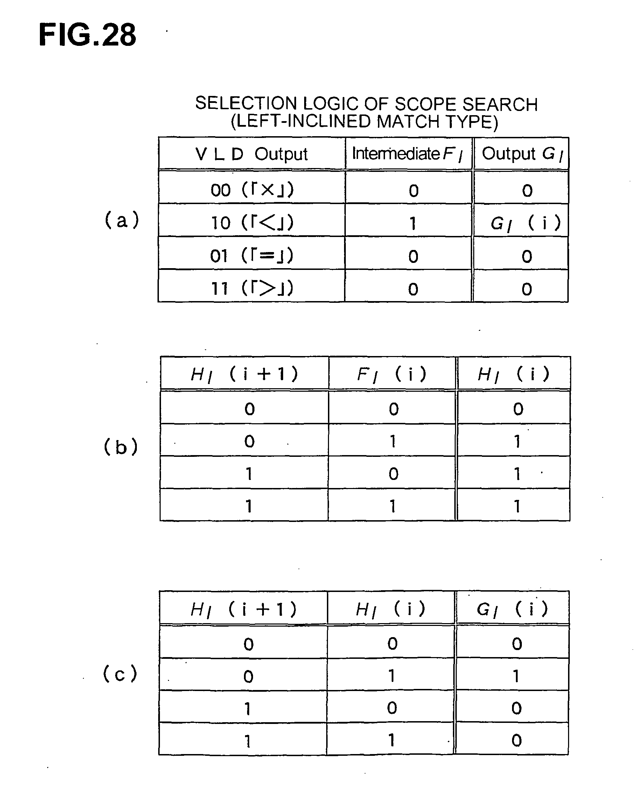

FIG. 27(a) shows the check-continuation selection logic of a right-inclined complete search type scope search, and FIGS. 27(b) and 27(c) respectively show the logic of obtaining an output of approximation candidate with an intermediate output and a recurrence formula. Further, FIG. 28(a) shows the check-continuation selection logic of a left-inclined match search type scope search, and FIGS. 28(b) and 28(c) respectively show the logic of obtaining an output of an approximation candidate with an intermediate output and a recurrence formula. In the case of a right-inclined match search, an output $G_r(i)$ indicating an approximation candidate, an intermediate output $F_r(i)$, a recurrence formula $H_r(i)$, an output $N_r$ indicating an entry number of an approximation candidate, and an output $S_r$ indicating the presence or absence of an entry whose output $G_r(i)$ becomes "1" are as follows:

$$F_r(i) = Bit1 * Bit0$$

$$H_r(1) = 0 \text{ (virtual initial value of recurrence formula)}$$

$$H_r(i) = H_r(i - 1) + Fr(i)$$

$$G_r(i) = \overline{H_r(i - 1)} * H_r(i)$$

$$S_r = \Sigma G_r(i)$$

$$N_r = G_r^{-1}(1)$$

$$(G_r(i) = \text{reverse function for obtaining i where } G_r(i) = 1)... (2) \tag{2}$$

Further, in the case of a left-inclined match search, an output $G_1(i)$ indicating an approximation candidate, an intermediate output $F_1(i)$, a recurrence formula $H_1(i)$, an output N1 indicating an entry number of an approximation candidate, and an output SI indicating the presence or absence of an entry whose output $G_1(i)$ becomes "1" are as follows:

$$F_1(i) = Bit1 * Bit0$$

$$H_1(16) = 0 \text{ (virtual initial value of recurrence formula)}$$

$$H_1(i) = H_1(i+1) + F_1(i)$$

$$G_1(i) = H_1(i+1) * H_1(i)$$

$$S_1 = \Sigma G_1(i)$$

$$N_1 = G_1^{-1}(1)$$

$$(G_1(i) = \text{reverse function for obtaining i which becomes 1}) \tag{3}$$

In the case of a scope search, a check-continuation means the selection of "key 36 = entry 26" as same as the case of a complete match, and a check finish means the selection of the maximum entry in which "key 36 > entry 26" holds when the scope search is executed in a right-inclined match manner. When the scope search is executed in a left-inclined match manner, the minimal entry in which "key 36 < entry 26" holds is selected. Hence, in the case of a right-inclined match, the intermediate output $F_r(i)$ of an entry alone whose VLD output is "11" becomes "1", and in the case of a left-inclined match, the intermediate output $N_r(i)$ of an entry alone whose VLD output is "10" becomes "1".

In the scope search, regarding the $G_r(i)$ indicating an approximation candidate, only the maximum value entry (entry whose entry number is the maximum) of the entries whose output $F_r(i)$ is "1" becomes "1", and the output $N_r$ indicating an entry number of the approximation candidate becomes definite.

Likewise, In the case of a left-inclined type, regarding the $G_1(i)$, only the minimum value entry (entry whose entry number is the minimum) of the entries whose output $F_1(i)$ is "1" becomes "1", and the output $N_1$ indicating an entry number of the approximation candidate becomes definite.

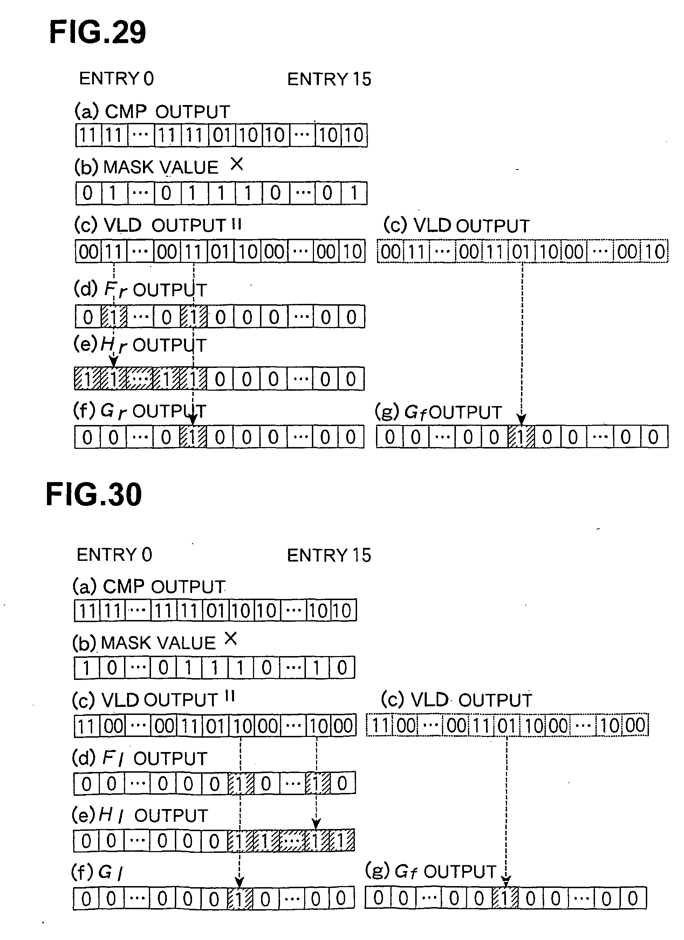

FIG. 29 shows a change in output in the case of a right-inclined match type. FIG. 29(a) shows an output of a CMPi after a comparison phase, and FIG. 29(b) shows mask data 28a read out from a table. FIG. 29(c) shows a VLD output which is obtained by (a)X(b) for each bit. FIG. 29(d) shows an extraction (intermediate output) $F_r$ of an entry group which satisfies "key value > entry value", and an intermediate output $H_r$ of FIG. 29(e) is an extraction of a right edge (the maximum entry which satisfies "key value > entry value") from the output $F_r$. FIG. 29(f) shows a final output $G_r$ which outputs the maximum entry satisfying "key value > entry value" with using the output $H_r$. In view of this as well, it is apparent that the entry whose $G_r(i)$ is "1", i.e., the entry which becomes an approximation candidate, is one.

FIG. 29(g) shows an output $G_r$ of match search, which extracts a match entry satisfying "key value = entry value (01)" on the basis of a VLD output. In this check method, there is no redundant registration into the table 28 structurally, thus it is apparent that this matching entry is unique. Regarding the outputs of not only $G_r$ but also $G_f$, as a result of operation, the corresponding entry does not exist or only one exists.

FIGS. 30(a) to 30(g) show an change in output in the case of a left-inclined type. Like the right-inclined type, the entry of an approximation candidate in which GI(i) of 16 GI outputs becomes "1" is assured to be only one.

Configuration of output unit

In the output unit 55, each parameter is updated on the bases of the above check result obtained from the judgment unit 54. The check tag update unit 54b updates a check tag 34 in accordance with an entry number (output $N_f$) obtained by the selection circuit 54b. Upon the output $S_f$ obtained by the selection circuit 54b, if the output $S_f$ becomes "0", the update is not executed. This is because a candidate becomes definite without an entry which enables a check continuation. If the output $S_f$ is "1", tag information (address) corresponding to the entry $N_f$ is read from the address table 28b of the compressed table 28 of the current stage which has been loaded.into the check device 50, and the check tag 34 is updated. In the compressed table 28, mask data 28a is stored at "word position + 0" is, and tag information 28b is recorded starting from the "word position + 1".

In the candidate tag update unit 55c, the candidate tag 35 is updated in accordance with an entry number (output $N_r$) obtained by the selection circuit 54b. Upon looking the output $S_r$ which is the candidate update information, if the output $S_r$ is "0", the update is not executed. This is because there is no entry which becomes a new candidate. If a candidate update information $S_r$ is "1", tag information corresponding to the entry $N_r$ is read from the compressed table of the current stage which has been loaded into the check device 50, and the candidate tag 35 is updated. Here, it is effective to record the candidate stage information indicating a check stage into the candidate tag information 35 as well as the tag information. This candidate stage information is set in the position of a table stage corresponding to the candidate tag. That is, this information represents that to which table stage the candidate tag exists. This candidate stage information is required, in the classification device 15 in which a pipeline is fixed with a number of check stages, at bypass processing after the determination of a candidate.

In the case where the table 28 is arranged so that the position of the table stage can be determined uniquely from the tag address, the candidate stage information is contained in the candidate tag information, thus another processing is unnecessary. If not so, the check device 50 maintains the information on which stage number of tables it is in charge of processing, and according to this information, sets the information of the next stage in the candidate tag information 35 as the candidate stage information. In the case of using the check devices 50 with coupling in a pipeline, since the position of the table stage is designated by the check device ID, it is sufficient to know of the IDs of its own device and the check device in the next stage of the pipeline. Since the relation with the check device of the next stage of the pipeline is fixed, the check device ID has only to be set during initialization of the check device. It is more simple to include the check stage ID in the tag address of the table, rather than using the check ID of the next stage. In the case of performing a control of a data cache with using the data cache, the tables have addresses grouped by every stage position, which can be available.

The command update unit 55a updates a command 37 provided to the next stage in accordance with the output $S_f$ which is the check-continuation information obtained by the selection circuit 54b. If the output $S_f$ which is the check-continuation information is "0", this means that the check-continuation is lost and the candidate becomes definite. Hence, "COM = MATCHRDBP" is outputted. With this, in the check device 50 of the next stage, bypass processing is performed on the basis of the check tag information 34 which matches the candidate tag 35, and the final result is outputted. If the check-continuation information $S_f$ is "1", this indicates check-continuation, thus "CMD = MATCHEXEC" is outputted. Due to this, in the check device of the next stage as well, the check is continued by the check tag 34.

The output unit 55 determines an output destination in accordance with the value of the next command 37 determined by the command update 55a. If the next command 37 is "CMD = MATCHEXEC", the check continues. Thus, the packetized check-continuation information 33 is outputted to the check device 50 of the next stage. If the next command 37 is "CMD = MATCHFIN", this represents output processing after bypass readout, thus the output is sent through to the next (outputting device) of a smaller check device 50 of the final stage. If the through output is outputted sequentially through the pipeline, the final output is sent to the next check device 50. If the through output is shortcut through a bus 39, the finial output is outputted to the bus 39.

If the next command 37 is "CMD = MATCHRDBP", the check is finished and the candidate becomes definite, so the bypass processing using the candidate tag information 35 is executed, and the search result becomes definite. At this processing, the candidate tag information 35 does not always indicate the table of the next stage, but may indicate a stage of upstream side. Hence, it is not always possible to output to the check device 50 of the next stage, the check device 50 of the stage of dealing with the candidate tag is designated with using the candidate stage information, and the check-continuation information 33 is outputted.

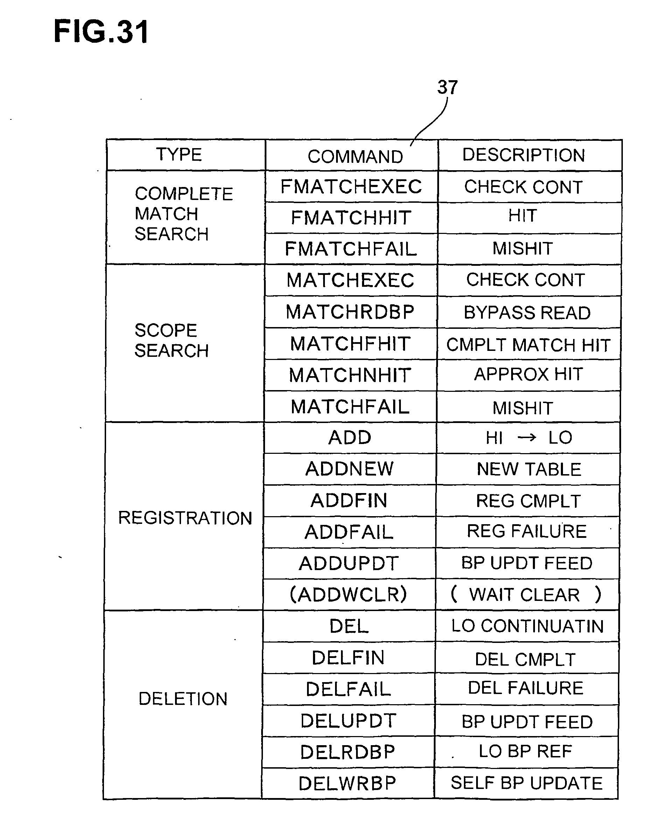

FIG. 31 shows the list of commands 37. Note that this list includes registration and deletion to be described later in addition to a complete match search and a one-dimensional scope search.

Bypass process and shortcut process

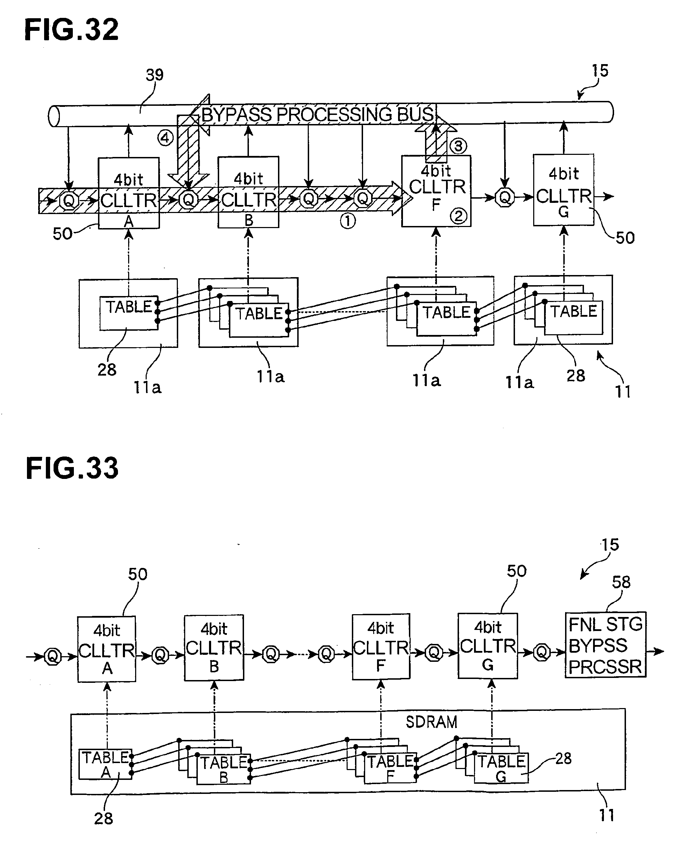

FIG. 32 illustrates a bypass process of a back track being processed in the classification device 15 shown in FIG. 16. This classification device 15 is provided with a bypass bus 39, and generates a back track by outputting check-continuation information 33 to the bus 39. The classification device 15 shown in FIG. 16 is of a memory isolation type for improving a memory access time. Therefore, the table 28 indicated by a certain tag address is only accessible from the check deice 50 of the corresponding stage. However, the candidate tag information 35 obtained upon transiting to the execution of bypass processing (candidate determination) belongs to one check device 50 behind its own device regardless of the next stage on the check device pipeline. Thus it is configured to be able to go backwards along the process pipeline through the bypass bus 39 in accordance with the candidate tag 35.

FIG. 33 illustrates a bypass process being executed in the classification device 15 provided with a shared memory type check-device pipeline shown in FIG. 15. In the case of the classification device 15 with the shared memory type check-device pipeline, since every check device 50 can access any table 28 stored in the memory 11, no bypass bus for a back track is needed. In the shared memory type check-device pipeline, the check device 50 of the next stage executes the bypass process. Therefore, in order to cope with the occurrence of the bypass process at the next stage of the final stage, a bypass processor 58 dedicated to a bypass is positioned next to the check device 50 of the final stage. In the case of a check-failure in the F-th check device 50, i.e., in the case where a candidate tag bypass process has occurred at the next stage by determining a finally updated candidate out of the A to F-th check devices 50, the G-th check device 50 performs a bypass process. Although the G-th check device 50 essentially configures the processing pipeline of the table 28 of a certain stage, it can access the table 28 of any stage because of a shared memory type. Hence, in the case where a check fails in the F-th check device 50, a candidate becomes definite and a bypass process is executed by the G-th check device 50, a candidate in any position of the tables B to G can access the table.

When a bypass process is finished to obtain the result tag information (final check result), the subsequent check device 50 executes only through of the result tag information. In the G-th check device 50 of the final stage, a check-continuation means a search success (complete match entry), and a check-failure means that a candidate tag indicating either one of the tables B to G and the result tag is obtained. In the case where the search succeeds with a check-continuation occurring at the G-th check device 50, the tag information outputted from the check device 50 is result tag information, and the bypass processor 58 of the final stage having received the same updates only a status as a search finish, and the bypass process is unnecessary.

On the other hand, in the case where a candidate becomes definite at the G-th check device 50 with a check-failure occurring, there is a possibility that the candidate tag information 35 may be tag information indicating either one of the tables B to G. Hence, the bypass processor 58 executes a bypass process, accesses the table 28 from the entry indicated by the candidate tag information 35 to read out the bypass value (BP), and sets a status in a search finish. In the case where the candidate becomes definite at the G-th check device 50 and the candidate tag information is updated at the G-th check device 50, the tag written in the table G becomes the result tag information. Due to this, the updated candidate tag information is result tag information, i.e. the final check result. Hence, only "status = search finish" is established at the bypass processor 58 and the bypass process is unnecessary.

In summary, the bypass processor 58 passes through its input if the input is result tag information. If not so, the tag information indicating either one of the tables B to G is obtained, thus the bypass processor 50 executes a bypass process. The identification of result tag information is executable by using the higher order bit of the tag address as identification information or by providing information to the data flowing through the pipeline.

In the case of a repetitive classification device 15 as shown in FIG. 17, every check device can access any table, so no bypass bus is required as likely as described above. Further, in the case of a repetitive type, it is possible to set the counter value for control to the value meaning a bypass process, and execute the bypass process by its own device as a part of a repetitive processing, thus the bypass processor 58 is unnecessary.

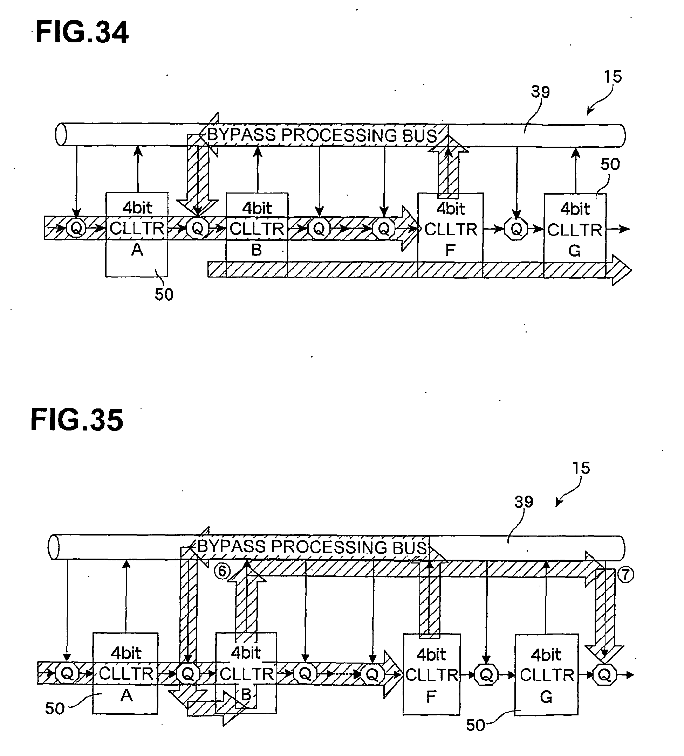

By the way, the tag information obtained by the bypass process is the final result, and the check device pipeline after the bypass process is passed through up to the final stage and becomes the output of the classification device 15. In addition, likewise in the case of a check mismatch (search failure) in a complete match search, or a check mismatch or candidate absence (search failure) in a scope search, the check device pipeline after its own check device is passed through with the status of search failure. If there is no back track for bypass processing, in the classification device 15, an order of inputting a search object key 21 and an order of outputting the check result thereof are assured, but the order of inputting and the order of outputting are not assured to be the same since the back track for bypass processing is permitted. For this reason, an ID32 is set into the search object key 21 and provided. Therefore, in the case of passing through, as shown in FIG. 34, there is no need to pass through the check device pipeline, and as shown I FIG. 35, it is made possible to shortcut the check device pipeline by using the bypass bus 39 for this purpose.

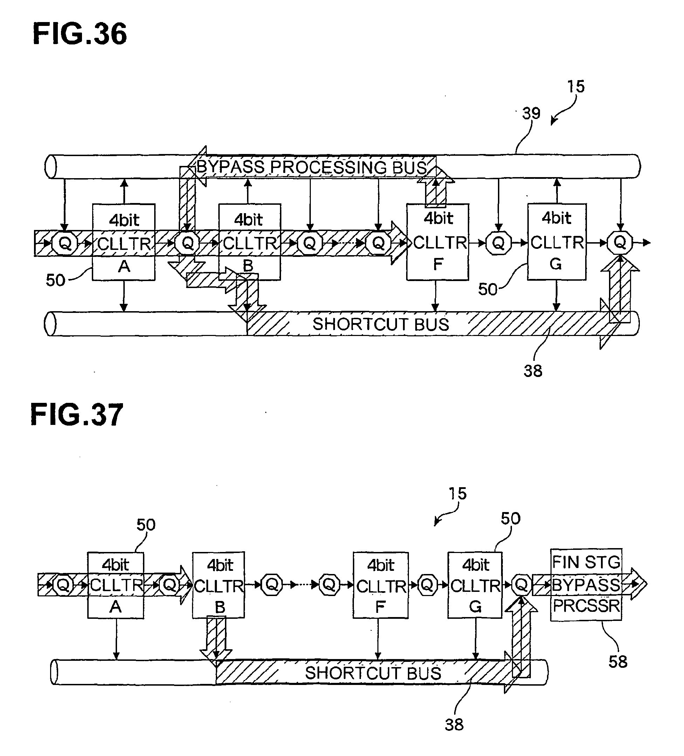

Further, since the shortcut destination is always the final output section, as shown in FIG. 36, a shortcut bus 38 may be provided independent of the bypass bus 39. Because occurrences of shortcuts and bypasses are nearly equal, it is not necessary to increase the load of the bypass bus for a fixed destination. If the utilization factor of the bypass bus 39 for the bypass process drops below 50%, there is an advantage in that hardware is not increased if the bypass bus 39 is used for shortcutting as well.

The classification device 15 having the shared memory type check device pipeline does not require a bypass bus. Because of this, as shown in FIG. 37, it is preferable to newly provide a shortcut bus 39. In the case of the repetitive type classification device, a repetitive finish can be judged after the bypass process on the basis of a counter value for control, and a shortcut path is not necessary.

Management of search table (update processing)

Hereinafter, the process of adding or deleting an entry 22 (update step or update process) in the table update unit 60 of the check device 50 will be described. The compressed table 28 consists of the mask data 28a and the address table 28b. Thus, it is basically possible to update the search table 28 simply by adding or deleting a partial entry represented as a bit or flag to the mask data 28a, and a complicated process such as sorting, normalization, etc. is not required. Owing to this, the management of the search tables is greatly simplified, and processing is performed at a high speed. Therefore, the management of the table 28 such as a registration or deletion of an entry is executable in parallel with the check process of a search object key 21. That is, in the classification device 15 of this example, it is possible to execute a deletion (registration) and a search in parallel by a check device pipeline in which check devices 50 are coupled in a pipeline. There is the exception that a bypass value BP prepared on the search table is needed to be updated because of adding an entry, in which some process is required for that decision. Further, a process for creating a new search table is required. However, once the bypass value BP is set into the search table 28, in the check processing, the process after the determination of an approximation candidate can be shortcut. Due to this, though it takes time to update, it is meaningful to set the bypass value BP when updating the search table.

Firstly, assuming that the management and search process of the table 28 are executed in parallel in the check device pipeline, the exclusive management for maintaining the consistency during the check is required. In the search (check) process too, if the table 28 to be processed is occupied, the maintenance of the consistency becomes easier. However, the serialization in higher order tables of a tree becomes bottleneck, and parallel execution of the check process may be inhibited. Therefore, in the search process, parallelism is employed during the search process by an access of "exclusion is confirmed, but the table is not occupied". In addition, in the registration and deletion process, namely, in the table update process, the consistency is maintained by an access of "exclusion is confirmed and further the table is occupied". Note that between the search process and the registration (deletion) process, serialization is performed with executing the queuing of exclusive confirmation by the subsequent search process for the occupation of the preceding registration (deletion).

The search process is executed in parallel in a state of "exclusion is confirmed, but the table is not occupied" as described above. Due to this, in relation with the registration and deletion process, the search process have not to overtake with the exclusive management for the preceding registration and deletion process. Regarding the subsequent registration and deletion process, a problem is caused from the parallelism in a higher order structure of the search process, it cannot be dealt with in the search process which is of a lower order structure, and the dealing thereof is omitted.

The registration process is serialized in a state of "exclusion is confirmed, and further the table is occupied" and executed sequentially in units of tables. Further, the bypass information of each table should be updated, and because the information is transmitted from a lower order to a higher order, the transmission from a lower order to a higher order should be executed in some from during the registration process. Conceivable methods thereof include the queuing method of waiting at a higher order and feeding back from a lower order, and the method of going down from a higher order to a lower order and returning from the lower order to the higher order with a bidirectional link. In the case of the queuing method, a certain queuing mechanism has to be realized by a hardware resource, and this is advantageous in terms of a processing speed although the number of parallel things and table stages is limited in accordance with the amount of resources. It is also possible to wait not by a queuing mechanism using hardware but by a memory. However, there is a possibility that the advantage in terms of the processing speed becomes lost because of an increase in memory access. In the case of a bidirectional link method, although there is no limitation occurred from resource amount, this method has disadvantages in terms of the peripheries of the memory due to an increase in memory area for one table, and an increase in memory access caused from link readout (influence on the processing speed).

Registration process using queuing method

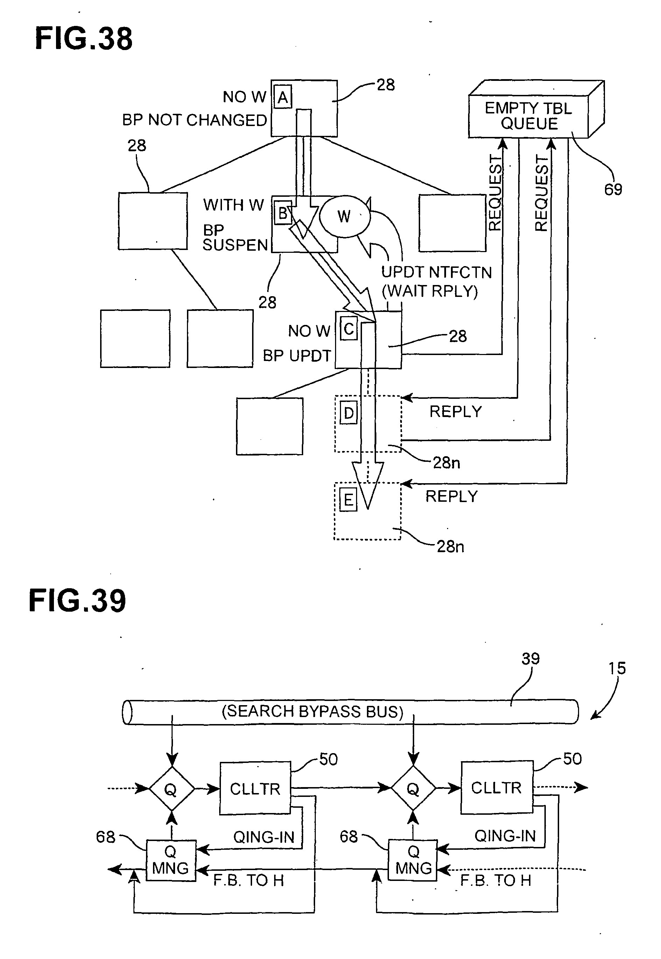

FIG. 38 illustrates the outline of a registration process using a queuing method. In this method, a binary bit tree made into tables is updated with proceeding down from above along the tree. At this time, the table 28 in which the update of a bypass BP is determined is updated in "waitless (no W)", and the table 28 in which a bypass BP is not determined waits in "waiting (W)" state. In the case of reaching the stage in which a new table 28n has to be made, after making the new table 28n, the connection with a new table 28n below that stage and the feedback to the table 28 which is waiting (W) (waiting for bypass BP being determined) in a higher order are executed in parallel.

In FIG. 38, in table A, assuming that a partial entry 26 of an entry 22 to be added is an existing one (existing entry), and the partial entry 26 of the entry to be added (registered) is not the MAX entry (maximum entry). In this case, no matter how the registration of an entry into lower order tables is executed, it does not affect the value of bypass BP in table A, thus the bypass value BP does not need to be updated. Hence, a BP update in "waitless (no W)" is unnecessary.

Assuming that a partial entry 26 of an entry 22 to be added to table B is an existing one (existing entry), the partial entry 26 is the MAX entry of table B. In this case, the bypass value BP might have to be updated with depending on the result in a lower order. Due to this, until a lower order is determined, it is not determined whether the update of the bypass BP of table B is required or not, thus the state becomes "waiting (W)" with waiting an update in a lower order.

In table C, assuming that a partial entry 26 of an entry 22 to be added is a new one (new entry), and the new entry 26 is the MAX entry. In this case, this table requires the update of the bypass value BP. In this stage, since the bypass value BP is updated, the higher order table 28 is notified of this. The table B in "waiting" state receives the notification from the lower order and updates the bypass value BP, and further if a waiting higher order is present, this is informed to it. In this example, the table A is a "waitless" state, thus the notification to the higher order i.s unnecessary.

The flow from the table C downwards is executed in parallel with the feedback to the higher order described above. Because at the table C the next stage is judged to be a new table 28n, requesting for an empty table management queue 69. In response thereto, the tag address of a table to be a table D is transmitted and accepted. Further, a flag of a new partial entry 26 is added to the mask data 28a of the table C, and a new entry tag is written in the address table 28b. Since tables downwards from the table D are always new, address of the new tables are requested for the empty table management queue 69, and the data received for the request is written in respective mask data 28a and address tables 28b. At the same time, corresponding bypass value BP is updated.

FIG. 39 shows the configuration of registering an entry 22 in a queuing method in a check device pipeline of the classification device 15..The registration of the entry 22 is performed with going along tables and going along the check device pipeline from higher to lower order. In the case where the update of the bypass value BP is suspended, a packet recorded of required information is inputted to a queuing management unit 68 corresponding to each check device 50, and the routine proceeds to the subsequent stage. The information of "existence or nonexistence of waiting" at a parent table which is a directly upper stage is transmitted to the next stage. At the check device whose bypass value BP has become definite, if "waiting exists" in the parent table, a higher order feedback (FB) is issued. In parallel with this higher order FB, the pipeline process of registering an entry to a lower order is executed. This higher order FB is joined to the packet waiting in the queuing management unit 68, and the bypass BP that has been suspended is updated. If necessary, a further feedback is executed from the queuing management unit 68 to a higher order suspension in parallel with the process of updating the bypass value BP in accordance with the suspension release.

Process of registering entry at check device

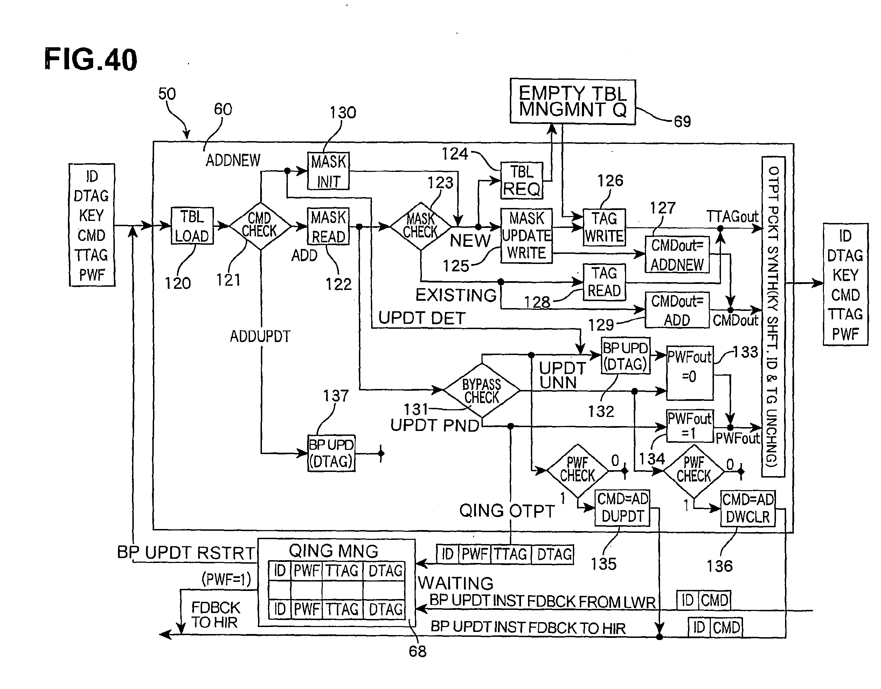

FIG. 40 shows a configuration of controlling a check device 50 when an update processing unit 60 is operated in the process of registering an entry in a queuing method. "DTAG" represents a result tag (registration data TAG). "TTAG" represents a table TAG. "PWF" represents a flag showing the existence or nonexistence of waiting in a direct upper stage (parent table). A command "ADD" is propagated with going along tags of existing entries from a higher order to a lower order, and transmitted. A command "ADDNEW" secures a new table subsequent to an intermediate stage. A command "ADDUPDT" restarts the update of the BP with the feed to a higher order. A command "ADDWCLR" indicates that the bypass value BP for the check device 50 waiting at a higher order is not changed, which leads to a waiting release.

A data packet for update is transmitted to the check device 50 through the same path as the check-continuation information 33, and the table 28 of an address instructed with a check tag 34 by a load unit 53 is loaded into a table buffer 59 (step 120). A command decoder 51 checks a command 37 (step 121), and the command 37 initiates from an additional "ADD". Firstly, a mask is read out in step 122, and it is judged whether the next stage is new or not with a key value and a mask value in step 123. If the next stage is a new one, a table 28n is requested for an empty table queue 69 in step 124, and while a reply is awaited, the update of the mask data 28a is executed in step 125. The logical add (OR) of the readout value of the mask data 28a and the value of an additional partial entry 26 is operated, and thereby the bit (flag) corresponding to the additional entry is set to 1.

If the reply having secured an empty table is obtained from the table queue 69, the address of the empty table 28n is written in the address table 28b in step 126, and the address of the empty table 28n is set into the output TTAG for propagating an additional processing. Further, the command CMD37 to be output is set to "ADDNEW" in step 127.

If the command 37 is "ADD" and the next stage is an existing one, the table address of the next stage is read out from the address table 28b of the own table 28 in step 128, and set into the output TTAG. The command CMD37 to be outputted in step 129 remains "ADD" as the same as the input command.

If the input command 37 is "ADDNEW", the table 28n of that stage is a new table secured by the processing of the preceding stage, and thus the table initiation is executed in step 130. This is processed only for the mask data 28a, and as the mask value the corresponding entry bit is set to 1 and the others are set to 0. After initialization, the command 37 is "ADD" and the same process as in the case of a new entry is performed. In the process of transferring the registration of an entry to the check device pipeline, if once the command 37 becomes "ADDNEW", i.e., a new entry, the command 37 to be provided to the subsequent check device 50 is always "ADDNEW", and the above processing is repeated. Further, the process of updating a bypass BP to be fed back to a higher order table 28 is always executed if the command 37 is "ADDNEW".

If the command 37 is "ADD", namely, the table 28 of the current stage is an existing table, it is judged in accordance with the position of an entry in step 131. If the command 37 is "ADD", the corresponding (new) entry 26 is a partial entry of a new (TBL of the next stage is new) entry 22, and which is the maximum entry (MAX entry update), the update of the bypass value BP becomes definite. If the command 37 is "ADD", the corresponding (new) entry 26 is a partial entry of a new entry 22, and which is not the maximum entry, the bypass value BP is determined to be invariant. If the command 37 is "ADD", the corresponding entry 26 is an existing one, and is not the maximum entry, the bypass value BP is determined to be invariant. In the case where the bypass value BP becomes definite, if it is to be updated, it is updated in step 132, and an output PFW is set to "0" in step 133. On the other hand, if the command 37 is "ADD", and the corresponding entry 26 is an existing one and the maximum entry, in order to determine whether the update of the bypass value BP is required or not in accordance with a low-order circumstance, a packet is registered in the queuing management unit 68, and the update of the bypass value BP pends. In the case that the update is pending, the output PWF is set to "1" in step 134.

In the case where update is unnecessary or update is determined, since the status is fixed, it is judged whether the waiting exists or not in the higher order with reference to the input PWF. If there is a waiting higher order, the feedback is outputted to the queuing management unit 68 upper by one stage. In the case where update is determined, the command is set to "ADDUPDT" in step 135, and in the case of update unnecessary, the command is set to "ADDWCLR" in step 136, and it is instructed whether the update is necessary or not in the higher order.

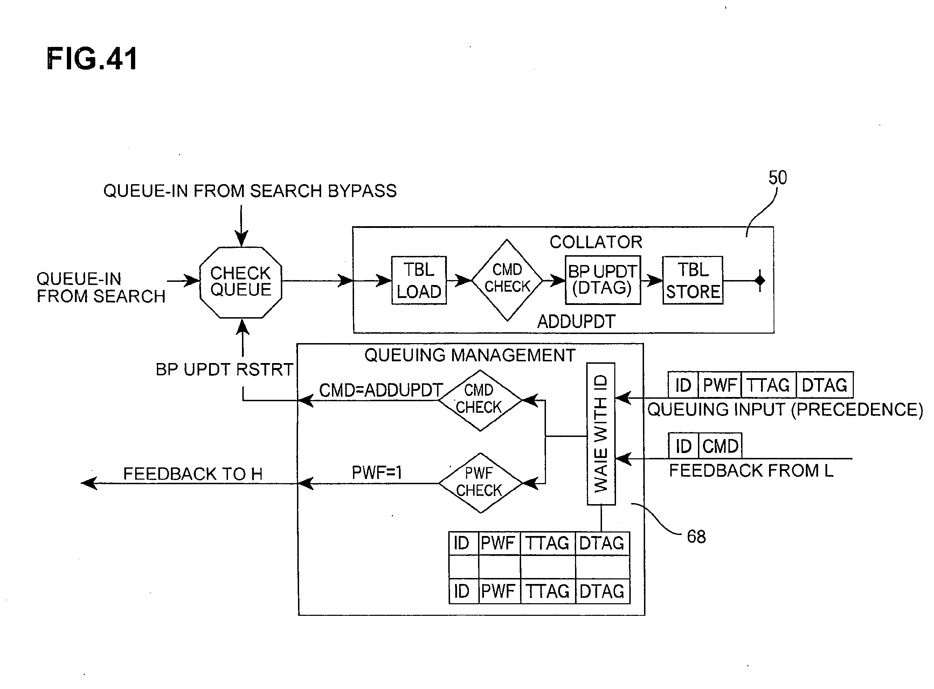

FIG. 41 shows the operation of the queuing management unit 68 in more detail. The queuing management unit 68 executes a queuing process, a update restarting of the bypass value BP thereafter, and parallelization of upper feeds. If the command is "ADDUPDT", this means that the bypass BP is updated at a lower order stage, the update of the bypass value BP is restarted in step 137. For this, a packet is inputted into the queue of the check devices 50. If the command is "ADDWCLR", there is no update of the bypass value BP in a lower order, and the packet of the queue is discarded, except that the process of feeding to the next higher order is executed. Further, independently from the process using the command, if the output PWF (whether the waiting exists in the higher order or not) is "1", it is fed to a higher order. At this time, the ID and CMD from a lower order are fed to a higher order without changing.

If the command 37 is "ADDUPDT", the check devices 50 execute the update processing of the bypass value BP in waiting. The feed to a higher order is executed by the queuing management side, and thus the check devices 50 discard the packet after the update of the bypass value BP.

Registration process by bidirectional linking

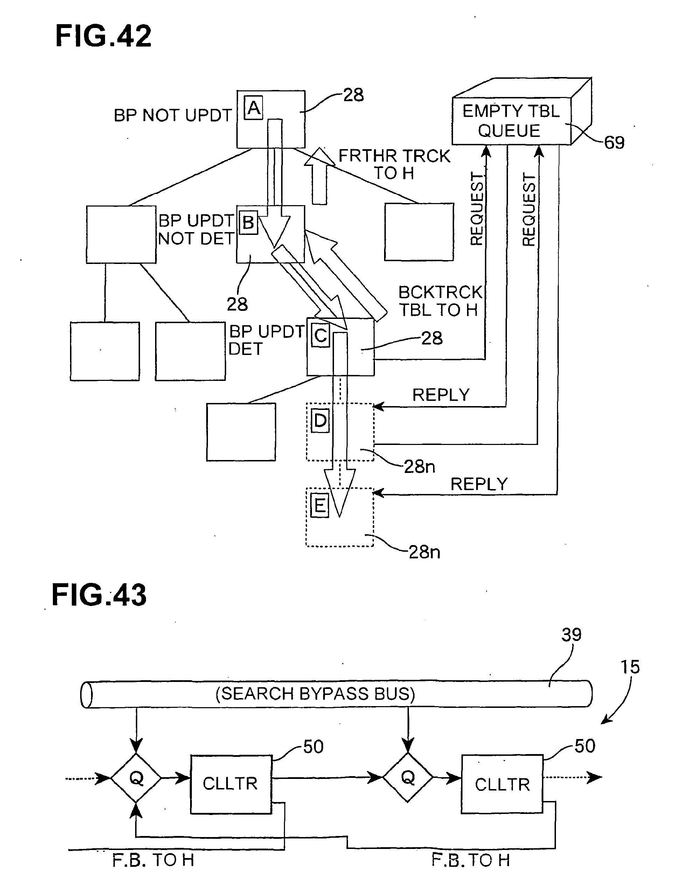

FIG. 42 illustrates the outline of a registration process by bidirectional linking method. The correspondence to the bypass in this method is to execute an entry registration while going along from up to down with executing an update process at the table in which the update of the bypass value BP is determined. At the table in which the update of the bypass value BP is not determined, the process goes to a lower order without setting a "waiting" like a queuing process. After reaching a stage of making a new table, the linking of new tables lower than the stage and the feedback to the waiting for the determination of the bypass value BP of a higher order table while going along a bidirectional link are executed in parallel.

In the table A of FIG. 42, the entry is an existing one and is not the MAX entry, so the bypass vale BP in the table A is not updated regardless of lower orders. In the table B, the entry is an existing one and corresponds to the MAX entry. Hence, there may be a BP update depending on the result at the lower order. Until the lower order is determined, a determination as to whether the update of the bypass value BP of the table B is required or not is pending. In the table C, the entry is a new one and this new entry becomes the MAX entry. Hence, at the table C, the update of the bypass value BP is required. Since the bypass value BP has been updated, this is informed to the higher order (goes to the higher order table B with using a bidirectional list). At the table B tracked back, the bypass value BP is updated with information from the lower order, and further tracking back is performed. The tracking back from the stage where there is no need to update the bypass value BP is ended. On the other hand, the flow from the table C downwards stages is performed in parallel with the tracking back to higher orders of the waiting process, as in the case of registration in the queuing method.

FIG. 43 shows a configuration of registering an entry 22 in a bidirectional linking method in the check device pipeline of the classification device 15. Due to a feedback to a higher order with tracking back the bidirectional link, the queuing management unit is not provided with. Although the feedback FB to the higher order is a dedicated path in this drawing, a search bypass bus 39 can be shared if the bus efficiency is not affected. The tracking back to a higher order by the bidirectional link is a feedback to a higher order table (the proceeding check device 50 of the pipeline) which is always directly linked, unlike the bypass processing (linked to any higher order) upon searching, thus a connection using a dedicated path is used herein. The registration of the entry 22 proceeds through the tables while going along the check device pipeline from a higher order to a lower order. The check device 50, in which the update of the bypass value BP has been executed, issues a higher order feedback FB through the bidirectional link. At this time, like the queuing method, the tracking to a lower order table (link of new tables) is executed in parallel with a higher order FB.

In this bidirectional linking method, also, the parallel processing includes two parallel processes, including the flowing to lower orders and the feedback to higher orders after the determination of the bypass value BP. Although the higher order feedback is not completely parallel, it can parallelize with the pipeline to some extent. When updating the bypass value BP with a feedback, a higher order table link is read out soon, and a furthermore higher order feedback can be issued with branching form the process of updating the bypass value BP. However, due to the number of queues increases in relation with a search and a search bypass, the arrangement of parallelization of the pipeline of the higher order feedback should be considered after considering the overall performance.

Process of registering entry in check device

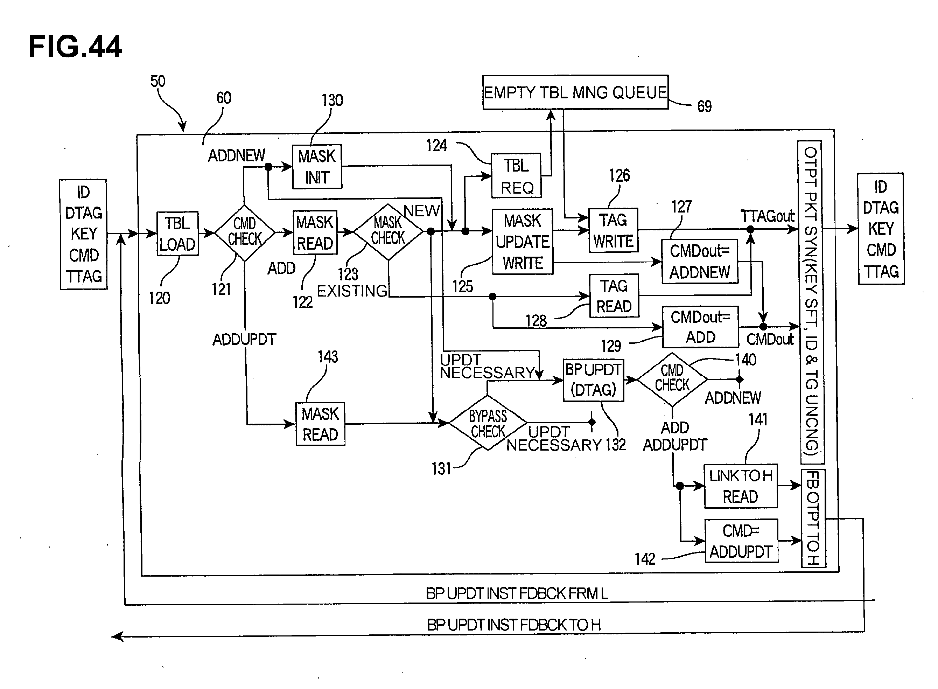

FIG. 44 shows the configuration of a control of the check device 50 when an update processing unit 60 is operated in the process of registering an entry in a bidirectional link method. The processing of steps 120 to 132 is the same as that of the queuing method, and so a description thereof will be omitted. The update of a bypass value BP is executed in the cases where the command 37 is "ADDNEW", and the command 37 is "ADD" and a new entry is the MAX entry. In the former case, the feedback to a higher order is unnecessary. This is because the feedback is finished at the table of the stage where the command 37 is changed from "ADD" to "ADDNEW". Therefore, the command is checked in step 140, and in the latter case, an upper link is tracked back in step 141, and the feedback with "ADDUPDT command packet" is outputted to the higher order table in step 142. Further, when "ADDUPPDT packet" is obtained, mask data is read in step 143, and the update of the bypass value BP is judged in accordance with whether the corresponding entry is the MAX entry or not. In the processing from a higher order to a lower order, the registration of the entry is finished, and the entry is always an existing entry at the point of time when "ADDUPDT" is received. In the case where the update of the bypass value BP is executed, an additional feedback to a higher order is executed. In the highest table, a higher order link is NULL, and in this case, the feedback is finished.

Deletion processing by queuing method

Deletion processing is a kind of update processing, and also processing that sequentially executes for the tables constituting a serialized tree in units of tables in a state of "exclusion is confirmed, and the table is occupied". The relation with a search process is also the same as above described. In the case of deletion processing, there is an update of the bypass value BP transferred from a lower order to a higher order as in the case of registration, and in the queuing method, the tracking to a higher order is executed by the queuing mechanism as in the case of registration. Unlike the registration processing, in the case of the deletion processing, the update of the bypass value BP cannot be determined at the time of an entry search from a lower order to a higher order. In the case where the number of entries becomes 0 in a lower order, that table is released and a higher order is informed of this. Further, the entry of the higher order is deleted, and if necessary, a process flow of updating the bypass value BP is carried out. This processing is a process of propagating from a lower order to a higher order. As compared to the registration, the update of the bypass value BP is the same, however, the table deletion is propagated to a higher order, and thus the deletion is rather complicated.

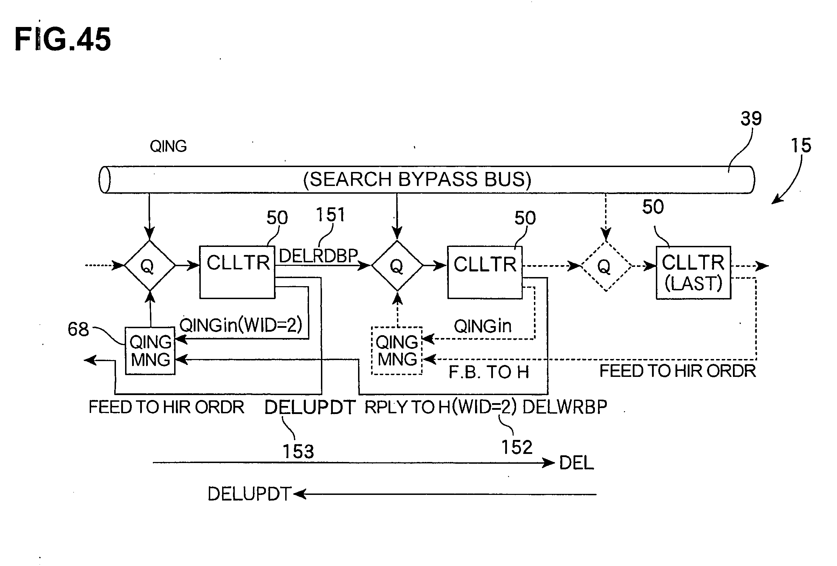

As shown in FIG. 45, in the queuing method, when the command 37 is deletion "DEL", as propagating from higher to lower order, a waiting holds at each stage, and the bypass value BP is updated with setting command 37 to "DELUPDT" from the lowest order toward a higher order, and the information of the table deleted is fed. This basic flow is almost the same as the registration processing of the queuing method. In the case of the deletion process, if the table becomes empty and released at a lower order, the deletion of an entry in a higher order, and accompanying this, the bypass value BP is updated. For instance, if the table becomes empty, the final check device 50 is decoupled from the pipeline. If the table is not empty, it is only required to reflect the update information of the bypass value BP in a lower order to a higher order. When the table has become empty, the deletion of the table in a lower order is followed by the deletion of an entry in a higher order bit. As the result of deleting the entry in a higher order, a bypass value inquiry occurs which inquire to a lower order of the entry giving a new bypass value BP for updating the bypass value BP. This is because the bypass value of the entry giving a new bypass value BP is not obtained from the information in its own table. The bypass value inquiry (BP inquiry) for a lower order when the command is "DELUPDT" is a unique process which does not exist in the registration process and exists only in the deletion process.

The BP inquiry to a lower order is executed by the following flow. When the update of the bypass value BP is followed by the entry deletion in step 151, an inquiry for a lower order with a command "DELRDBP" is generated to wait for a packet of a reply waiting. A lower order check device 50 reads out the bypass value BP of its own table if it receives the command "DELRDBP", and feedbacks by sending the command "DELWRBP" to the higher order in step 152. Firing occurs between a reply waiting, a new bypass value BP is written which is obtained by an inquiry as the processing of command "DELWRBP". Further, the update information of the bypass value BP is fed back to the higher order with using the command "DELUPDT" in step 153.

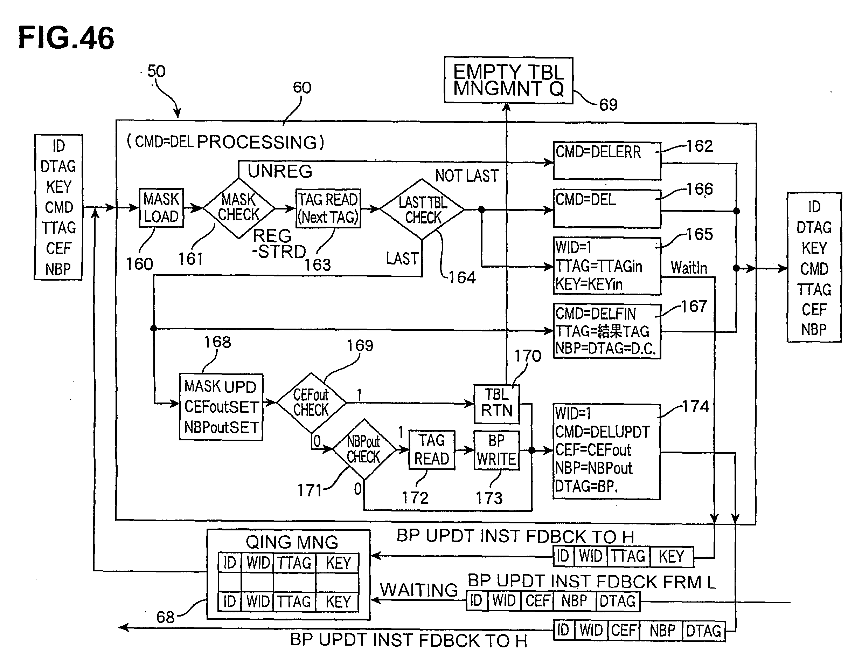

FIG. 46 shows the configuration of a control of the check device 50 when the update process unit 60 is operated in the processing of deleting (command is "DEL") an entry in the queuing method. Firstly, in step 160, the table indicated as an input parameter TTAG is loaded, and mask data 28a is read. In step 161, the mask data 28a and an entry (partial entry) to be deleted are checked, and as a result, the object entry is unregistered, the command 37 is set to "DELERR" and the deletion result is finally output in step 162.

The tag information of the next stage is read in step 163, and it is determined whether its own table is at the lowest stage or not in step 164. If its own table is not at the lowest stage, a feedback waiting packet from a lower stage (including ID, WID = 1, TTAG (its own table tag), and KEY (its own table entry key) is inputted to the queuing management unit 68. In step 166, the command "DEL" (including ID, TTAG = NextTAG, KEY = SHIFT) is outputted to the check device 50 of the next stage.

On the other hand, if its own table is at the lowest stage, the Next tag corresponding to the entry, namely, the result tag is read out, and finally output as the result of deletion in step 167. In the case where it is no good for a reply to return before the deletion completion including the update of the bypass value BP, the result tag is loaded on a higher order feedback to flow it, and then finally output at the time point completely returned to the highest stage. Next, the entry is deleted in step 168. It is only required to delete the entry of the mask data 28a of the table 28. After the deletion of the entry, if the cumulative sum (addition set) SUM-MASK of the mask data 28a is "0", a flag CEF is set to "1" (the table has no entry), and if the SUM-MASK is "1", the flag CEF is set to "0" (the table has an entry left). Further, the flag NBP is set on the basis of comparing the mask data 28a before entry deletion with the mask data 28a after entry deletion. If the deleted entry is an entry which gives a bypass value BP, the flag NBP is set to "1", namely, a BP update.

If the flag CEF is judged to be "1" in step 169, its own table becomes an empty table, thus the own table is returned to the empty table management unit 69, and the flags NBP and DTAG of the packet are set to "DC" (don't care).

On the other hand, if the flag CEF is "0", the flag NBP is checked in step 171, and the entry (MAX entry) which gives a new bypass value BP is selected from the remaining entries in step 172. In step 173, the bypass value BP is updated to the tag information (final result information (result tag)) corresponding to the new BP entry. Further, the flag NBP (effective bypass) of the packet is set to "1", and the bypass value BP (new bypass TAG value) is set for DTAG. Note that in step 171, if its own entry is not a BP entry, the update processing of the bypass value BP is unnecessary, and in step 174, the firing packet of a feedback to a higher order is outputted with using the command "DELUPDT".

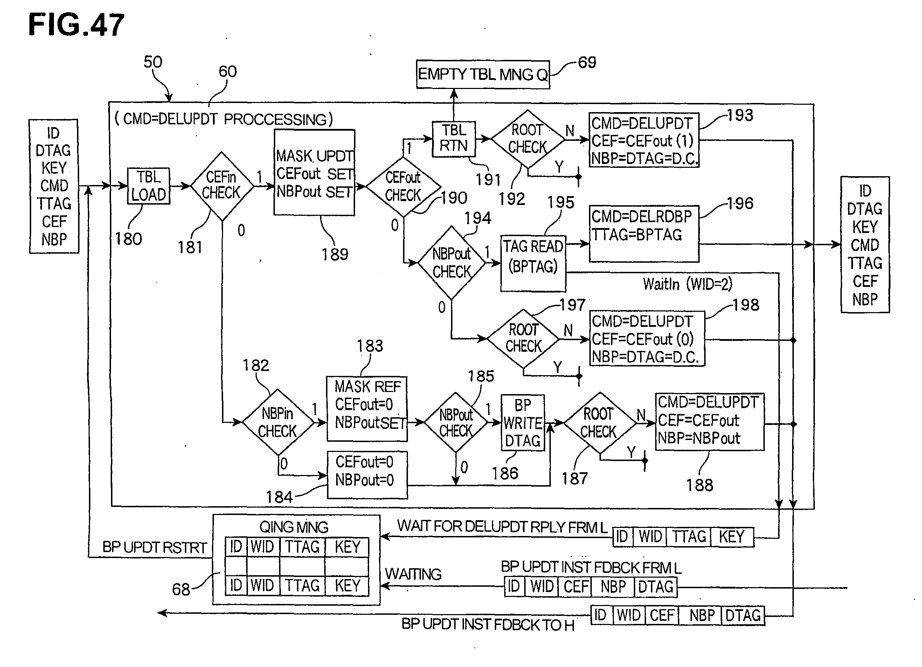

FIG. 47 shows the process of an update unit 60 in a check device 50 when the command 37 is "DELUPDT". When the command "DEL" is passed from a higher order to a lower order, the check device 50 having gone into a waiting state to receive the command "DELUPDT" from the lowest stage, as a trigger of which this process is fired. Firstly, a table is loaded in step 180. In step 181, if the flag CEF fed back from the lower order is "0", the lower order table is not in a deleted state, and thus the deletion of an entry of the own table is unnecessary. If the flag CEF is "0", the flag NBP from a lower order is checked in step 182. As a result of the checking, if the bypass value BP of the lower order table has been changed, the self flag BNP is set in accordance with the mask data 28a of its own table and the entry to be deleted in step 183. Further, if the self NBP is "1", that is, the entry of its own table is a BP entry (MAX entry) in step 185, the bypass value BP is updated in step 186. If the lower flag NBP is "0", the self NBP is also set to "0" in step 184, and the bypass value BP is not updated. In step 187, it is determined whether its own stage is the highest order or not. If not the highest order, feedback to the upper order waiting is executed in step188.

On the other hand, if the flag CEF fed back from the lower order is "1", it means that the lower order table is deleted, and thus the entry deletion of the own table is performed in step 189. If the flag CEF is "1", NBP and DTAG are DC because the lower order table is disappeared. According to the deletion of the entry of the own table, the bypass value BP is updated. Further, if the own table is empty (SUM-MASK = 0) after the entry deletion, the flag CEFout is set to "1" in step 190 and the own table is released in step 191. It is confirmed whether the stage is the highest stage or not in step 192, and then feedback to a higher stage is executed, except in the case where the own table is the highest table (root table), in which case, the table deletion is not performed. The root table is not deleted even if it is empty. The higher order queuing does not exist for the root, thus the feedback is not carried out.

After deleting the entry, if the own table is not empty, that is, the flag CEFout is "0", a new BP entry (MAX entry) is selected in step 194, and the bypass value BP is read from a lower order corresponding to the new BP entry in steps 195 and 196. According the circumstance of the check device pipeline, the next sm all-check device 50 carries out the readout of the bypass value BP in such a manner that the readout is awaited by the queuing management mechanism. The waiting side inputs a queuing packet (ID, WID = 2, TTA, KEY), and a client side to a lower order issues with using the command "DELRDBP". If it is not the MAX entry, it is confirmed whether it is the root or not in step 197, and feedback to a lower order is executed in step 198.

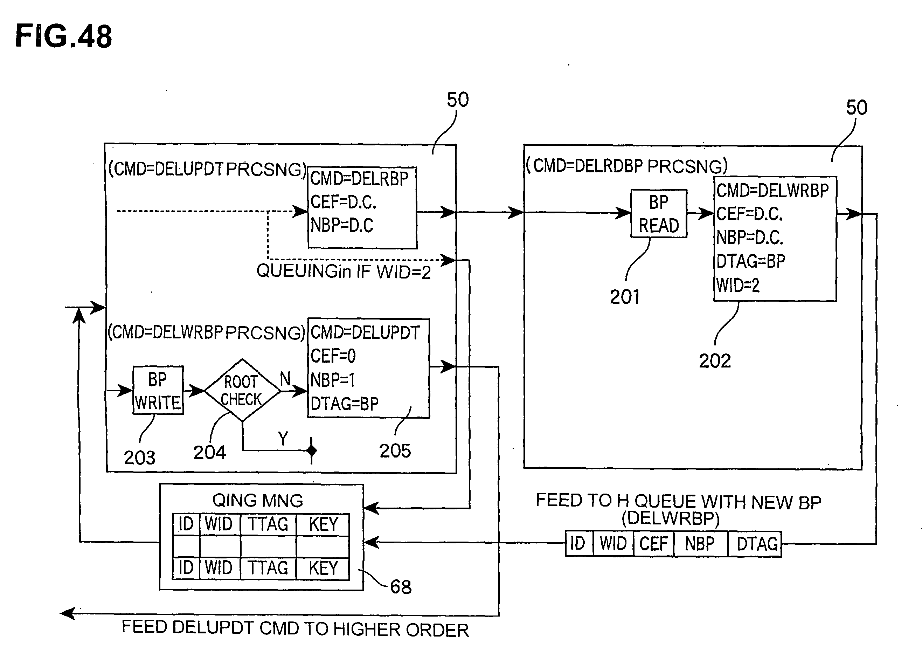

FIG. 48 shows the process when the command is "DELRDBP" and "DELWRBP". According to an instruction from the command "DELUPDT" for a higher order, the command "DELBP" is sent to a lower order. If the command is "DELRDBP", the bypass value BP is read out in step 201, and set to DTAG in step 202. In addition, because a higher order is awaiting the readout of the bypass value BP, a queuing firing packet (ID, CMD = DELWRBP, DTAG = BP, WID = 2) is inputted into a higher order queuing managing device 68.

After the waiting packet from its own command "DELUPDT" and the command "DELRDBP" from a lower order has completely been executed, the command instruction fired by the packet is "DELWRBP". Because a bypass value BP is included in DTAG from the lower order, a DTAG value is written in accordance with TTAG indicating its own table in step 203. As the bypass value BP is determined in its own table, a higher order feedback is restarted with using the command "DELUPDT" in step 205. However, as the same as the command "DELUPDT", it is checked whether it is the root table or not in step 204. If it is the root table, a higher order feedback is not carried out because there is no further higher order.

Deletion using bidirectional link method

In this method there is not difference in that firstly, an entry is tracked forth from a higher order to a lower order and down to the lowest order with a command "DEL" by the complete match search. The update of a bypass value BP from the lowest order to a higher order with using a command "DELUPDT" and the feed of table delete information are executed with the feeding using a bidirectional list, and a queuing mechanism is not used. Therefore, the flow is almost identical to that shown in FIG. 45. However, the command for a higher order is fed not to the queuing management unit but to the check device 50.

Further, as for the BP update at a higher order followed by the table deletion at a lower order, it is executed with using the commands "DELRDBP" and "DELWRBP" as in the case of the queuing method, but this process is also executed with a flow movement using a bidirectional list. In the case of the queuing method, since a key value (entry to be deleted) of its own table is maintained in a waiting packet, KEY does not matter in the feedback from a lower order. However, in the bidirectional link method, the use of KEY of the corresponding stage has to be able for each upper feed with using the command "DELUPDT". Hence, not but KEY consumption (deletion) caused by the shift from a higher order to a lower order with using the command "DEL", a reference position of the key value is shifts with using SHIFT, and the key value of the corresponding stage is obtained with using reverse direction SHIFT when the command is "DELUPDT". That is, in the case of a 4-bit, 8 stage table, the key value has a KEY field of 32 (4x8) bits, and the reference position is shifted from higher order bits to a lower order bits in executing the command "DEL", and the reference position is shifted from lower order bits to higher order bits in executing the command "DELUPDT".

Therefore, if the command is "DELUPDT", a higher order tag is obtained with using a higher order link on the bidirectional list. As described above, KEY is a structure which is always capable of accessing a key value of the corresponding stage with shifting the reference position. Similarly in the case of inquiry of a bypass value BP to a lower order with using the command "DELUPDT", the acquisition of a higher order table tag with using a link to a higher order and the shift of a proper reference position of a KEY value are carried out. Hence, the inquiry of a bypass value to a lower order is carried out in almost the same way as the queuing method with using the bidirectional link.

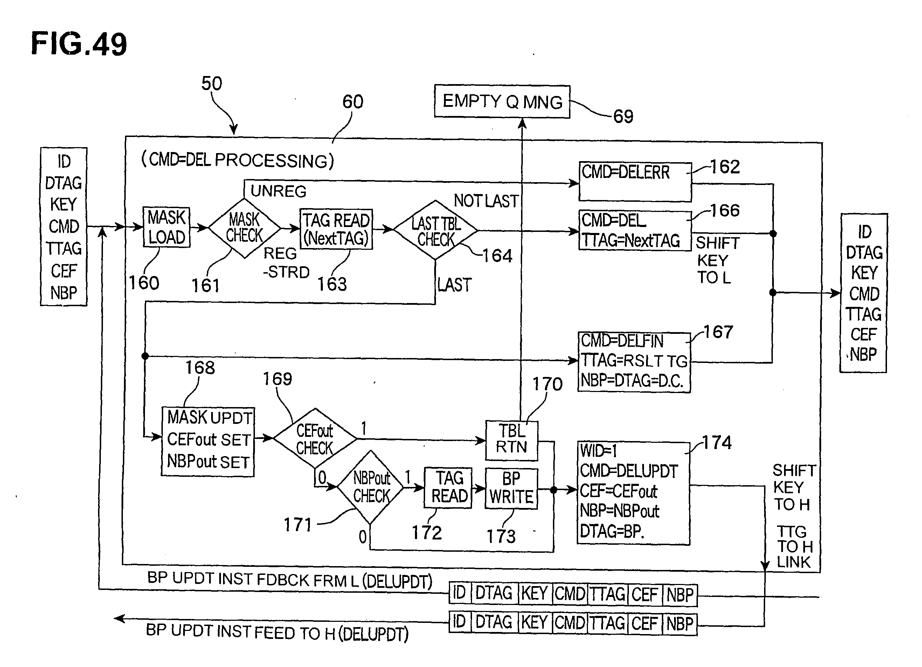

FIG. 49 shows a configuration of a control of the check device 50 when the update process unit 60 is operated in the process of deleting an entry (command is "DEL") in a bidirectional link method. Since this method does not use the queuing management unit, the process is executed under almost the same control except that step 165 is omitted from a control system shown in FIG. 46. In step 174, when a higher order feedback is outputted with using the command "DELUPDT", the tag address TTAG of a destination designates a higher order table with using a higher link, and the entry key is reverse-shifted in a higher order direction to match it with the table stage position.

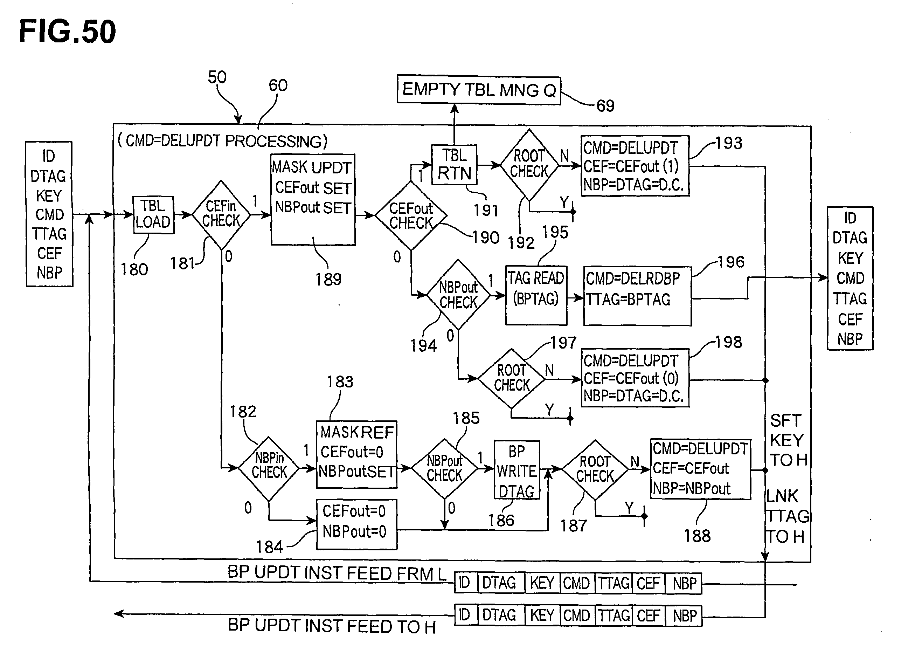

FIG. 50 shows the process of a bidirectional link method of an update unit 60 in the check device 50 when the command 37 is "DELUPDT". This process is also executed under the same control as in FIG. 47 except that the queuing management unit is not used. Note that in the same manner as described above, upon feedback, the tag information TTAG of a destination designates a higher order table with using a higher order link, and the entry key is reverse-shifted in a higher order direction to match it with the table stage position.

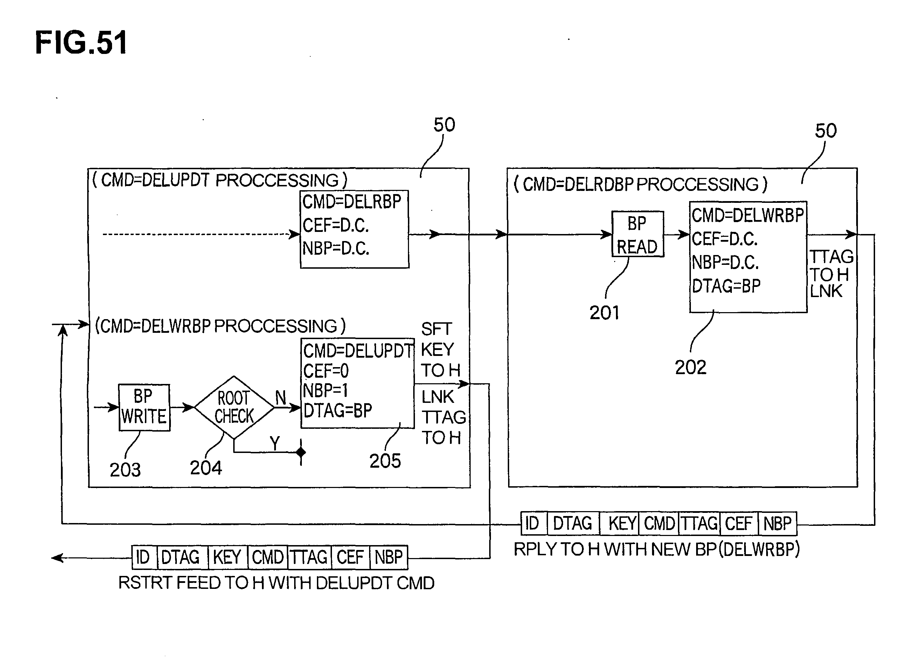

FIG. 51 shows the process using a bidirectional link method when the command 37 is "DELRDBP" and "DELWRBP". This process is also executed under the same control as in FIG. 48 except that the queuing management unit is not used.

As described above, in the present invention, the processes such as sorting and normalization are unnecessary for the management of tables in accordance with the addition and deletion of an entry, and thus the delay of a check process caused by the addition and deletion of an entry is considerably reduced as compared to the prior art. The relation between an entry and a rule in a scope search are described in detail in the explanation of right-inclined approximation and left-inclined approximation. For instance, if an existing entry is [ai, infinite] [bi + 1, infinite] (i is a plural number), (a plurality of) rules of the entries hit by a' are added to the rule of [a', infinite], and (a plurality of) rules of the entries hit by b' + 1 are added to the rule of [b' + 1, infinite] when a new entry [a', infinite] [b' + 1, infinite] are added (before registration). If the existing entry is [ai, infinite] [bi + 1, infinite] (i is a plural number), the corresponding rule is subtracted from the entry included in [aj, bj] (after deletion) when deleting is [aj, infinite] [bj + 1, infinite].

Classification device with data cache

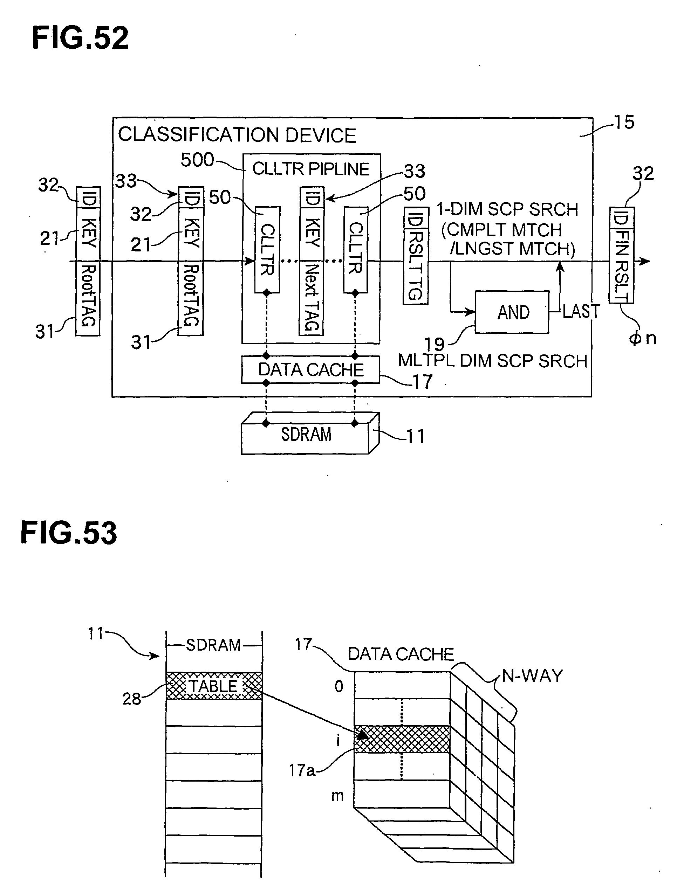

FIG. 52 shows the schematic configuration of a classification device 15 with a data cache 17. The data cache 17 is arranged between each of the check devices 50 of a check device pipeline 500 and an SDRAM 11 as a memory. As shown in FIG. 53, the data cache 17 of this example is a N-way set associative cache (N-way is generally two-way or four-way), and the size of a cache line matches the burst transfer size of the SDRAM 11, i.e., the size of a check table 28. By providing the cache line 17a of the data cache 17 with a single table size, the table access in the classification device 15 is efficiently executed.

Further, with introducing a memory exclusive management mechanism in unit of lines into the data cache, an exclusive use of table data on the cache memory or SDRAM is enabled. For this, the line size, line number, and set number of the cache is properly configured, and tables are allocated in accordance with the configuration, thereby the hit rate of the data cache can be increased. By employing a cache system 17, the classification can be performed at a higher speed with the use of a general SDRAM 11.

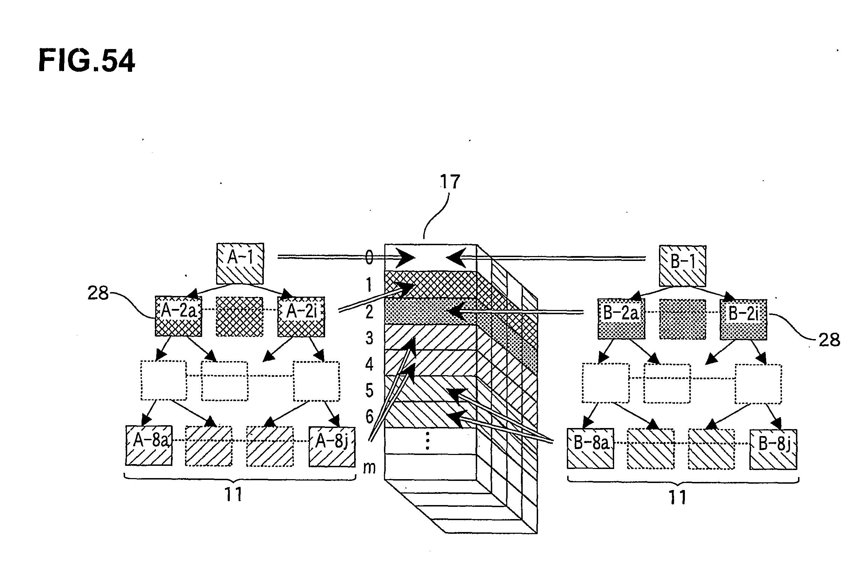

FIG. 54 shows an example of exclusively using the data cache 17 in the search type and in the checking step. In order to increase the on-cache rate for the table 28 in the cache system of this example, stages (for instance, tables A-1 and A-2) of the check tables 28 are allocated to respective different cache entries. Further, independent cache entries are allocated for respective different types of check (for instance, table A group and table B group). The search type can be simply identified by a root address 31 given from an upstream control unit or application. The number of checking steps is identical to the number of stages of the pipeline, thus it is easy to identify. Furthermore, also in the new registration of a check table, if the acquisition of a table is required, an empty table having the address of the SDRAM 11 mapped to the cache entry corresponding to the table stage position is allocated.

Since the check table 28 has a structure of a tree type table, the number of tables increases with descending to a lower order. Hence, it is preferable to allocate a plurality of cache entries to a lower stage table. In FIG. 54, a group of checking table A of A-type and a group of checking table B of B-type are on the SDRAM 11. The first stage table A-1 of the A-type checking process is secured in the address cached in the 0-th cache entry. The first stage table B-1 of the B-type checking process is also in the address which becomes the 0-th entry. These can be on-cache simultaneously since the cache entries are multiplexed in a plurality of sets.

Likewise, the second stage table A-1 of the A-type checking process corresponds to the first cache entry 1, and the B-type checking process B-2 corresponds to the second cache entry. In this case, a plurality of checks are not multiplexed into a cache entry but respective independent cache entries are allocated. If a cache is 4 sets, A-2 of all 16 tables own 4 sets of the first cache entry, and the newest four tables are on-caches. The tables A-8 and B-8 of a lower stage, particularly, the final stage are increased in number, thus it is effective to allocate a plurality of entries to one stage.

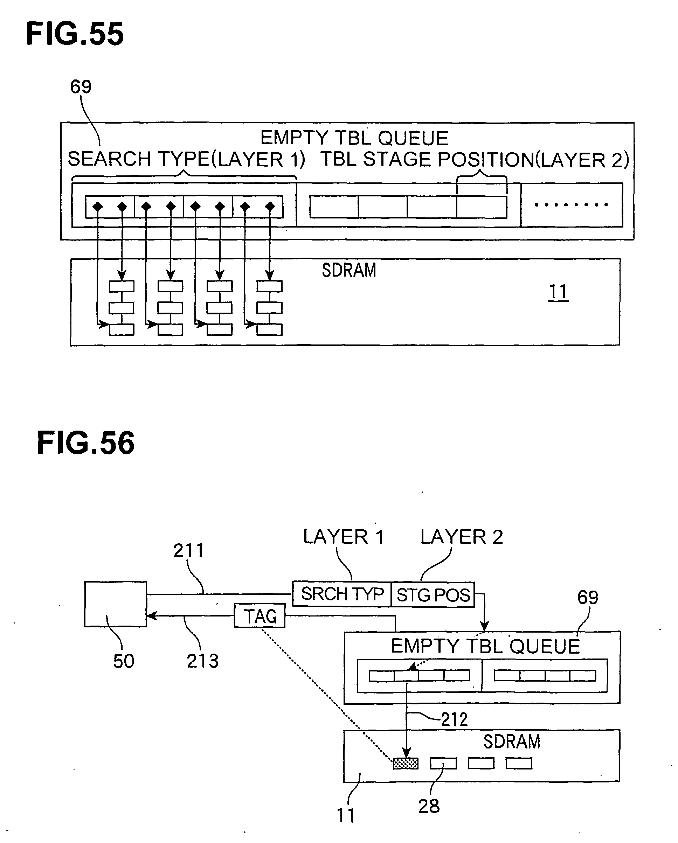

FIG. 55 shows one example in which an empty table management queue 69 manages a table 28 on the memory 11. The on-cache rate is increased by dispersing and providing the cache entries for each search type or each table stage. For this, the table 28 management side, namely, the management queue 69 needs to allocate a proper table in accordance with a table acquisition request. The empty table queue 69 manages an empty table by an individual queue classified into two layers, i.e., a search type (layer 1) and a table stage position (layer 2) included therein. At the time of the initialization of the classification device 15, the tables 28 are grouped for each cache entry, and the tables are linked to the queue in accordance with the correspondence of individual queues (of a number of search type multiplied by a number of table stages) of empty tables and cash entries set in a ROM or so (or given as a configuration from the outside).

FIG. 56 shows the reply of an empty table queue management mechanism 69. The empty table queue management mechanism 69 extracts an empty table to respond in accordance with a table allocation request (step 211) give from the check device 50 when registering an entry in a search table tree. At this time, a search type and a position of a table stage are required, thus a request packet has to be provided therewith as the request information. The management mechanism 69 takes out one empty table from the queue corresponding to the search type (layer 1) and the table stage position (layer 2) of the request information (step 212), and returns the address (tag information) to the check device 50 as a reply thereof (step 213).

In the shared memory type classification device 15 shown in FIG. 15, in the case where there exists a data cache 17 between the SDRAM 11 and the check device 50, if miss hit arises at one of data caches 17, the data cache 17 and the SDRAM 11 are occupied by this access, and other accesses becomes waiting. In the memory separation type classification device 15 shown in FIG. 15 where there exists a data cache 17 between the SDRAM 11 and the check device 50, likewise, the check device 50, data cache 17 and SDRAM 11 are occupied by this access. This is because the data cache 17 is coupled to the SDRAM 11 in synchronization (in series). Due to this, if one is delayed, that delay affects the subsequent stage. In order to increase the efficiency of the pipeline, the time required for each stage should be the same. However, this is difficult when SDRAM access arises.

For this, a data cache 17 of a request reply type can be employed. That is, in the stage of presuming the occurrence of backtrack, it is impossible to maintain a packet order in which check results are outputted in order of inputs for a search object key 21. Due to this, the problem of order is made clear by introducing identification information (ID) 32. Hence, when a table 28 is requested in order to check a certain search object key 21, if it is not on-cache, the check device 50 is informed thereof. The check device 50 stops the processing, returns to a queue, and puts a packet 33 of the next search object key 21. The data cache 17 accesses the SDRAM 11. On the other hand, when the table 28 is requested from the check device 50, if it is on-cache, the table 28 is passed to the check device 50, and the check device 50 executes the processing. Further, the system is effective in which the check device 50 reads out the check tag information 34 in advance and passes it to the cache system 17. The system of preloading a required table 28 is effective. Further, it is also effective to put in the next check tag 34 and confirms on-cache when the check device 50 has loaded the table 28 on a buffer 59 for checking.

In this way, in the cache system 17 of this example, the on-cache rate is increased by increasing the exclusiveness of the cache lines with the elements of a search type and a checking step. In a data cache of a prior art CPU, the idea of matching a cache line size with a table size denies a linear address space, and thus this cannot be obtained in the prior art cache system. Further, regarding the idea of allocating each stage of a check table to a different cache entry, this is done when executing the determination of allocation between (the index part of) a logic address and a table, so it is very difficult to execute by the CPU under an operating system. The CPU simply performs the determination of allocation of the scope of a logic address to a table upon compiling, and acquires one table from a determined scope upon execution. This memory allocation support mechanism upon execution recognizes the forefront logic address and size. The assumption is that the allocation of dynamic memory causes gaps in the memory when repeating acquisition and release and these gaps are cleared by a garbage collector. Hence, the method of increasing the cache efficiency by avoiding a friction on the index part has not been devised.

In contrast to this, in the check method and check device explained here, the tables are standardized by fixing the table bit length (4 bits in the above example). Due to this, it is possible to match table size and cache line size. In addition, even if areas are exclusively allocated to a cache memory 17 or SDRAM 11 in accordance with search type and a checking step, the tables are linked with a list in accordance with the check tag information. Due to this, an exclusive area setting does not prohibit other processes since it can deal with the deletion and registration of an entry (upon execution) and can increase the on-cache rate.

Classification device with history cache

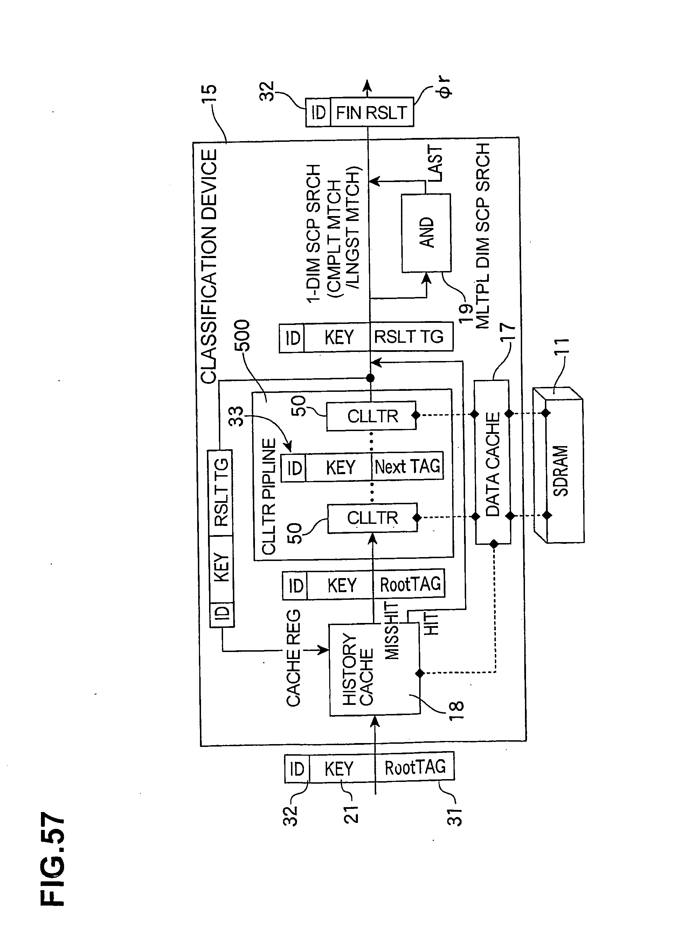

FIG. 57 is a schematic diagram of a classification device 15 with a history cache 18. It is possible to speed up the search process and to reduce search process time by placing the history cache 18 before the check device 50. As describe above, the check method and device, and classification device and searching device in accordance with the present invention can cope with the increase in bit length using a simple hardware configuration, and have many merits in realizing a high check speed, and further in a sufficient processing speed obtained using a general memory. However, the check result is drawn by coupling a plurality of check devices in a pipeline or by using the check device repeatedly. For this reason, there exists a difference in that latency occurs in jobs where the same bit string to be searched appears with high frequency, in comparison with CAM or TCAM. Accordingly, there is an advantage to using a history cache 18 in a search where latency becomes a significant factor.

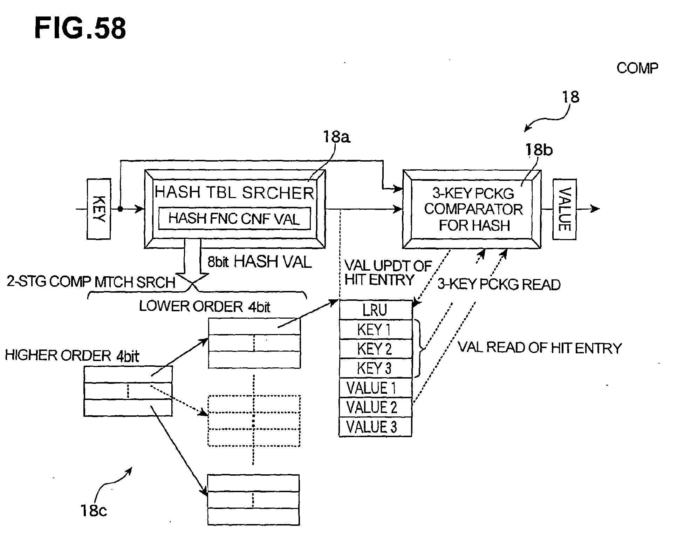

The history cache system 18 shown in FIG. 57 is a history cache system of an SDRAM share type, which has a configuration sharing the SDRAM 11 having a check table 28. As shown in FIG. 58, "8 bit hash + LRU" is used as a caching algorithm. Because of this, the cache system 18 of the present embodiment is provided with a hash table searching device 18a and a hash key package comparator 18b. The hash table 18c is constructed with a tree structure of a 4 bit (16 entries) x 2 stages as is in the check device 50, and it is capable of providing consistency to a data cache utilization method between the check device 50 and the history cache 18.

Classification device with history SRAM cache

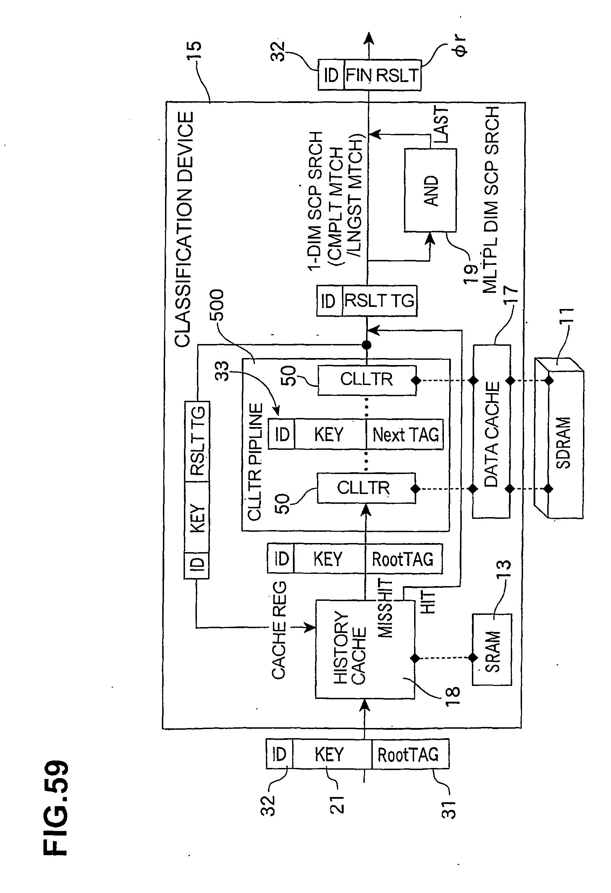

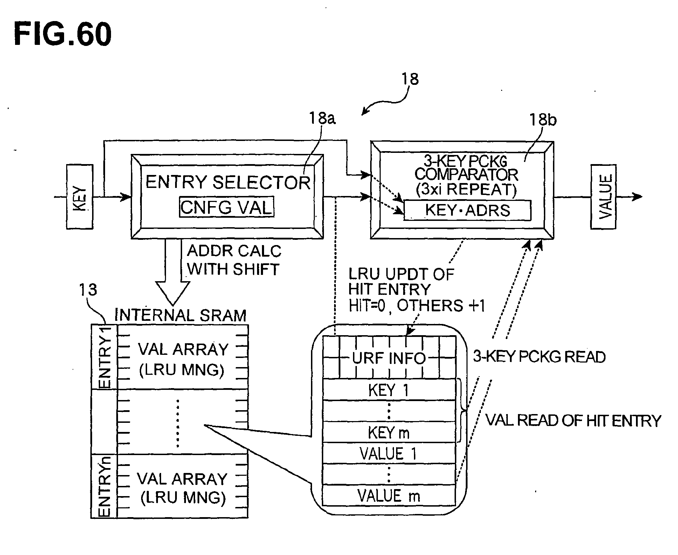

FIG. 59 is a schematic diagram of a classification device 15 with a history cache dedicated SRAM 13. An enhancement of speed is realized with a dedicated memory of the history cache 18 separated from the SDRAM 11 storing the table 28 to prevent competition with the check device 50. Moreover, a low delay SRAM having good response such as ZBL-RAM or ZBT-RAM is occupied for the history cache to enhance the performance of the history cache 18. Although the caching algorithm of "8 bit hash + LRU" can be used, while it is desirable to construct a memory block that can be matched with the check table in the case of shared type, as shown in FIG. 60 in the case of dedicated SRAM, it is possible to optimize by matching the memory bit width or the construction of the entry with the history cache.

Construction of logical operation device (AND device)

The check device 10 or the classification device 15 described above includes a logical operation device (AND device) 19. The classification device 15 is a multipurpose type, and therefore can set up search types using the route tag 31 by the control device or application of a upstream side. Accordingly, searching in multiple dimensions can be executed by operating the logical AND with the AND device 19, using a plurality of search results (one-dimensional search results) having different search types by one or a plurality of classification devices 15. The AND device 19 according to the present embodiment deals with the search result of the one dimensional scope collectively, and can obtain the search result of the multiple dimensional scope in a simple operation with a matrix computation.

One example of this is the SPD search function 8. In order to manage a piece of packet data φp, a bit string designating a source IP, a destination IP, a source port, a destination port, and a protocol is at least checked. When searching a rule which satisfies all of them, the bit string designating them is checked as the bit string to be searched in respective different classification devices 15. A plurality of classification results obtained by respective classification devices 15 includes a plurality of rules according to the scope search. It is possible to extract the rule to control the packet data φp by operating the logical AND of the classification results thereof with using the AND device 19.

Firstly, assuming that a set A is constituted of elements {A1, A2,..., An}. Further assuming that an element Ai is expressed as a m-bit string {ai1, ai2,...aim} of a binary (0/1). Likewise, assuming that a set B is constituted of elements {B1, B2,..., Bn}, and element Bi is expressed as a m-bit string {bi1, bi2,...,bim} of a binary (0/1).

Under these assumptions, a product (AND) set A&B of the multiplication of a set A and B is expressed as a product "A x B" in the matrix. Detailed operation expression is as follows:

$$Ai \ \times \ Bj \ = \ \sum^{k} aik*bkj \quad \cdots (4)$$

Here, inside of the $\Sigma$ is expanded with Boolean multiplication (*) and Boolean addition (+). Regarding the definition of the Boolean multiplication and Boolean addition, the Boolean multiplication " * " is an ENOR (Exclusive NOR, nun-exclusive logical addition), and the Boolean addition "+" is an AND. The Boolean addition is defined by (1 + 1 = 1, 1 + 0 = 1, 0 + 1 = 1, 0 + 0 = 0). The Boolean multiplication is defined by (1*1 = 1, 1*0 = 0, 0*1 = 0, 0*0 = 1). Since the ENOR is the same as a logic of " = " of a comparison circuit, Ai * Bj may be understood to be a coupling of comparison equal circuits with "ANDs". This may be easily understood when represented in matrix form.

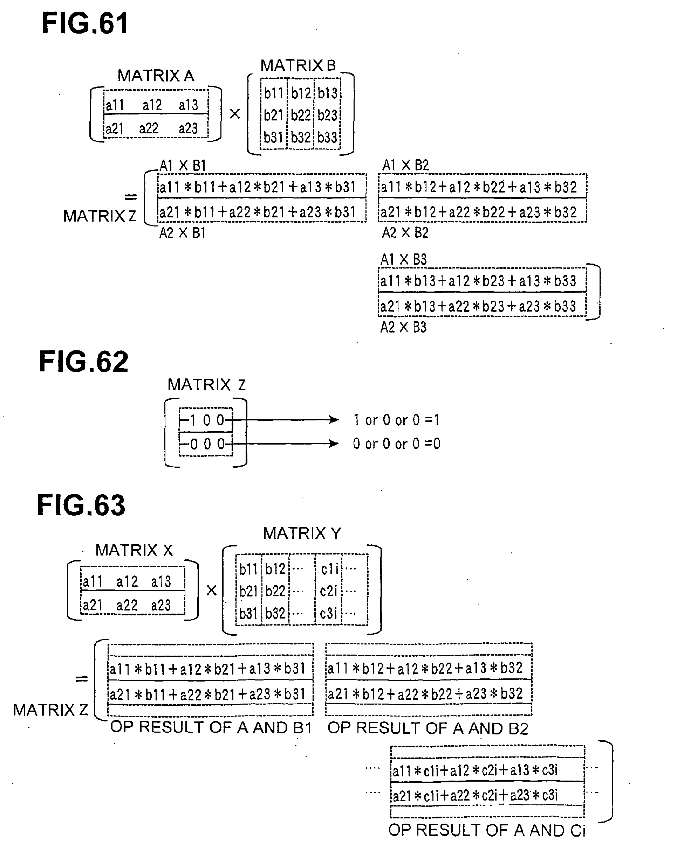

FIG. 61 shows an example in detail where a set A is expressed in 2 elements, a set B is expressed in 3 elements, and each of the elements is expressed in 3 bits. Matrix A of the left side shows that elements A1 and A2 of the set A are arranged in respective rows. Matrix B shows that elements B1, B2, and B3 of the set B are arranged in respective columns. Row 1 and column 1 of matrix Z in the right side is "a11*b11*a12*b21*a13*b31" which is equal to "A1x B1". This means a comparison result of A1 and B1 (1 = match / 0 = mismatch) in accordance with a definition of the Boolean operation in the AND device 19. Likewise, viewing matrix Z in the direction of column, the first column shows the comparison result of "A1 and B1" and the comparison result of "A2 and B1". Likewise, the second column of the matrix Z shows that the comparison result of "A1 and B2" and "A2 and B2". That is, each column of the matrix Z is a comparison result of the entire matrix A (set A) and each column (set B, element Bi) constituting of the matrix B.

Accordingly, as a result of the matrix operation, if matrix Z of the right side is constructed as shown in FIG. 62, {a11, a12, a13} row of the matrix X of the left side (set element A1) is a product set A&B of sets A and set B. That is, a product set is a row in the matrix X corresponding to the row having at least one element of 1 in each row of the matrix Z. In other words, "row having at least one element of 1" means a row of matrix A corresponding to a row where the result of taking a logic OR of a value in the row in each row of the matrix Z becomes 1 is a product set.

Accordingly, after multiplying an element to get a logic AND for matrix A, if a row having at least one element of 1 remains, it means that a product set of their elements is obtained. FIG. 63 shows a generalized matrix operation applied to an LSI. The matrix X of the left side has elements A1, A2,... of set A in each row. The matrix Y of the left side is constructed of elements Ci,... of set C in addition to elements B1, B2,... of B in each column. The number of columns is not limited. Viewing every column in the matrix Z, it is an operation of one column of matrix Y with entire matrix X. In the matrix Z, logic OR is finally operated in row for each row, and product set elements of A*B*C... are determined. Accordingly, the entire values of the matrix Z does not need to be maintained, and it is sufficient that the OR operation is executed as a result of the accumulation result after performing a Boolean matrix operation for each row.

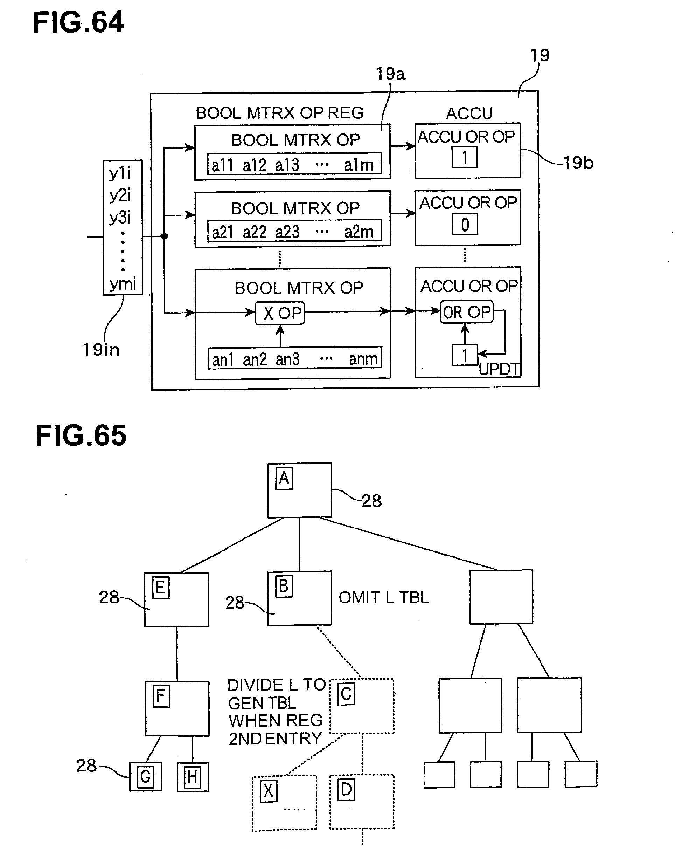

FIG. 64 shows an example of a hardware construction of the AND device 19. The AND device 19 has a plurality of Boolean matrix operation registers 19a, and elements of the set A are set into respective registers 19a. The device 19 further comprises, for each register 19a, an accumulator 19b for operating the accumulation logic OR (OR) of the operation result of the resister 19a to accumulate its result. Each of the accumulators 19b is initialized to "0". For this AND device 19, when each of the columns such as element Bi of the set B and element Ci of the set C is inputted sequentially as an input element 19in, operations are processed for each input string as follows: Firstly, a Boolean matrix operation An x Yi (ENOR operation and AND operation) of the Boolean matrix operation register 19a and an input column is executed. Next, an OR operation between a result of the Boolean matrix operation and an accumulator value is executed. Then, the value of the accumulator 19b is updated in accordance with the result of the OR operation. The element group of the set A corresponding to the row where 1 remains in the accumulator 19b after final input is a product (AND) set of sets A, B, C,..., that is, A&B&C&....

The Boolean matrix operation combines the bit comparison by the ENOR logic with the AND logic. In the viewpoint of circuit, each of the Boolean matrix operation registers outputs an m-bit complete match comparison result of the register value An and input value Yi, and the result of the comparison is OR accumulated using the accumulator. It is very simple to make a circuit by combining ENOR logic and AND logic, although it is dependent on the number of the Boolean matrix operation registers and bit length. Since it is possible to compare one input value with a plurality of register values simultaneously, there are as many parallelisms as the number of the registers. Accordingly, the AND device 19 of the present example can lead the result of a multidimensional scope search in a short time with a simple construction. Alternatively, in view of the high cost of parallel registers, it is possible to realize the AND device 19 of the present example by reducing to one register or reducing the number of registers, inputting the register value into the memory, and executing the Boolean matrix operation row by row repeatedly for the input value.

There is a merit in that rules can be inputted as many as the memory is available by expanding the register values in the memory. Therefore, t is suitable for narrowing the element from a set having a plurality of rules or elements with using the Boolean logic AND. However, since the processing is executed repeatedly and memory read operations are executed, the processing time becomes long. It is possible to form the Boolean matrix operation and memory read into a pipeline, and processing time for memory read can be hidden wit using such a configuration.

The AND device 19 includes the accumulator 19ba, and maintains a initial set elements in the registers 19a. Due to this, when parallel execution of a plurality of multidimensional scope searching is considered, they are shared resources. Accordingly, a certain resource exclusive occupation is required. On the other hand, the classification device 15 executes the search of each dimension of a plurality of searches in parallel, thus, for example, with respect to each of the dimensions A and B of the search system S1, S2, output from the classification device may be an output having no sequence regarding the search system and the dimension in the same search as S1A, S2B, S2A and S1B. T may

Even if adopting a scheme that the search system outputted ahead from the classification device 15 occupies to use the AND device 19, or a scheme that the search system in which the outputs of all dimensions from the classification device 15 are justified occupies to use the AND device 19, since the output from the classification device 15 is asynchronous and disorder, in order to make the usage ratio of the AND device 19 and the throughput as a multidimensional scope search into high efficiency, it is desirable to have the AND device 19 parallelized. In the case where memory is employed in stead of the register and the accumulator of the AND device 19, parallelization on the memory is also effective.

When considering an operation of the AND device 19, an initialization "BIGIN (register preset and accumulator initialization)" and termination processing "END (read from the accumulator)" are needed, and there is no sequence between the input and the output of the classification device even in the same system. Therefore, it is not possible to fixedly determine the operation in such a manner that the dimension A is always initialized and the dimension B is always terminated. A scheme is adopted where the output from the classification device 15 is queued in each search system, and the initialization and termination are controlled expressly after the classification device outputs of all dimensions are completed. As a result, it is desirable to adopt a control scheme where the search system with the justified output from the classification device exclusively occupies the AND device 19.

In the case where a high speed is required, it is possible to cope with by preparing a plurality of the AND devices 19 in order to make use of the AND devices 19 in parallel. As the next best plan, it is possible to cope with by executing the parallelization on the memory with the memory preservation of the register 19a and accumulator 19b. Furthermore, in the case of employing the history cache 18, it is possible to reduce the usage ratio of the AND device 19 by devising a usage method of the history cache 18 in the multiple dimension scope search. Accordingly, it is also possible to maintain a sufficient processing speed without using the AND device 19 in parallel. For example, as for the multidimensional scope search of 32 bit 5 dimensions, adopting the history cache 18 with a key of 160 bits (32 bits x 5), the product set result of 5 dimensions operated with using the AND device 19 in the first search is registered as the entry data of the history cache 18. That is, it is possible to register the history of the longest match search, the history of the complete match search, and the history of one dimension scope match of the classification device 15 in the history cache 18 as the entry data. However, in the case of multidimensional scope searches, the history of the multidimensional scope searches as a whole is dealt with as the entry data, instead of the individual history of each dimension. Accordingly, it can be suppressed that the processing by the AND device 19 becomes a critical path.

Although the present invention has been described in detail with showing several embodiments, the present invention is not restricted to the embodiments.

Omission table

Hereinafter, there will be described a method for further decreasing the number of check tables 28. In the search using the check device 50, the entry bit string is divided into the partial entry of every 4 bits to be tabled, and registered in the form of the tabled bit tree to be searched. In this method, it is necessary for the table to be generated even when there exists only one entry after a certain stage, and tracking the table downstream is executed even when executing the search. It is possible to improve by introducing a table structure where lower order tables are omitted when there is one entry after a certain stage.

FIG. 65 shows an example where a lower order table is omitted. Although table B has one entry being "B-C-D" in the fundamental table structure, the "C-D" is omitted since the lower order is one entry. Instead omission information (lower order bit string whose entry is omitted, the number of omission stages, omission mark, etc.) is recorded in the table B. Although the table E has one table F directly linked to a lower order, there exist 2 entries or more of G and H branched as grandchildren, so the omission is not performed.

When the second entry taken in the lower order of the table B is registered, the omitted lower order tables are expanded (generated). In the figure above, when the registration of the entry X to be linked in the form of "B-C-X" is executed, omitted information of the lower order tables are detected at table B, tables C and D corresponding to the first entry are generated, and the table X corresponding to the second entry is generated.

Here, table generations of the first and second entries are not executed in series, but there also exists a method for generating a common table C since the stage subsequent to the table B is the same bit column. Since the next of table C has different bit columns, it is possible to comprehensively generate entries until the stage where 2 entries are branched in such a manner as to branch to generate the tables D and X. Therefore, it is possible to reduce time required to register the entries.

Each lower order becomes one entry in the stage subsequent to the branch, again. Accordingly, the table in the omission table format is generated there. For example, in the figure above, if the tables D and X of are not the lowest tables and they are extended to the lower order furthermore, each of the tables D and X branched from the table C has one entry below it. Accordingly, the lower order tables are omitted. If the tables are generated in the omission table format, when executing the search, the check device 50 looks at the omission mark of the table 28 and detects that the lower order of the table is omitted. Thus, the check device 50 can also reduce the check time since it can obtain the final check result without reading the table of the subsequent stage.

In the case where the compression table (check table) 28 is the omission table, an entry omission bit string of 4 bits x n stages is recorded. Accordingly, in the check device 50, it is possible to execute the check in accordance with a search mode while shift-reading the entry bits. In the case of a check of the complete match or approximation match for one entry, it is efficient to employ a dedicated comparator instead of using the comparator 52 of the above mentioned check device 50. Further, in the case of using the dedicated comparator, it is not necessary to execute the 4 bit comparison x n times, and it is desirable to employ for a multiple bit comparator after reviewing the balance of the resources.

Since a search object key 21 and an entry are compared in the omission table, the comparator has only to execute a comparison check to be able to perform a complete match check in the case of a complete match search, and to determine larger/equal/smaller in the case of a scope search. Further, it is not necessary to select an entry after a comparison, and only the determination of the search result from the comparison result is required. In the complete match, if a match is resulted in comparison, it means a search success, and if a mismatch is resulted in comparison, it means a search failure. In the scope match, if the comparison result is larger one or match, it means a (right-inclined type) search success, and if the comparison result is smaller one or match in the case of left-inclined type, it means a search success.

As to the deletion, as a result of the deletion, a part being one entry is detected, the entry bit string is integrated with starting from its lower order, and the omission table must be obtained again. There is a possibility that the processing time of the table management is increased. However, as described above, there is a big merit since the check time can be reduced. An including entry number counter is provided in a table 28 of each stage, and the counter is decremented when tracking the entry to be deleted from a higher order to a lower order, and the position of a table having only one entry is detected. The table is changed into the omission table, and the table chain of the lower entry to be omitted is tracked down and goes to the upper stage while composing the omitted bit string (= entry number) from the lowest order to the upper order, the omission bit string is integrally written in the omission table. A table re-omission accompanied with deletion is more complicated than the above mentioned update process, and table access increases (taking a time). Accordingly, there may be a method that the omission and expansion are executed only when performing registration, and the re-omission is not performed in the deletion. According to the balance of the search frequency and the registration/deletion frequency, in the case where the deletion number of the registration is over the predetermined number, the expansion/omission is repeated, that is, securing and releasing table is repeated, so the performance of the entire classification device may be decreased.

Pipelined Checking Device

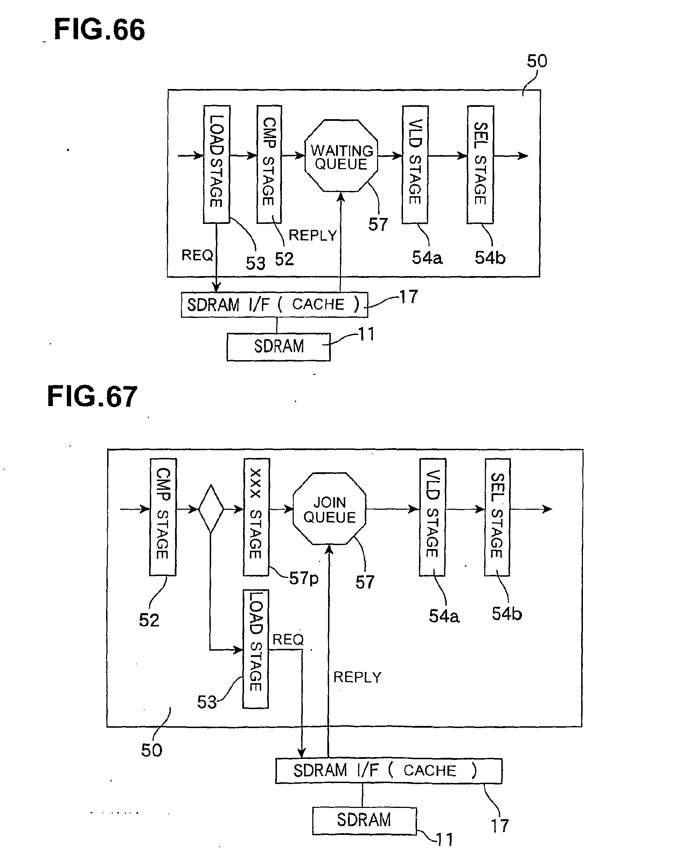

FIG. 66 is a schematic diagram of a request/reply type memory access and an internal pipeline of a check device. As described above, there is a bottleneck in reading of the mask data 28A in the check device 50. Without the mask data 28a, the downstream processing from the judgment unit 54 (the processing from the VLD to the SEL and the output unit 55) can not be executed, and the only process executed in parallel with the read of the mask data 28a is a processing of the comparison unit 52. Therefore, it can be considered that the internal processing of the check device 50 is constructed in a pipeline, a memory read is requested to the cache (SDRAM) at a table load (mask read) phase, and a processing subsequent to the VLD is executed starting from responsive one. For this, a queue 57 is provided before the VLD stage, and a standby for the reply is executed there.

In the example shown in FIG. 66, since the CMP stage 52 is inserted between the memory request and the reply, a standby device is needed in the queue 57. While the memory access is FIFO and the queue 57 is a waiting by the FIFO in the case where there is no data cache, a standby device superior to the FIFO type such as CAM and the like is needed since the sequence is lost by the hit/miss-hit in the case where there is the data cache. Even in the case where there is no data cache, since there is a mode accompanying no memory access (through or the like), there is a possibility of unreasonableness in the matrix of simple FIFO standby type. In the case of accompanying no memory access, by outputting a dummy access request to return a dummy reply so as to match the reply number with the FIFO standby number, it is possible to cope with in the FIFO type.

FIG. 67 shows an example of another check device 50. In this example, one accompanying the memory access is branched from the other accompanying no memory access, and the one accompanying the memory access returns a reply having no sequence to a join queue 57 disposed immediately before the VLD. On the other hand, as to the other accompanying no memory access, when there is necessary processing in a stage 57p before the queue 57, the processing is executed there, and it enters into the join queue 57. In this case, the join queue 57 is simply a join from two-way, and does not require the queue. In this construction, since the standby device is not needed, (spatial) parallelization of the memory access and CMP process 52 is not executed, it is effective for the timing parallelization by the internal pipeline of the check device 50.

Prefetch of mask data

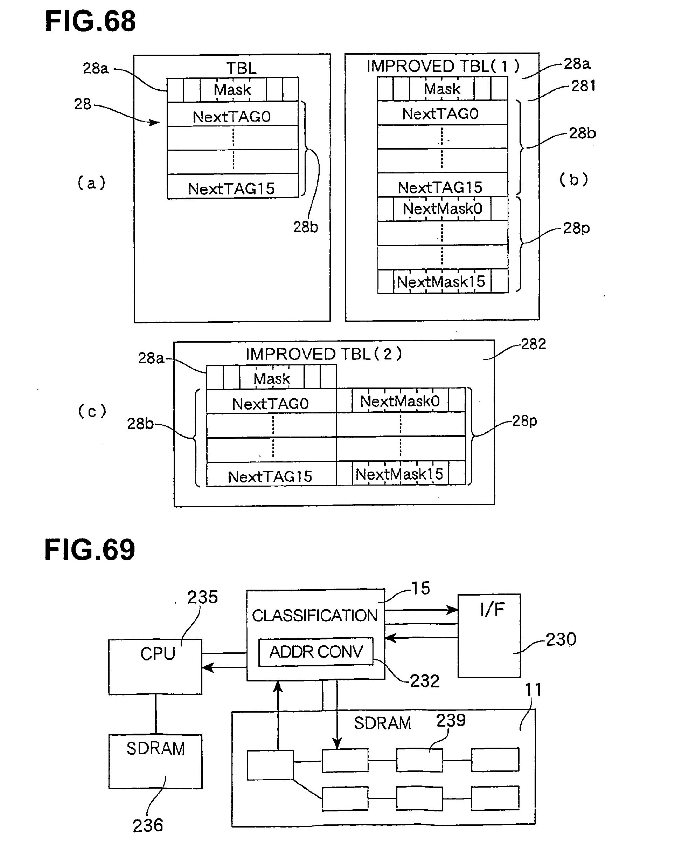

FIG. 68 illustrates an example where a memory access stall is resolved with using a table which can cope with prereading the mask data. In order to resolve the bottleneck related to read of the mask data, a construction of the table 28 is changed. The table shown in FIG. 68(a) consists of the mask table 28a as information indicating a presence or absence of the entry of the table, and NextTAG x 16 entries indicating the address table that represents the address of the subsequent table. In the improved table 281 of a first type shown in FIG. 68(b), next to the addresses "NextTAG x 16 entry" 28b, the mask data "NextMask x 16 entry" 28p of the next stage is arranged. Further, in the improved table 282 of a second type shown in FIG. 68(c), a pair of the addresses "NextTAG" 28b of the next stage and the mask data "NextMask" 28p of the next stage is registered in 16 entries. Since both of these include the mask data 28a as well as the addresses of the check tables 28 of the next stage, it is possible to prefetch the mask data 28a of the next stage.

However, in the improved tables 281 and 282, in order to make use of it in addition to the table management or search, it is preferable that the same value as the mask data "NextMask" of the subsequent stage is recorded in the table 28b which is indicated by the address "NextTAG" of the subsequent stage. Thus, it is preferable that a table has 2 kinds of mask data, that is, the mask data of that table and mask data of the subsequent stage. This is because when tracking the entry from the lower order of the table, if the mask data only exists in the higher order, it is impossible to move to an adjacent entry with using the table only.

As a construction is employed where the mask data of the subsequent stage is prefetched, the mask data 28a is added to the data packet 33 of check-continuation information to be passed between check devices 50. In accordance with the improvement, in processing of the check device 50, the mask data 28 of the check table used in the check device 50 is provided as an input parameter (check-continuation information) 33. With this, it is possible to execute, in parallel, the processing downstream from the judgment unit 54 that needs the mask data 28a and the processing of the load unit 53.

From the viewpoint that the stall occurred by reading the mask data 28a is resolved, it is possible to enhance the parallelization by providing the internal SRAM in the classification device 15 or the check device 50 and the mask data 28 of each table in the check device 50.

The check method and device described above is suitable for realizing the data management method for rooting after executing the match search or scope search of the bit string such as IP header. That is, the check device 50 and the classification device 15 provided with the check device 50 are suitable as the search mechanism 10, 8s, 7s and 6s of the data management device 1. However, the application scope of the check method and device in accordance with the present invention is not limited thereto.

MIN search/MAX search

In a case of variously applying the classification device 15 having a plurality of check devices 50, it is convenient to have the MIN search/MAX search. When a bypass is set as MAX bypass, it is possible to search the MAX entry among the registered entries with executing the right-inclined approximation search using search object keys {11...11}. However, the MIN entry can not be searched. In this case, the MIN entry is extracted by making a search in the MIN search mode. There is a case where the classification device 15 can be used not in a search but in the registration & extraction processes. In this case, it is a merit that both of the MIN search and MAX search are equipped.

In the collator 50, it is also effective to enable the search mode consisted of the judgment unit 54 to be executed with omitting the processing of the comparison unit 52. For example, "=" (01) is made to be outputted from CMPi of the comparison unit 52 at all times. Alternatively, in a case of the MIN search/MAX search modes, a circuit where "01" is inputted to VLD54a of the judgment unit 54 with through the comparison unit 52 may be used.

In this search mode, only effective entry becomes "01" by the VLD54a, and at the SEL unit 54b, in a case of the MAX search mode the entry having the largest entry number among the entries having the comparison result of "01" is selected. Further, in a case of the MIN search mode, the entry having the smallest entry number is selected. This is realized by changing the entry selection logic from "> (11)•< (10)" to "= (01)" at the relation part with $Gl•G_r$ of the right-inclined. The tag updating unit 55b of a table tracking process updates, in conformance with the complete match search mode, the check tag information 34 where an entry number designated by the output $S_r•S_1$ is the subsequent table. By the above, it is possible to provide the MIN search/MAX search function that tracks the minimum entry/maximum entry at the table of each stage.

Next, in a case of applying the classification device 15 to a sort, it is needed to extend in order to read out data after the sort. Ascending head read/descending head read can be executed by the MIN search/MAX search. Thus, it is needed to have commands for ascending subsequent read/descending subsequent read. In order to realize this, a table of a bidirectional link type is employed. Further, a tag of the lowest stage table plus entry number is read as an output parameter of the ascending head read (MIN search or {0...0} approximation search)/descending head read (MAX search or {1...1}) to output as an handler.

Further, providing a command "NEXT/PREV", when the read handler (the lowest table tag + entry number) is received as an input parameter, the updated read handler together with the resultant tag of the subsequent entry (lowest table tag + entry number) are outputted. In the check device 50, firstly in accordance with the check tag (the lowest table tag of the read handler) 34, the mask data 28 is read out from the table 28. A subsequent entry number (previous entry number) is calculated on the basis of the entry number of the read handler, and address "NextTAG" (resultant tag since it is the lowest stage) of the corresponding entry is read from the table 28. In a case where the subsequent entry number (previous entry number) becomes another table, it goes up the higher order table by one stage using the upper link of the bidirectional link, and moves to an adjacent entry from there. In a case where there is no other entry except its own entry in the table upped by one stage, it further goes up. If it has moved to an adjacent entry in the higher order table, it has to go down to the lowest stage, which is executed by the MIN search/MAX search modes.

Database search

This classification device 15 can be also applied to a relational database (RDB). The search according to a binary bit tree corresponds to an index in the database. Accordingly, if a plurality of fields are registered in the binary bit tree, it is possible to search for the database with using it as a key. The search can be executed regardless of its kind, that is, longest match, scope match, or complete match. In this processing, it is preferable that AND processing (processing of taking a product set) is executed at a high speed after searching for the plurality of fields. That is, when "A0 < height < A1" and "B0 < weight < B1" are separately searched, it is preferable that a set of the "A0 < height < A1" and "B0 < weight < B1" can be obtained at a high speed. If a field is determined fixedly in advance, it is general to generate a complex (multiple dimensions) index using its field group. If it is not possible to determine an object field fixedly and to generate the complex index (2 dimensional index of height and weight), logic ANDs may be operated in the search system of "CPU + OS" as follows: That is, letting a record name be Ri, a set {R1...Rm} (the number thereof is m) of "A0 < height < A1", and a set {R'1...R'm} (the number thereof is m') of "B0 < weight < B1" are obtained, the members of the two sets are compared with each other in a round robin, and members belonging to both sets are remained. This becomes an AND set. In this case, the comparison calculation is executed m x m' times.

If a classification device is used for that, it is possible to execute the following operations: When the set {R1...Rm} is registered in the classification device 15 and the set {R'1...R'm} is checked, if the check is a hit to the member registered in the previous set, this becomes a member of the AND set. In this case, the comparison calculation is executed m + m' times, and the processing speed is enhanced.

The classification device can perform an operation of the addition set (OR set), make into uniqueness, and simply sort as well as performing an operation of the product set (AND set). In a search system of the "CPU + OS", if it can be temporally marked in the database, the logic AND (AND) can be operated with using the following method: Each member of the set {R1...Rm} is marked whenever it is searched. Whenever each member of the {R'1...R'm} is searched, members having previous mark are listed. In this case, although the comparison calculation is executed m + m' times, it takes too long time since there occur problems such as unnecessary mark processing or accessing the database of a disk main body. Although a bit map method can execute the logic AND (AND) at a high speed, it is difficult to make it multipurpose because of a limitation of the number of rules and the like.

In contrast to this, a method for obtaining the AND set by the classification device described above can also be used in the AND set of a plurality of rule sets such as a packet filtering and the like. In the classification device 15, five instances corresponding to five IDs (search for five kinds of bit strings) are moved in parallel and a rule hit in each of ID is marked, for example. An instance that has already identified four marks notifies it to the AND instance. The AND instance compares the marks with a rule having the most priority currently and updates it whenever the notification is made. After the 5 instances are completely terminated, the rule having the most priority currently is determined.

Nonlinear memory addressing

A nonlinear memory addressing of a tree structure can be realized using the classification device in accordance with the present invention. It is possible to realize a memory space where a flexible addressing is executed viewing from the upper order layer by making an address to be a key to be searched and providing the classification device in accordance with the present invention in the memory management mechanism. This is nothing but that for a conventional linear address space memory, a memory management device encapsulates a part where the upper layer expressly executed a structural management to be hidden and the memory is abstractly objected.

Further, a hardware based approach is executed differently from a memory object approach executed using a code of CPU conventionally. Accordingly, it is possible to realize the objectification at a high speed and efficiently. Particularly, in a case of using a memory to make a search, it is possible to effectively use an addressing (= check) by the classification device.

FIG. 69 shows an example thereof. In a case of reception, write data (reception data) 239 of a linear address (logic address) is received by way of an interface (I/F) 230. The classification device 15 writes the reception data 239 into the SDRAM memory 11. Since the classification device 15 has an address conversion function 232, it converts a logic address (linear address) into a real address (nonlinear address having a certain structure such as list, tree, and the like), and writes the real address into the SDRAM 11. On the other hand, a sender that is sending data through I/F 230 can write in as a linear address. The same is also true in transmission. When a read is made from the I/F 230 in the linear address, the address conversion is executed by way of the classification device 15. With this, the linear address is converted into the real address, and it is possible to cope with continuation read from the nonlinear address.

CPU 235 can also make use of an addressing through the classification device 15. Since the CPU 235 is not a data flow operation, there is a trouble in executing a code with using only the memory 11 under the addressing provided by the classification device 15. Therefore, the CPU 235 has an independent memory 236 for accumulating the code and processing the data, and the memory 11 under the classification device 15 is used as a packet memory. In a case of considering a router and the like, the CPU 235 assists a TCP/IP process with using the classification device 15, which undertakes the process that can not be covered by hardware process such as routing entry management, filtering rule management and the like. That is, the classification device 15 takes charge of a main function, and the CPU operates as a sub.

Table lookup driven processor

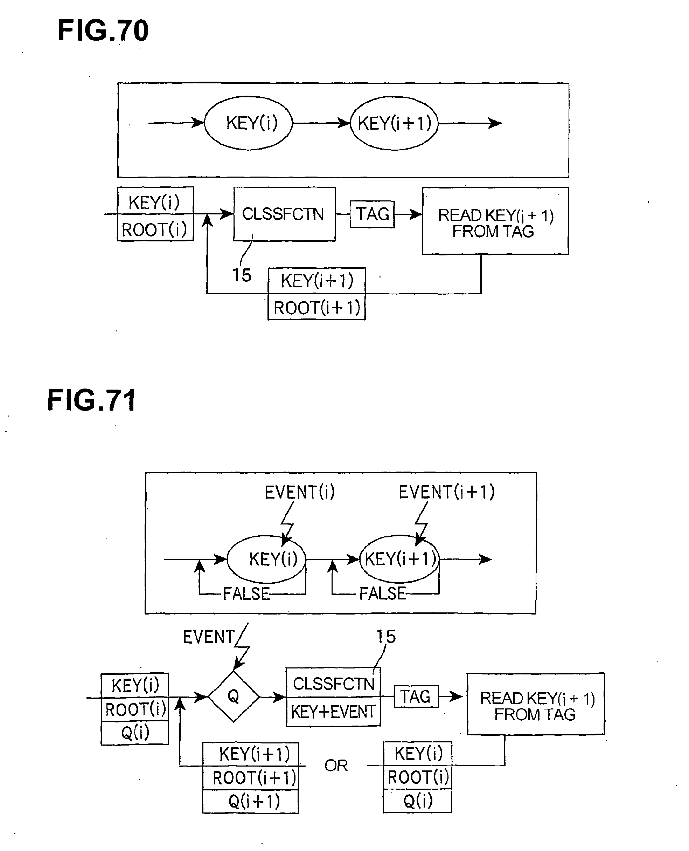

The classification device 15 can be applied to a table lookup driven processor in accordance with a state transition. FIG. 70 shows a simple state transition, wherein a state transition of a simple loop type such as "KEY(1) - KEY(2)- ...- KEY(j) - KEY(1)" can be executed if the KEY(i) is searched and consequently the KEY(i + 1) is read out on the basis of the result TAG (rule).

FIG. 71 shows an event-driven simple state transition, wherein an event (i) triggers such a state change that the state transits into the KEY(i + 1) and returns to the KEY(i) except the event(i). The KEY(i) waits for the event(i) in an event(i) queue. If the event(i) has come, it is serially connected to the KEY(i) to search. Assuming that the event(i) is represented by one bit with a true being {1} and a false being {0}, and the KEY(i) is represented as "101...01", a hit arise in a case of "101...011" and a mishit arises in a case of "101... 010". In the hit rules, the event (i + 1) queue address and KEY (i + 1) are written. In the mishit rule, the event(i) queue address and KEY(i) are written, leading a return. Further, the classification device in accordance with the present invention can be applied to a state transition including conditional branch.

More detailed description will be given. The search in the classification device described in this specification means "to input the key to be searched, to compare the key with a entry of a table tree indicated with a tag (route tag), and to output the result (result tag)". The search in the state transition which becomes the base of the automaton can be defined as "to evaluate an external input with the transition condition from a current state and to determine a transition destination". Here, letting that "external input = key to be searched", "current state = current tag", and "transition condition = entry description of a table pointed by check logic and tag", a definition can be made that "the transition destination is determined by evaluating the external input (key) with the transition condition (check logic and entry description of a table pointed by a current tag) from current state (current tag)", and the automaton in accordance with the present invention can be realized.

In the above, although the search by the classification device or checker is described as one directional transition from an upper stage to an lower stage in the structure (table) organized with a tree shape, the transition may be an bidirectional transition in a stricture organized with a network shape such as a state transition. It can be said that the only difference between them is the comparison scale. That is, the fact that the search of the classification device is the one directional transition of the tree is originated from a microscopic viewpoint, and the fact that the state transition is the bidirectional network is originated from the microscopic viewpoint. In a case of viewing it in the same scale of an operation for one key to be searched, the checker and classification device evaluate the key to be searched in accordance with a predetermined rule (entry description) and output the result. Thus, in the state transition, the transition condition under a certain state can be expressed by the entry description of tree shape of the search when searching it with the classification device. In other words, it is possible to apply the classification device to a state transition machine or a automaton with an approach to realize the search for each of states in viewing the state transition as a series of searches by a classification search.

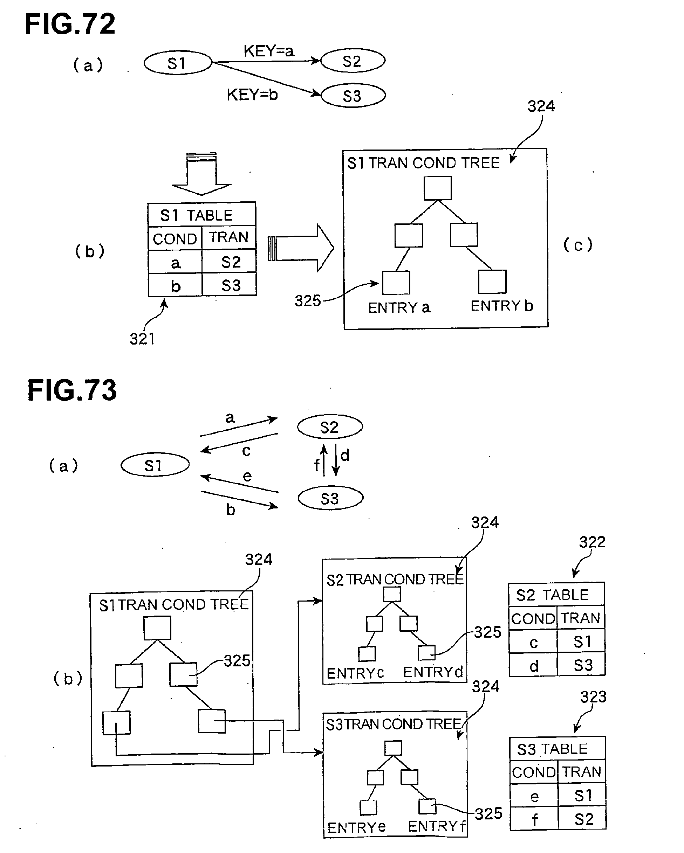

FIG. 72(a) shows an example to realize the state transition with a search using the classification device. A state transition machine is assumed wherein a transition is performed from state S1 to state S2 under the condition "a", and to state S3 under the condition "b". As shown in FIG. 27(b), a registration pattern table (S1 table) 321 of the state S1 can be generated, wherein the state transition conditions "a" and "b" in the state S1 are regarded as a registration bit pattern (entry). Thus, as shown in FIG. 72(c), a plurality of partial pattern tables 325 to form the binary bit string 324 for the check is generated from the S1 table 325. Further, executing the above described check processing by the classification device 15 with letting the evaluation source (condition) of the state transition obtained in the state S1 of current sate be a key to be searched, the state of a transition destination can be outputted with using a match search.

FIG. 73(a) shows a simple example where a state transits in a network shape. In this example, in addition to the above, the state S2 is changed to the state S1 under the condition "c", and the state S2 is changed to a state S3 under the condition "d". Further, the state S3 is changed to the state S1 under the condition "e", and the state S3 is changed to the state S3 under the condition "f". As shown in FIG. 73(b), a registration pattern table (S2 table) 322 of the state S2 can be generated, wherein the state transition conditions "c" and "d" in the state S2 are regarded as entries, and a registration pattern table (S3 table) 323 of the state S3 can be generated, wherein the state transition conditions "e" and "f" in the state S3 are regarded as entries. Changed to the state S2, the evaluation source (condition) in the state is regarded as a key to be searched, and the check process is executed by the classification device 15 with using a partial table 325 generated from the S2 table 322. Changed to the state S3, the evaluation source (condition) in the state is regarded as a key to be searched, and the check process is executed by the classification device 15 with using the partial table 325 generated from the S3 table 323. In such a manner, the present invention can be applied to the state transition of the network shape by replacing the partial table 325 used when checking at the changed state. The replacement of the partial table 325 can be made by assigning a route tag indicating an address of the highest order partial table of the partial table 325 as describe above.

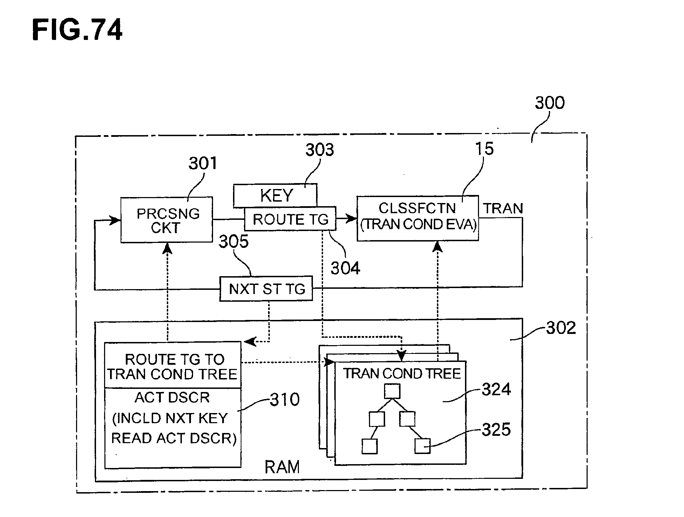

FIG. 74 shows an example of a data processing device 300 employing the classification device 15. The data processing device 300 comprises a data processing circuit 301 whose processing contents are determined depending on its state, a RAM 302 storing processing contents (action) 310 of the data processing circuit 301 in each of the states, and a classification device 15 being a state transition engine of the data processing circuit 301. The RAM 302 stores a plurality of types of table trees used in searching by the classification device 15 depending on the states, and a partial table 325 constructing them. The data processing device 300 is a state transition machine for transiting the state of the data processing circuit 301 being an action execution unit, and the classification device 15 outputs the resultant tag 305 by letting the key (search key) 303 provided by the data processing circuit 301 be a bit string to be searched, and searching for the table tree 324 stored in the RAM 302 with using the route tag (search table tree tag) 304. In this state transition machine 300, the search table tree tag 304 is a route tag of the transition condition table tree 324, and the resultant tag 305 is a subsequent state tag. Further, the search key 303 is data being an evaluation source of the state transition. Thus, in the data processing device 300, the data processing circuit 301 also functions as a search object provision means for providing a search key 303 to the classification device 15.

The subsequent state tag 305 is a tag indicating an action description 310 to be explained in accordance with the transition to the state and a transition condition description from the state to another state. Depending on a real installation, it is also possible to express the action description or condition description as an indirect pointer determined in relation to the subsequent state tag 305. The action description 310 also indicates a process that receives the search key 303 being an evaluation source of the transition condition from internal or external state of the data processing circuit 301. Further, it is also possible to install information of the route tag 304 indicating the highest order of the check table constructing the transition condition table tree 324 in the action description 310 with using the subsequent state tag 305 in order to determine the transition condition table tree 324 for searching the subsequent transition condition.

Thus, the data processing device 300 is controlled by the classification device 15 with a control method for letting data to be an evaluation source of the state transition by the check method of multiple stages using the check device 50 be a bit string to be searched, checking data indicating a plurality of state transition conditions as a plurality of registration patterns (checking step), and transiting a state of the data processing circuit 301 in accordance with the check result (transiting step). Because of this, in each of the check devices 50 mounted on the classification device 15, a check process is executed with regarding a current stage in the check method described above as a current state. Further, check-continuation information indicating a state subsequent to the current state is outputted. In the classification device 15, in order to search for the subsequent state, one check stage may be consumed and a plurality of check stages may be consumed.

It is also possible to regard the action description 310 as a code, the key 303 as a branch destination address, and a transition condition evaluation by the classification device 15 as the branch destination memory address converter. Thus, the data processing device 300 functions as a processor on the bases of the state transition. In a conventional processor, the state machine is realized as an application with software codes on state transition hardware (Turing machine) being a CPU. The data processing device 300 can directly realize the state transition machine employing the classification device 15.

Further, it is possible to realize a finite state automaton FA employing the state transition machine 300. The finite state automaton is a machine that changes internal states in response to inputs, and outputs a certain reply as a result thereof. In the data processing device 300, it is possible to change a transition condition table tree 324 (that is, a check table) with changing the route tag 304 or rewriting contents of the RAM 302 by the data processing circuit 301 with using a instruction set of the action description 310. Thus, the data processing device 300 is realized as a state transition machine defining the change of the internal state by a state transition and an action in each state.

There are a deterministic FA (DFA) and a nondeterministic FA (NFA) in the finite state automaton. The deterministic FA is a finite state automaton in which the state transition is determined uniquely, and the nondeterministic FA is a finite state automaton in which the state transition is not determined uniquely. Theoretically, although the NFA can be converted into the DFA, to realize the NFA as the NFA in hardware is significant from the viewpoint of state space saving and the like. "The transition state is not determined uniquely" means "plural states are exist". Thus, by constructing a system of parallel data flow type employing the data processing device 300, it is possible to realize the NFA of the state machine.

In a conventional CPU, its efficiency is not good since parallelism of states is resolved sequentially. However, the classification automaton of a parallel data flow type can realize an efficient DFA.

Application to QoS

The classification device 15 can be applied to QoS for class hierarchy structure data. Thus, the device is employed in the QoS function 7 of the routing device 1 shown in FIG. 1. In a case where the class search used in QoS of packet $\phi$p in the IP router is executed with an IP address as a bit string to be searched, using the scope search, an entry registered in a search table 7m can be regarded as an entry reflecting a class structure.

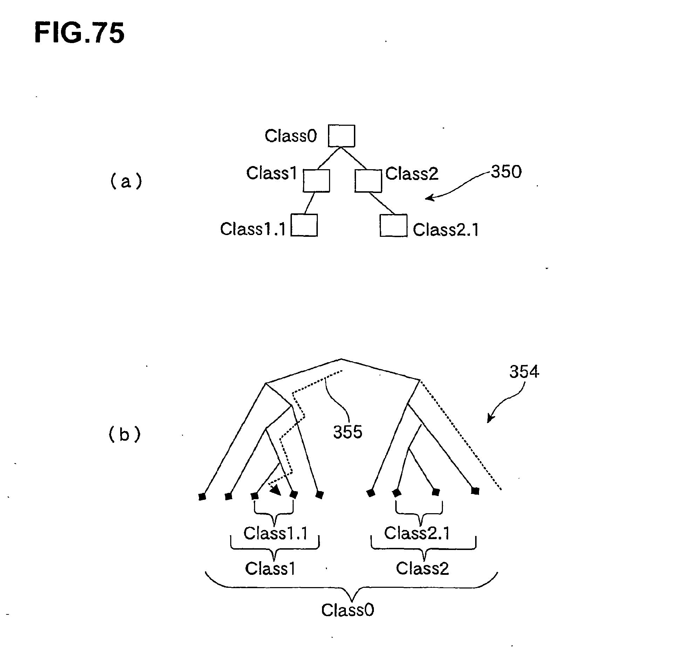

FIG. 75(a) shows an example of a class structure. For this class structure 350, it is possible to form a checking binary bit tree 354 as shown in FIG. 75(b). In the binary bit tree 354, there is registered a right-inclined scope search entry as a registration bit string. Thus, it is possible to obtain an entry of the lowest order class corresponding to the IP address 355 with regarding an IP address 355 shown in FIG. 75(b) in dotted line as a bit string to be searched, and executing the scope search by the classification device 15. In this example, the IP address 355 is classified into a class 1.1.

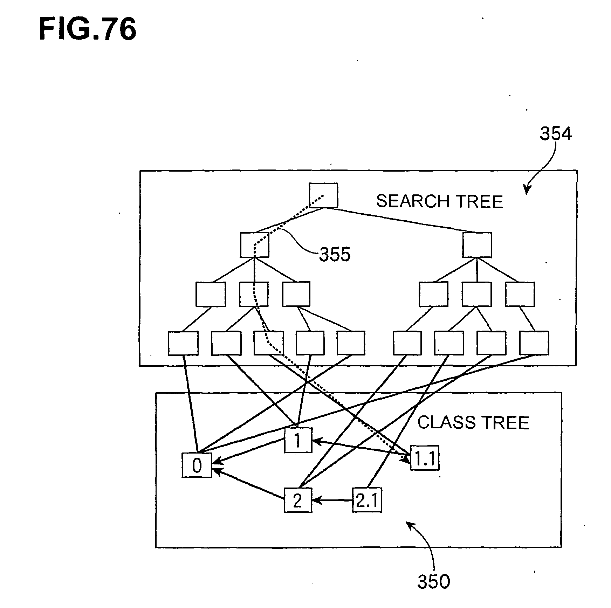

The class tree 350 used when classifying the lowest order class in a search employing the classification device 15, is a tree structure of a table type. Hence, as shown in FIG. 76, it is possible to relate the table of the class tree 350 to a partial table of the search tree 354. Due to this, it is possible to add hardware to execute a process for the class tree 350, into a check device 50 for executing a table check in the classification device 15. For example, for the sake of allocated token consumption of its own class, borrowing the token from the upper order class in a case of lacking the token, and the like, it is possible to add a function to search for the upper/lower order tree, and to manage the class token in hardware.

Although the management is complicated, it is possible to apply the above mentioned state transition (automaton) processor to it. It is possible to realize an architecture where a data structure itself and a process code to the data are integrated with regarding the search for the QoS, tree search for the token management and the like as addressing of a processor.

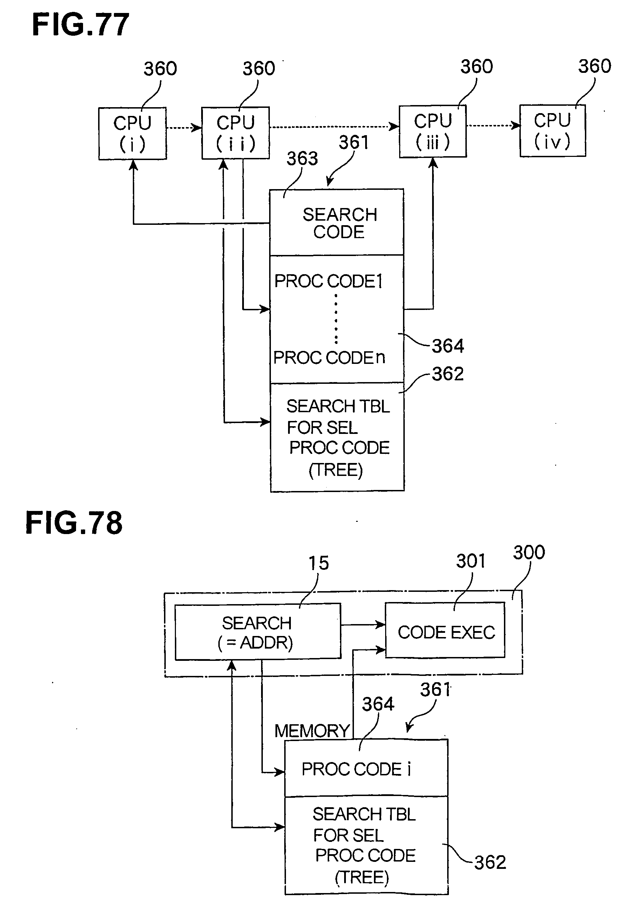

As shown in FIG. 77, in a conventional CPU 360, a search processing of the search table 362 for selecting the process code stored in the memory 361 is executed by the CPU code 363 as software (application). Due to this, the search code (search processing software) 363 for searching for the search table and the process code (software for processing data) 364 are separated each other. Thus, the processing of the CPU 360 is loading the search code 363 (i step), executing with the search code 363 (ii step), context switching (loading of data process code 364) (iii step), and executing the process code 364 (iv step). An address solution of the process code 364 is executed by searching for the checking search key space in software, and the addressing (code space) of the process code 364 and the addressing (search key space) of the search key are not coincident with each other.

In contrast to this, as shown in FIG. 78, in the processor 300 employing the classification device 15, an address of the process code 364 can be solved directly from the search key by obtaining the address of the process code 364 corresponding to the search key in hardware search using the check device 50 for the search table (data structure or data space) 362. It is possible to directly execute the process code 364 obtained by solving the address with using the processing circuit 301. Thus, a context switch is not needed, and the code space and the search key space can be identical to each other.

The reason why the direct address solution by a processor employing the classification devices can not be performed by a conventional CPU is because the CPU is the Turing machine based on a linear addressing, and the state transition machine or automaton should be mounted on the Turing machine in software (virtually). In contrast to this, when using the classification device, it is possible to directly realize the state transition or automaton with coupling the search process to the address solution, so an efficient system can be realized wherein the data space and code space are integrated. Further, with extending this, it is possible to realize a system such as an object oriented processor where data and a processing procedure for the data are integrated.

**Industrial applicability**

The check device and method in accordance with the present invention can cover from a complete match search, a longest match search to a multiple dimension scope match search, and the classification device provided with a plurality of check device can be used in a rule search such as packet filtering, SPD (Security Policy Database) search, stateful packet inspection. Further, it is possible to enhance a check speed with introducing a data cache and a history cache, and it can be applied to processing accompanying a variety of searches. Applied function except the search includes set extraction, set operation, positioning (sort)/making uniqueness, memory addressing, state transition machine, intellectual association machine, automaton (language logic / automaton theory), and data mining in which an available rule or pattern can be found in a large scale database at a high speed. The application scope is not limited thereto.

**Claims**

1. A bit string check method including a process of checking against a plurality of bit patterns registered in advance at multiple stages with dividing a bit string to be searched into a plurality of partial-object bit strings, wherein a current stage being one check stage included in the multiple stages, comprising:

   an all-check step of selecting a partial-object bit string of the current stage from the bit string to be searched and comparing the partial-object bit string of the current stage with all possible values of a partial-object bit string of the current stage;
   a pattern loading step of loading a pattern table of the current stage from a memory before, after or in parallel with the all-check step, the pattern table being for indicating a partial registration bit pattern of each of the plurality of registration bit patterns, the pattern table being determined by check-continuation information received from a stage preceding the current stage;
   a judgment step of obtaining a check result indicating at least a presence or absence of the partial registration bit pattern of the current stage which matches the partial-object bit string of the current stage in accordance with the result of the all-check step and the pattern table of the current stage; and
   an outputting step of outputting check-continuation information including the address of a pattern table of the stage subsequent to the current stage from an address table corresponding to the pattern table of the current stage in accordance with the check result.

2. The check method according to claim 1, wherein the pattern table is mask data consisted of a bit flag indicating a validness or invalidness of the partial registration bit pattern.

3. The check method according to claim 1, wherein the outputting step outputs check-continuation information including the address of a pattern table of the next stage subsequent to the matched partial registration bit patterns of the current stage.

4. The check method according to claim 1,
   wherein the check result of the judgment step further includes a presence or absence of a partial registration bit pattern having the maximum or minimum value closest to the partial-object bit string in the current stage, and
   wherein the check-continuation information of the outputting step further includes an address of a scope search pattern table of the next stage subsequent to the maximum or minimum partial registration bit pattern of the current stage.

5. The check method according to claim 4, further comprising a candidate address storing step of storing the address of the scope search pattern table when the matched partial registration bit pattern of the current stage is present and when the maximum or minimum partial registration bit pattern of the current stage is present,
   wherein the check-continuation information of the outputting step further includes the candidate address when the matched partial registration bit pattern of the current stage is not present and when the maximum or minimum partial registration bit pattern of the current stage is not present.

6. The check method according to claim 4, further comprising a step of bypassing the all-check step and the judgment step when the check-continuation information including the address of the scope search pattern table is given,
   wherein the check-continuation information of the outputting step further includes the address of the pattern table of the next stage'subsequent to the maximum or minimum partial registration bit pattern shown on the pattern table, from the address table corresponding to the scope search pattern table.

7.  The check method according to claim 4,
    wherein the pattern table further includes bypass data indicating the maximum or minimum registration bit pattern determined in correspondence with the maximum or minimum partial registration bit pattern shown on the pattern table,
    wherein the check method further comprises the step of bypassing the all-check step, the pattern loading step, and the judgment step when the check-continuation information including the address of the scope search pattern table is given, and
    wherein the outputting step outputs the final check information including the bypass data corresponding to the scope search pattern table to terminate the check of the bit string to be searched.

8.  The check method according to claim 1, further comprising an updating step of adding or deleting a registration bit pattern by updating the pattern table and the address table.

9.  The check method according to claim 1, wherein the all-check step and the pattern loading step are executed in parallel.

10. The check method according to claim 1, wherein a plurality of the check stages are executed in a pipeline.

11. The check method according to claim 10, further comprising an updating step of adding or deleting a registration bit pattern by updating a check table including the pattern table and the address table of each of the check stages, the updating step being executed in a pipeline in parallel to the check stage.

12. The check method according to claim 11,
    wherein the check table further includes bypass data indicating the maximum or minimum registration bit pattern determined in correspondence with the maximum or minimum partial registration bit pattern shown on the pattern table, and
    wherein the updating step updates the lower order check table of the check stage from the upper order check table of the check stage with the exception that the updating of the check table of the check stage having a possibility of updating the bypass data is executed after awaiting the updating of the lower order check table of the check stage.

13. The check method according to claim 11,
    wherein the check table further includes bypass data indicating the maximum or minimum registration bit pattern determined in correspondence with the maximum or minimum partial registration bit pattern shown on the pattern table, and
    wherein the updating step includes:

    a step of updating the lower order check table of the check stage from the upper order check table of the check stage; and
    a step of updating upper order check table with a bidirectional link when the updating of the bypass data of the upper order check table is generated by updating of the lower order check table.

14. The check method according to claim 1, wherein data including the check-continuation information is packetized and transmitted between the plurality of check stages.

15. A classification method, comprising:

    a classification process including the plurality of check stages of claim 4,

    wherein the registration bit pattern indicates a scope including a plurality of classification results.

16. The check method according to claim 15, further comprising:

    the plurality of classification processes; and
    a logical operation process for performing a logical AND of the plurality of classification results included in a plurality of scopes obtained through the plurality of classification processes to obtain a final classification result.

**17.** The check method according to claim 16, wherein the logical operation process performs a matrix operation of the logical AND of the plurality of classification results to obtain the final classification result.

**18.** A data management method, comprising the steps of:

checking the scope to which the bit string to be searched belongs by the classification method of claim 15, with regarding a bit string to manage a packet including at least one of an IP address, a port number, and a protocol as the bit string to be searched; and
managing the packet including the bit string to be searched on the basis of the classification result of the scope to which the bit string to be searched belongs.

**19.** A data management method, comprising the steps of:

checking the bit string to be searched by the checking method of claim 1; and
managing data including the bit string to be searched on the basis of a checking result of the checking step.

**20.** A control method of a data processing device, comprising:

a step of checking by the checking method of claim 1 with regarding data forming an evaluation source of a state transition as the bit string to be searched, and with regarding data indicating a plurality of state transition conditions as the plurality of registration bit patterns; and
a step of transiting states of a data processing circuit in accordance with a check result of the check step.

**21.** A check device for executing at lease one stage included in multiple stages so as to check against a plurality of bit patterns registered in advance at the multiple stages with dividing a bit string to be searched into a plurality of partial-object bit strings, the check device comprising:

all-check means for selecting a partial-object bit string of the current stage from the bit string to be searched and for comparing the partial-object bit string of the current stage with all possible values of a partial-object bit string of the current stage;
pattern loading means for loading a pattern table of the current stage from a memory, the pattern table being for indicating a partial registration bit pattern of each of the plurality of registration bit patterns, the pattern table being determined by check-continuation information received from a stage preceding the current stage;
judgment means for obtaining a check result indicating at least a presence or absence of the partial registration bit pattern of the current stage which matches the partial-object bit string of the current stage in accordance with the result of the all-check means and the pattern table of the current stage; and
outputting means for outputting check-continuation information including the address of a pattern table of the stage subsequent to the current stage from an address table corresponding to the pattern table of the current stage in accordance with the check result.

**22.** The check device according to claim 21, wherein the pattern table is mask data consisted of a bit flag indicating a validness or invalidness of the partial registration bit pattern.

**23.** The check device according to claim 21, wherein the outputting means outputs check-continuation information including the address of a pattern table of the next stage subsequent to the matched partial registration bit patterns of the current stage.

**24.** The check device according to claim 21,
wherein the check result outputted from the judgment means further includes a presence or absence of a partial registration bit pattern having the maximum or minimum value closest to the partial-object bit string in the current stage, and
wherein the check-continuation information outputted from the outputting means further includes an address of a scope search pattern table of the next stage subsequent to the maximum or minimum partial registration bit pattern of the current stage.

**25.** The check device according to claim 24,
wherein the outputting means further outputs the address of the scope search pattern table as a candidate address when the matched partial registration bit pattern of the current stage is present and when the maximum or minimum partial registration bit pattern of the current stage is present, and

outputs the check-continuation information including the candidate address when the matched partial registration bit pattern of the current stage is not present and when the maximum or minimum partial registration bit pattern of the current stage is not present.

26. The check device according to claim 24,

wherein the outputting means outputs, when the check-continuation information including the address of the scope search pattern table is given, the check-continuation information including the address of the pattern table of the next stage subsequent to the maximum or minimum partial registration bit pattern shown on the pattern table, from the address table corresponding to the scope search pattern table.

27. The check device according to claim 24,

wherein the pattern table further includes bypass data indicating the maximum or minimum registration bit pattern determined in correspondence with the maximum or minimum partial registration bit pattern shown on the pattern table, and

wherein the outputting means outputs, when the check-continuation information including the address of the scope search pattern table is given, the bypass data corresponding to the scope search pattern table as final check information.

28. The check device according to claim 21, further comprising an updating means for adding or deleting a registration bit pattern by updating the pattern table and the address table.

29. The check device according to claim 21, wherein the all-check means and the pattern loading means operates in parallel.

30. A classification device comprising a plurality of the check stages of claim 21.

31. The classification device according to claim 30, wherein the plurality of check stages are coupled in a pipeline.

32. The classification device according to claim 30, wherein data including the check-continuation information is packetized and propagated between the plurality of check devices.

33. The classification device according to claim 30, further comprising a cash device for inputting and outputting data from and to the memory.

34. The classification device according to claim 33, wherein the memory stores a check table including the pattern table and the address table, and the size of a cache line of the cash device is equal to the size of the check table.

35. The classification device according to claim 34, further comprising a unit for receiving information of search types designating the first check table, and wherein the cache device comprises a management unit for allocating the cache line in a unit of each of types to be searched and the check device, and managing the cache line in a unit of each of types to be searched and the check device.

36. The classification device according to claim 34, further comprising means for receiving search type information designating a first check table,

wherein the check table is stored in an individual address range allocated in a unit of each' search type and each check stage, in the memory and

wherein a cache line of the cache device is allocated in a unit of the individual address range.

37. The classification device according to claim 33, wherein, when the check table is not an on-cache, the cache device informs this to the check device, stops the process of the check device and returns to a queue.

38. The classification device according to claim 30, further comprising a history cache device, for storing a classification result of the corresponding classification device, comparing the classification result of the corresponding classification device with the bit string to be searched before providing the bit string to be searched to the check device.

39. A search device comprising a classification device of claim 30, wherein the registration bit pattern indicates a scope including a plurality of classification results, wherein the search device outputs a classification result to which the bit string to be searched belongs.

**40.** The search device according to claim 39, further comprising:

a plurality of the classification devices; and
a logical operation device for operating a logical AND of a plurality of classification results included in the plurality of scopes obtained by the plurality of classification devices to obtain the final classification result.

**41.** The search device according to claim 40, wherein the logical operation device performs a matrix operation of the logical AND of the plurality of classification results to obtain the final classification result.

**42.** The search device according to claim 39, further comprising a cache device for inputting and outputting data from and to a memory.

**43.** The search device according to claim 39, further comprising a history cache device, for storing a search result of the corresponding searching device, comparing the search result of the corresponding search device with the bit string to be searched before providing the bit string to be searched to the classification device.

**44.** A data managing device, comprising:

the search device of claim 40;
means for providing a bit string for managing a packet including at least one of an IP address, a port number, and a protocol as a bit string to be searched, to the search device; and
means for managing the packet including the bit string to be searched on the basis of a classification result outputted from the search device.

**45.** A data managing device, comprising:

the classification device of claim 30; and
means for managing data including the bit string to be searched on the basis of the output of the classification device.

**46.** A data processing device, comprising:

the classification device of claim 30, wherein the plurality of registration bit patterns are regarded as data indicating a plurality of state transition conditions;
searching object provision means for providing data forming an evaluation source of state transition as the bit string to be searched, to the classification device; and
a data processing circuit whose state is transited in accordance with an output of the classification device.

**47.** The data processing device according to claim 46,
wherein the memory stores a check table including the pattern table and the address table, and
wherein the check table provided to the first check device is determined by the output of the classification device or the searching object provision means.

**48.** The data processing device according to claim 47, wherein the memory stores a check table including the pattern table and the address table, and the check table of the memory is rewritten by the data processing circuit.

**49.** A data processing device, comprising:

a check device for checking a bit string to be searched of a current state forming an evaluation source of a state transition against a registration bit pattern indicating a plurality of state transition conditions registered in.advance;
search object provision means for providing the bit string to be searched to the check device; and
a data processing circuit whose state is transited in accordance with an output of the check device,

wherein the data processing device further comprises:

all-check means for comparing all possible values of a bit string to be searched in a current stage;

pattern loading means for loading a pattern table of the current state from a memory, the pattern table being for indicating the plurality of registration bit pattern, the pattern table being determined by check-continuation information obtained from a preceding stage;

judgment means for outputting a check result indicating at least a presence or absence of the registration bit pattern of the current state which matches the bit string to be searched of the current state in accordance with the result of the all-check means and the pattern table of the current state of the all-check means; and

outputting means for outputting check-continuation information including the address of the pattern table of the next state subsequent to the current state in accordance with the check result.

50. The data processing device according to claim 49, wherein the memory stores a check table including the pattern table and the address table, and the check table provided to the check device is determined by the searching object provision means.

51. The data processing device according to claim 49, wherein the memory stores a check table including the pattern table and the address table, and the check table of the memory is rewritten by the data processing circuit.

# FIG.1

# FIG.2

# FIG.3

# FIG.4

(a) CHCK CNDDT  22  CHCK CONT 21

(b) 22 CHCK CNDDT  21 CHCK CONT

(c) APPR CNDDT  22  21 CHCK END

(d) 22 APPR FAIL  CHCK END 21

(e) APPR CNDDT  22  22 CHCK CNDDT  21 CHCK CONT

(f) CHCK CNDDT  22  22 APPR FAIL  CHCK CONT 21

# FIG.5

(a) CHCK CNDDT  22  CHCK CONT 21

(b) 22 CHCK CNDDT  21 CHCK CONT

(c) APPR FAIL  22  21 CHCK END

(d) 22 APPR CNDDT  CHCK END 21

(e) APPR FAIL  22  22 CHCK CNDDT  21 CHCK CONT

(f) CHCK CNDDT  22  22 APPR CNDDT  CHCK CONT 21

# FIG.6

# FIG.7

(a)

(b)

BIT PTRN 1
BIT PTRN 2
BIT PTRN n

(c)

| 0 | 1 | ........ | 0 |

# FIG.8

(a) MAX SEARCH　　　(b) MIN SEARCH

# FIG.9

(a) MAX SEARCH　　　(b) MIN SEARCH

# FIG.10

# FIG.11

( a ) MAX BYPAS

( b ) MIN BYPASS

# FIG.12

APPR ASSUM UPDT

A1
28
CHCK CONT

A2'
28
SHFT TO MAX SRCH
(BCKTRCK)

A2
28
CHCK CONT

A3

26

CHCK
FAIL

DATA

# FIG.13

28

APPR ASSUM UPDT

A1

CHCK CONT

A2'
28
BP  MAX DET WITH BYPS

A2
28
CHCK CONT

A3

BP

26

BP  CHCK
FAIL

DATA

# FIG.14

# FIG.15

EP 1 548 998 A1

# FIG.16

EP 1 548 998 A1

# FIG.17

EP 1 548 998 A1

# FIG.18

# FIG.19

50m

START

101
ADD or DEL — Y → UPDATE 102
N

103
PRE STG APPR — Y
N

ALL-CHECK 104

LOAD MASK DATA 105

JUDGMENT 106

107
MATCH — Y → APPR ADDR AS CNDDT TG 109
N

108
APPROX — Y
N

110
111 | 112 | 113 | 114

BYPASS OUTPUT | CNDDT TG AS CHCK TG | APPRX ADDR AS CHCK TG | MTCHD ADDR AS CHCK TG

**FIG.20**

**FIG.21**

52

KEY(4bit) → CMP0 → OUT0(2bit) →
CMP0 OUTPUT

36

→ CMP1 → OUT1(2bit) →
CMP1 OUTPUT

→ CMP15 → OUT15(2bit) →
CMP15 OUTPUT

**FIG.22**

LOGIC OF COMPARATOR CMPi

| CMPi  INPUT x | OUTPUT |
|---|---|
| $x < i$ | 10 (「<」) |
| $x = i$ | 01 (「=」) |
| $x > i$ | 11 (「>」) |

$i = 0 \sim 15$ (FIXED VALUE)
$x = 0 \sim 15$ (4 bit INPUT VALUE)

**FIG.23**

52

36       SYNC

KEY(4bit) →

$i = 0$ →        CMPx → OUT i (2bit) →
CMPi OUTPUT

$i = i + 1$
(UNTIL $i = 15$)

# FIG.24

# FIG.25

LOGIC OF MASK DEVICE VLD

| CMPi Output | MASK VAL | VLD Output |
|:---:|:---:|:---:|
| 10 | 0 | 00 (「X」) |
| 01 | 0 | 00 (「X」) |
| 11 | 0 | 00 (「X」) |
| 10 | 1 | 10 (「<」) |
| 01 | 1 | 01 (「=」) |
| 11 | 1 | 11 (「>」) |
| AND OPERATION WITH MASK VAL | | |

# FIG.26

SELECTION LOGIC OF COMPLETE MATCH SEARCH

| V L D  Output | Output $G_f$ |
|---|---|
| 00 (「×」) | 0 |
| 10 (「<」) | 0 |
| 01 (「=」) | 1 |
| 11 (「>」) | 0 |

# FIG.27

SELECTION LOGIC OF SCOPE SEARCH
(RIGHT-INCLINED MATCH TYPE)

(a)

| V L D  Output | Intermediate $F_r$ | Output $G_r$ |
|---|---|---|
| 00 (「×」) | 0 | 0 |
| 10 (「<」) | 0 | 0 |
| 01 (「=」) | 0 | 0 |
| 11 (「>」) | 1 | $G_r$ ( i ) |

(b)

| $H_r$( i − 1) | $F_r$( i ) | $H_r$( i ) |
|---|---|---|
| 0 | 0 | 0 |
| 0 | 1 | 1 |
| 1 | 0 | 1 |
| 1 | 1 | 1 |

(c)

| $H_r$( i − 1) | $H_r$( i ) | $G_r$( i ) |
|---|---|---|
| 0 | 0 | 0 |
| 0 | 1 | 1 |
| 1 | 0 | 0 |
| 1 | 1 | 0 |

# FIG.28

SELECTION LOGIC OF SCOPE SEARCH
(LEFT-INCLINED MATCH TYPE)

(a)

| V L D Output | Intermediate $F_l$ | Output $G_l$ |
|---|---|---|
| 00 (「×」) | 0 | 0 |
| 10 (「<」) | 1 | $G_l$ ( i ) |
| 01 (「=」) | 0 | 0 |
| 11 (「>」) | 0 | 0 |

(b)

| $H_l$ ( i + 1 ) | $F_l$ ( i ) | $H_l$ ( i ) |
|---|---|---|
| 0 | 0 | 0 |
| 0 | 1 | 1 |
| 1 | 0 | 1 |
| 1 | 1 | 1 |

(c)

| $H_l$ ( i + 1 ) | $H_l$ ( i ) | $G_l$ ( i ) |
|---|---|---|
| 0 | 0 | 0 |
| 0 | 1 | 1 |
| 1 | 0 | 0 |
| 1 | 1 | 0 |

# FIG.29

ENTRY 0                    ENTRY 15

(a) CMP OUTPUT

| 11 | 11 | ⋯ | 11 | 11 | 01 | 10 | 10 | ⋯ | 10 | 10 |

(b) MASK VALUE ✕

| 0 | 1 | ⋯ | 0 | 1 | 1 | 1 | 0 | ⋯ | 0 | 1 |

(c) VLD OUTPUT ‖                    (c) VLD OUTPUT

| 00 | 11 | ⋯ | 00 | 11 | 01 | 10 | 00 | ⋯ | 00 | 10 |   | 00 | 11 | ⋯ | 00 | 11 | 01 | 10 | 00 | ⋯ | 00 | 10 |

(d) $F_r$ OUTPUT

| 0 | 1 | ⋯ | 0 | 1 | 0 | 0 | 0 | ⋯ | 0 | 0 |

(e) $H_r$ OUTPUT

| 1 | 1 | ⋯ | 1 | 1 | 0 | 0 | 0 | ⋯ | 0 | 0 |

(f) $G_r$ OUTPUT                    (g) $G_f$ OUTPUT

| 0 | 0 | ⋯ | 0 | 1 | 0 | 0 | 0 | ⋯ | 0 | 0 |   | 0 | 0 | ⋯ | 0 | 0 | 1 | 0 | 0 | ⋯ | 0 | 0 |

# FIG.30

ENTRY 0                    ENTRY 15

(a) CMP OUTPUT

| 11 | 11 | ⋯ | 11 | 11 | 01 | 10 | 10 | ⋯ | 10 | 10 |

(b) MASK VALUE ✕

| 1 | 0 | ⋯ | 0 | 1 | 1 | 1 | 0 | ⋯ | 1 | 0 |

(c) VLD OUTPUT ‖                    (c) VLD OUTPUT

| 11 | 00 | ⋯ | 00 | 11 | 01 | 10 | 00 | ⋯ | 10 | 00 |   | 11 | 00 | ⋯ | 00 | 11 | 01 | 10 | 00 | ⋯ | 10 | 00 |

(d) $F_l$ OUTPUT

| 0 | 0 | ⋯ | 0 | 0 | 0 | 1 | 0 | ⋯ | 1 | 0 |

(e) $H_l$ OUTPUT

| 0 | 0 | ⋯ | 0 | 0 | 0 | 1 | 1 | ⋯ | 1 | 1 |

(f) $G_l$                    (g) $G_f$ OUTPUT

| 0 | 0 | ⋯ | 0 | 0 | 0 | 1 | 0 | ⋯ | 0 | 0 |   | 0 | 0 | ⋯ | 0 | 0 | 1 | 0 | 0 | ⋯ | 0 | 0 |

# FIG.31

37

| TYPE | COMMAND | DESCRIPTION |
|---|---|---|
| COMPLETE MATCH SEARCH | FMATCHEXEC | CHECK CONT |
| | FMATCHHIT | HIT |
| | FMATCHFAIL | MISHIT |
| SCOPE SEARCH | MATCHEXEC | CHECK CONT |
| | MATCHRDBP | BYPASS READ |
| | MATCHFHIT | CMPLT MATCH HIT |
| | MATCHNHIT | APPROX HIT |
| | MATCHFAIL | MISHIT |
| REGISTRATION | ADD | HI → LO |
| | ADDNEW | NEW TABLE |
| | ADDFIN | REG CMPLT |
| | ADDFAIL | REG FAILURE |
| | ADDUPDT | BP UPDT FEED |
| | (ADDWCLR) | ( WAIT CLEAR ) |
| DELETION | DEL | LO CONTINUATIN |
| | DELFIN | DEL CMPLT |
| | DELFAIL | DEL FAILURE |
| | DELUPDT | BP UPDT FEED |
| | DELRDBP | LO BP REF |
| | DELWRBP | SELF BP UPDATE |

## FIG.32

## FIG.33

EP 1 548 998 A1

## FIG.34

## FIG.35

## FIG.36

## FIG.37

# FIG.38

# FIG.39

# FIG.40

EP 1 548 998 A1

# FIG.41

QUEUE-IN FROM SEARCH BYPASS

50

QUEUE-IN FROM SEARCH → CHECK QUEUE →

COLLATOR

TBL LOAD → CMD CHECK → BP UPDT (DTAG) → TBL STORE →

ADDUPDT

BP UPDT RSTRT

QUEUING MANAGEMENT

CMD=ADDUPDT ← CMD CHECK ←

PWF=1 ← PWF CHECK ←

WAIE WITH ID

| ID | PWF | TTAG | DTAG |

QUEUING INPUT (PRECEDENCE)

| ID | CMD |

FEEDBACK FROM L

FEEDBACK TO H ←

68

| ID | PWF | TTAG | DTAG |
|----|-----|------|------|
| ID | PWF | TTAG | DTAG |

EP 1 548 998 A1

## FIG.42

## FIG.43

FIG.44

# FIG.45

# FIG.46

EP 1 548 998 A1

# FIG.47

EP 1 548 998 A1

# FIG.48

EP 1 548 998 A1

# FIG.49

EP 1 548 998 A1

# FIG.50

EP 1 548 998 A1

# FIG.51

EP 1 548 998 A1

# FIG.52

CLASSIFICATION DEVICE — 15

500 — CLLTR PIPLINE

32, 33, 50, 33, 50

ID KEY RootTAG — 32, 21, 31

ID KEY RootTAG — 33, 32, 21, 31

CLLTR

ID KEY Next TAG

CLLTR

ID RSLT TG

1-DIM SCP SRCH
(CMPLT MTCH
/LNGST MTCH)

AND — LAST

19 — MLTPL DIM SCP SRCH

DATA CACHE — 17

ID FIN RSLT — 32

φn

SDRAM — 11

# FIG.53

11 — SDRAM

28 — TABLE

17 — DATA CACHE

N-WAY

0

i

17a

m

EP 1 548 998 A1

# FIG.54

# FIG.55

69

EMPTY TBL QUEUE

SEARCH TYPE(LAYER 1)   TBL STAGE POSITION(LAYER 2)

· · · · · · · ·

SDRAM

11

# FIG.56

211

LAYER 1   LAYER 2

SRCH TYP | STG POS

69

TAG

EMPTY TBL QUEUE

50

213

212

SDRAM

11

28

# FIG.57

CLASSIFICATION DEVICE — 15

| ID | KEY | RSLT TG |

33
500

32
21
31
18

CACHE REG

HISTORY CACHE

MISSHIT
HIT

CLLTR PIPLINE
50        50

| ID | KEY | RootTAG |

CLLTR ···· CLLTR

Next TAG

| ID | KEY | RSLT TG |

1-DIM SCP SRCH
(CMPLT MTCH /LNGST MTCH)

AND        LAST

19
MLTPL DIM SCP SRCH

32

| ID | FIN RSLT |

φr

DATA CACHE —17

SDRAM —11

EP 1 548 998 A1

# FIG.58

# FIG.59

EP 1 548 998 A1

CLASSIFICATION DEVICE ~15

| ID | KEY | RSLT TG |

33  ~500

CLLTR PIPLINE

CACHE REG

32

21

31

HISTORY CACHE

MISSHIT

HIT

18

| ID | KEY | RootTAG |

50

CLLTR

| ID | KEY | Next TAG |

50

CLLTR

| ID | RSLT TG |

1-DIM SCP SRCH
(CMPLT MTCH
/LNGST MTCH)

AND

LAST

19

MLTPL DIM SCP SRCH

32

| ID | FIN RSLT |

φr

SRAM

13

DATA CACHE

17

SDRAM

11

# FIG.60

# FIG.61

MATRIX A

$$\begin{bmatrix} a11 & a12 & a13 \\ a21 & a22 & a23 \end{bmatrix} \times$$

MATRIX B

$$\begin{bmatrix} b11 & b12 & b13 \\ b21 & b22 & b23 \\ b31 & b32 & b33 \end{bmatrix}$$

MATRIX Z

A1 × B1
A1 × B2

$$= \begin{bmatrix} a11*b11+a12*b21+a13*b31 & a11*b12+a12*b22+a13*b32 \\ a21*b11+a22*b21+a23*b31 & a21*b12+a22*b22+a23*b32 \end{bmatrix}$$

A2 × B1
A2 × B2

A1 × B3

$$\begin{bmatrix} a11*b13+a12*b23+a13*b33 \\ a21*b13+a22*b23+a23*b33 \end{bmatrix}$$

A2 × B3

# FIG.62

MATRIX Z

$$\begin{bmatrix} 1 & 0 & 0 \\ 0 & 0 & 0 \end{bmatrix} \longrightarrow \begin{array}{l} \text{1 or 0 or 0 =1} \\ \text{0 or 0 or 0 =0} \end{array}$$

# FIG.63

MATRIX Y

MATRIX X

$$\begin{bmatrix} a11 & a12 & a13 \\ a21 & a22 & a23 \end{bmatrix} \times$$

$$\begin{bmatrix} b11 & b12 & \cdots & c1i & \cdots \\ b21 & b22 & \cdots & c2i & \cdots \\ b31 & b32 & \cdots & c3i & \cdots \end{bmatrix}$$

MATRIX Z

$$= \begin{bmatrix} a11*b11+a12*b21+a13*b31 & a11*b12+a12*b22+a13*b32 \\ a21*b11+a22*b21+a23*b31 & a21*b12+a22*b22+a23*b32 \end{bmatrix}$$

OP RESULT OF A AND B1   OP RESULT OF A AND B2

$$\cdots \begin{bmatrix} a11*c1i+a12*c2i+a13*c3i \\ a21*c1i+a22*c2i+a23*c3i \end{bmatrix} \cdots$$

OP RESULT OF A AND Ci

## FIG.64

## FIG.65

## FIG.66

50

LOAD STAGE

CMP STAGE

WAITING QUEUE

VLD STAGE

SEL STAGE

57

REPLY

REQ

53 52

54a

54b

SDRAM I/F ( CACHE ) — 17

SDRAM — 11

## FIG.67

CMP STAGE

XXX STAGE

JOIN QUEUE

VLD STAGE

SEL STAGE

57p

57

52

54a

54b

LOAD STAGE

REQ

53

REPLY

50

SDRAM I/F ( CACHE )

SDRAM

11

17

## FIG.68

(a)

28a

28

| TBL |
| :---: |
| Mask |
| NextTAG0 |
| ⋮ |
| NextTAG15 |

28b

(b)

IMPROVED TBL ( 1 ) — 28a
281

| Mask |
| :---: |
| NextTAG0 |
| ⋮ |
| NextTAG15 |
| NextMask0 |
| ⋮ |
| NextMask15 |

28b

28p

(c)

28a

IMPROVED TBL ( 2 ) — 282

| Mask | |
| :---: | :---: |
| NextTAG0 | NextMask0 |
| ⋮ | ⋮ |
| NextTAG15 | NextMask15 |

28b

28p

## FIG.69

## FIG.70

## FIG.71

# FIG.72

(a)

(b)

**S1 TABLE**

| COND | TRAN |
|------|------|
| a | S2 |
| b | S3 |

321

(c)

324

**S1 TRAN COND TREE**

325

ENTRY a     ENTRY b

# FIG.73

(a)

(b)

324

**S1 TRAN COND TREE**

325

324

**S2 TRAN COND TREE**

325

ENTRY c     ENTRY d

324

**S3 TRAN COND TREE**

325

ENTRY e     ENTRY f

322

**S2 TABLE**

| COND | TRAN |
|------|------|
| c | S1 |
| d | S3 |

323

**S3 TABLE**

| COND | TRAN |
|------|------|
| e | S1 |
| f | S2 |

# FIG.74

# FIG.75

(a)

(b)

# FIG.76

354

SEARCH TREE

355

CLASS TREE

1

0

1.1

2

2.1

350

# FIG.77

360    360    360    360

CPU (ⅰ) --→ CPU (ⅱ) ------→ CPU (ⅲ) ---→ CPU (ⅳ)

363    361

SEARCH CODE

PROC CODE1
⋮
PROC CODEn    364

362

SEARCH TBL
FOR SEL
PROC CODE
(TREE)

# FIG.78

15    301    300

SEARCH ( = ADDR) → CODE EXEC

364    361

MEMORY

PROC CODE ⅰ

SEARCH TBL
FOR SEL
PROC CODE
(TREE)    362

<div align="center">

**INTERNATIONAL SEARCH REPORT**

</div>

| International application No. |
| --- |
| PCT/JP03/12700 |

| A. CLASSIFICATION OF SUBJECT MATTER |
| --- |
| Int.Cl⁷  H04L12/56, G06F17/30 |
| According to International Patent Classification (IPC) or to both national classification and IPC |

| B. FIELDS SEARCHED |
| --- |
| Minimum documentation searched (classification system followed by classification symbols)<br>Int.Cl⁷  H04L12/56, G06F17/30 |

Documentation searched other than minimum documentation to the extent that such documents are included in the fields searched

| | | | |
| --- | --- | --- | --- |
| Jitsuyo Shinan Koho | 1926–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)

| C. DOCUMENTS CONSIDERED TO BE RELEVANT | | |
| --- | --- | --- |
| Category* | Citation of document, with indication, where appropriate, of the relevant passages | Relevant to claim No. |
| X<br><br><br><br>Y<br>A | JP 10-257066 A  (Mitsubishi Electric Corp.),<br>25 September, 1998 (25.09.98),<br>Abstract; Claim 1; Par. Nos. [0020] to [0032];<br>Figs. 1 to 3<br>(Family: none) | 1,3,9,10,14,<br>19-21,23,<br>29-33,39,42,<br>43,45-47,<br>49-51<br>2,22<br>4-8,11-13,<br>15-18,24-28,<br>34-38,40,41,<br>44,48 |
| Y | JP 2002-16638 A  (Mitsubishi Electric Corp.),<br>18 January, 2002 (18.01.02),<br>Figs. 2, 7<br>(Family: none) | 2,22 |

| ☒ Further documents are listed in the continuation of Box C. | ☐ See patent family annex. |
| --- | --- |

| * Special categories of cited documents: | "T" later document published after the international filing date or |
| --- | --- |
| "A" document defining the general state of the art which is not considered to be of particular relevance | priority date and not in conflict with the application but cited to understand the principle or theory underlying the invention |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>20 November, 2003 (20.11.03) | Date of mailing of the international search report<br>09 December, 2003 (09.12.03) |
| --- | --- |
| Name and mailing address of the ISA/<br>Japanese Patent Office | Authorized officer |
| Facsimile No. | Telephone No. |

Form PCT/ISA/210 (second sheet) (July 1998)

## INTERNATIONAL SEARCH REPORT

| International application No. |
| --- |
| PCT/JP03/12700 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | Kazuyuki KASHIMA, Keiichi SODA, Yoshihiro MORIKI, Tatsuki ICHIHASHI, Tetsuya ABE, 'IP Routing Table no Hardware ni yoru Kosoku Kensaku Hoshiki', 1998 Nen The Institute of Electronics, Information and Communication Engineers Tsushin Society Taikai B-7-123, 07 September, 1998 (07.09.98) | 1-51 |
| A | JP 8-212790 A (Kawasaki Steel Corp.), 20 August, 1996 (20.08.96), Claim 1 (Family: none) | 17,41 |

Form PCT/ISA/210 (continuation of second sheet) (July 1998)